# EUROPEAN PATENT APPLICATION

(11) **EP 4 836 462 A1**
(43) Date of publication of application: **04.11.2026**
(21) Application number: 24918132.2
(22) Date of filing: 15.10.2024
(51) Int. Cl.: H04W 8/08

(54) **COMMUNICATION METHOD AND APPARATUS**

(30) Priority: 16.01.2024 CN 202410067424
(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN)
(74) Representative: Gill Jennings & Every LLP
(86) International application number: PCT/CN2024/124979
(87) International publication number: WO 2025/152523

(57) **Abstract**

This application discloses a communication method and apparatus, and relates to the communication field. The method includes: A first network element sends a first request message to a sensing service control function network element, where the first request message indicates a request for obtaining first sensing data. The sensing service control function network element sends a first control message to a second network element, where the first control message indicates to send the first sensing data. The second network element sends the first sensing data. The first network element may be a data requester or a network exposure function network element. In this application, by using a sensing capability of a communication system, the first sensing data may be obtained, and the sensing data obtained by the second network element may be exposed/transmitted to the data requester, thereby providing effective data support for the data requester to implement a subsequent sensing service or function.

## Description

This application claims priority to Chinese Patent Application No. 202410067424.3, filed on January 16, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a communication system, a transmit end may modulate an electromagnetic wave signal, so that the electromagnetic wave carries source information. During propagation, the electromagnetic wave signal is affected by a wireless environment. To be specific, the electromagnetic wave signal is modulated by the environment, and therefore also carries environment information. By analyzing the electromagnetic wave signal, a receive end can not only obtain the carried source information, but also extract sensing information that reflects characteristic of the propagation environment. This makes integrated sensing and communication (integrated sensing and communication, ISAC) possible.

By using a sensing capability of the communication system to provide sensing data for a consumer (or referred to as a user) of the sensing data, effective data support can be provided for the consumer to implement various functions and services based on the sensing data.

### SUMMARY

This application provides a communication method and apparatus, to expose/transmit sensing data in a communication system to a data requester by using a sensing capability of the communication system.

According to a first aspect, this application provides a communication method. The method is applied to a sensing service control function (SSCF) network element, and the method includes: receiving a first request message from a first network element, where the first request message indicates a request for obtaining first sensing data; and sending a first control message to a second network element, where the first control message indicates to send the first sensing data.

For example, the method according to the first aspect may be applied to the SSCF network element. For example, the method is performed by a communication device on which the SSCF network element is deployed or carried, or is performed by an apparatus (for example, a chip or a software module) in the communication device on which the SSCF network element is deployed or carried.

In a possible scenario, the first network element may be a data requester, for example, a third-party entity or a network function (NF) network element inside a network, of sensing data.

In another possible scenario, the first network element may alternatively be another core network element, for example, a network exposure function (NEF) network element, that communicates with a data requester of sensing data. The data requester (for example, a third-party entity) may send a request message to the NEF network element to request to obtain the first sensing data. After receiving the request message from the data requester, the NEF network element may send the first request message to the SSCF network element. An implementation of the first network element is not limited in this application.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In a possible design, the first network element may be the data requester of the sensing data, and the second network element may directly send the first sensing data to the first network element.

In another possible design, the first network element may be the NEF network element, and the second network element may send the first sensing data to the third-party entity via the NEF network element.

In the communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

Optionally, in the foregoing design in which the second network element directly sends the first sensing data to the first network element, and/or in the foregoing design in which the second network element sends the first sensing data to the third-party entity via the NEF network element when the first network element is the NEF network element, the first control message specifically indicates to send the first sensing data to the first network element.

In a possible design, the method further includes: sending a first response message to the first network element, where the first response message indicates a first topic, and the first topic is for subscribing to the first sensing data from a data communication proxy (DCP) network element, where the first topic is a publish topic of the first sensing data in the data communication proxy network element, and the first sensing data is from the second network element.

Optionally, the first response message may be an "Nsscf_SensingService_Response" interface message.

In this design, the second network element may send the first sensing data to the first network element via the DCP network element. The second network element may be the SDPF network element or the RAN network element that serves as the receive sensing entity, and the first network element may be the NEF network element or the data requester (for example, the third-party entity). For example, the second network element may send the first sensing data to the DCP network element based on the first topic. In other words, the first sensing data is published in the DCP network element based on the first topic. The first network element may obtain the first sensing data from the DCP network element based on the first topic. The first topic may be sent by the SSCF network element to the first network element.

In this design, when the sensing data is exposed or transmitted to the data requester (for example, the third-party entity), data transmission efficiency can be improved via the DCP network element. In addition, the DCP network element may support a plurality of transport protocols, to meet requirements in different service scenarios.

Optionally, in the foregoing design in which the second network element sends the first sensing data to the first network element via the DCP network element, the first control message specifically indicates to publish the first sensing data to the data communication proxy network element based on the first topic.

The second network element may determine, based on the indication of the first control message, that the first sensing data needs to be published to the DCP network element based on the first topic.

In a possible design, the method further includes: sending a first response message to the first network element, where the first response message indicates a first data access address, and the first data access address is provided by the second network element, and is for obtaining the first sensing data.

In this design, the first network element may be the NEF network element or the third-party entity. The second network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

In another possible design, the method further includes: sending a first response message to the first network element, where the first response message indicates a first data access address, where the first data access address is provided by a user plane function (UPF) network element, and is for obtaining the first sensing data, and the first sensing data in the user plane function network element is from the second network element.

In this design, the first network element may be the NEF network element or the third-party entity. The UPF network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

Optionally, in the foregoing design in which the first data access address is provided by the second network element, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the user plane function network element, the first control message specifically indicates to send the first sensing data to the user plane function network element.

Optionally, in the foregoing design in which the first data access address is provided by the user plane function network element, the method may further include: sending a second control message to the user plane function network element, where the second control message indicates to use the first data access address as the interface for obtaining the first sensing data. In other words, the second control message may specifically indicate the UPF network element to provide the data access address as the interface for obtaining the first sensing data.

Optionally, in the foregoing design in which the first data access address is provided by the user plane function network element, the method may further include: receiving a second control response message from the user plane function network element, where the second control response message indicates the first data access address.

For example, the first data access address may be sent by the UPF network element to the SSCF network element.

Optionally, in the foregoing design in which the first data access address is provided by the second network element, the method may further include: receiving a first control response message from the second network element, where the first control response message indicates the first data access address.

For example, the first data access address may be sent by the second network element to the SSCF network element.

In a possible design, the first request message further indicates a first data push address provided by the third-party entity, and the first control message further indicates the first data push address, where the first data push address is used by the second network element to send the first sensing data.

In this design, the first network element may be the NEF network element or the third-party entity. The second network element may be the SDPF network element or the RAN network element that serves as the receive sensing entity. The third-party entity may provide the first data push address, and the second network element may send the first sensing data to the first data push address, to send the first sensing data to the third-party entity. The third-party entity may passively receive the first sensing data from the second network element by using the first data push address.

In another possible design, the first request message further indicates a first data push address provided by the third-party entity, and the first control message further indicates the first data push address. The first data push address is used by a user plane function network element to send the first sensing data, and the first sensing data in the user plane function network element is from the second network element.

In this design, the first network element may be the NEF network element or the third-party entity. The second network element may be the SDPF network element or the RAN network element that serves as the receive sensing entity. The third-party entity may provide the first data push address, and the UPF network element may send the first sensing data to the first data push address, to send the first sensing data to the third-party entity. The third-party entity may passively receive, by using the first data push address, the first sensing data sent by the UPF network element, and the first sensing data in the UPF network element is from the second network element.

Optionally, in the foregoing design in which the third-party entity provides the first data push address, and the second network element sends the first sensing data to the first data push address, the first data push address is used by the second network element to send the first sensing data, and the first control message specifically indicates to send the first sensing data to the first data push address.

Optionally, in the foregoing design in which the third-party entity provides the first data push address, and the UPF network element sends the first sensing data to the first data push address, the first data push address is used by the UPF network element to send the first sensing data, and the first control message specifically indicates to send the first sensing data to the UPF network element.

Optionally, in the foregoing design in which the third-party entity provides the first data push address, and the UPF network element sends the first sensing data to the first data push address, the method may further include: sending a second control message to the user plane function network element, where the second control message indicates to send the first sensing data to the first data push address. Alternatively, the second network element may indicate the UPF network element to send the first sensing data to the first data push address.

In a possible design, the method further includes: sending a first response message to the first network element, where the first response message indicates to obtain the first sensing data from an analytics data repository function (ADRF) network element, and the first sensing data in the analytics data repository function network element is from the second network element.

In this design, the first network element may be the NF network element inside the network. The second network element may be the SDPF network element or the RAN network element that serves as the receive sensing entity. The second network element may store the first sensing data to the ADRF network element, and the NF network element obtains the first sensing data from the ADRF network element.

Optionally, in the foregoing design in which the second network element stores the first sensing data to the ADRF network element, and the NF network element obtains the first sensing data from the ADRF network element, the first control message specifically indicates to send the first sensing data to the analytics data repository function network element. The second network element may determine, based on the indication of the first control message, that the first sensing data needs to be sent to the ADFR network element.

Optionally, in the foregoing design in which the second network element sends the first sensing data to the first network element or the DCP network element, in the foregoing design in which the first data access address is provided by the second network element or the UPF network element, or in the foregoing design in which the third-party entity provides the first data push address, and the second network element or the UPF network element sends the first sensing data to the first data push address, the first network element may be the network exposure function network element or the third-party entity.

Optionally, in the foregoing design in which the second network element stores the first sensing data to the ADRF network element, and the NF network element obtains the first sensing data from the ADRF network element, the first network element may be the network function network element.

Optionally, in any one of the foregoing designs, the second network element is the access network element or the sensing data processing function network element.

Optionally, the first request message may include one or more of the following sensing information: a sensing user ID, a sensing service type, a sensing area, a security requirement, a sensing precision requirement, event reporting duration, a reporting interval, a maximum sampling interval, a start time point, an end time point, a priority, or the like. The sensing user ID may indicate identity information of the data requester (for example, the third-party entity), and for example, may be an identifier of the third-party entity.

Optionally, the first request message may be an "Nsscf_SensingService_Request" interface message.

According to a second aspect, this application provides a communication apparatus. The apparatus has a function of implementing the method according to the first aspect. The function may be implemented by hardware, or may be implemented by hardware executing corresponding software. The hardware or software includes one or more units or modules, for example, a receiving unit and a sending unit, corresponding to the function of the method according to the first aspect.

For example, the communication apparatus may be used in a sensing service control function network element. For example, the communication apparatus may be a communication device on which the SSCF network element is deployed or carried, or may be an apparatus (for example, a chip or a software module) in the communication device on which the SSCF network element is deployed or carried.

The receiving unit is configured to receive a first request message from a first network element, where the first request message indicates a request for obtaining first sensing data.

The sending unit is configured to send a first control message to a second network element, where the first control message indicates to send the first sensing data.

In a possible design, the sending unit is specifically configured to send the first sensing data to the first network element, the first network element is a data requester (for example, a third-party entity) or a NEF network element, and the first control message specifically indicates to send the first sensing data to the first network element.

In a possible design, the second network element sends the first sensing data to the first network element via a DCP network element. The sending unit is further configured to send a first response message to the first network element. The first response message indicates a first topic, and the first topic is for subscribing to the first sensing data from the data communication proxy (DCP) network element, where the first topic is a publish topic of the first sensing data in the data communication proxy network element, and the first sensing data is from the second network element.

Optionally, in the foregoing design in which the second network element sends the first sensing data to the first network element via the DCP network element, the first control message specifically indicates to publish the first sensing data to the data communication proxy network element based on the first topic.

In a possible design, the second network element may provide a first data access address as an interface for accessing the first sensing data. The sending unit is further configured to send a first response message to the first network element. The first response message indicates the first data access address, and the first data access address is provided by the second network element, and is for obtaining the first sensing data.

In another possible design, a UPF network element may provide a first data access address as an interface for accessing the first sensing data. The sending unit is further configured to send a first response message to the first network element. The first response message indicates the first data access address, where the first data access address is provided by the user plane function (UPF) network element, and is for obtaining the first sensing data, and the first sensing data in the user plane function network element is from the second network element.

Optionally, in the foregoing design in which the first data access address is provided by the second network element, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the user plane function network element, the first control message specifically indicates to send the first sensing data to the user plane function network element.

Optionally, in the foregoing design in which the first data access address is provided by the user plane function network element, the sending unit is further configured to send a second control message to the user plane function network element. The second control message indicates to use the first data access address as the interface for obtaining the first sensing data. In other words, the second control message may specifically indicate the UPF network element to provide the data access address as the interface for obtaining the first sensing data.

Optionally, in the foregoing design in which the first data access address is provided by the user plane function network element, the receiving unit is further configured to receive a second control response message from the user plane function network element, where the second control response message indicates the first data access address.

Optionally, in the foregoing design in which the first data access address is provided by the second network element, the receiving unit is further configured to receive a first control response message from the second network element, where the first control response message indicates the first data access address.

In a possible design, the first request message further indicates a first data push address provided by the third-party entity, and the first control message further indicates the first data push address, where the first data push address is used by the second network element to send the first sensing data.

In another possible design, the first request message further indicates a first data push address provided by the third-party entity, and the first control message further indicates the first data push address. The first data push address is used by a user plane function network element to send the first sensing data, and the first sensing data in the user plane function network element is from the second network element.

Optionally, in the foregoing design in which the third-party entity provides the first data push address, and the second network element sends the first sensing data to the first data push address, the first data push address is used by the second network element to send the first sensing data, and the first control message specifically indicates to send the first sensing data to the first data push address.

Optionally, in the foregoing design in which the third-party entity provides the first data push address, and the UPF network element sends the first sensing data to the first data push address, the first data push address is used by the UPF network element to send the first sensing data, and the first control message specifically indicates to send the first sensing data to the UPF network element.

Optionally, in the foregoing design in which the third-party entity provides the first data push address, and the UPF network element sends the first sensing data to the first data push address, the sending unit is further configured to send a second control message to the user plane function network element. The second control message indicates to send the first sensing data to the first data push address. Alternatively, the second network element may indicate the UPF network element to send the first sensing data to the first data push address.

In a possible design, the first network element may be an NF network element inside a network. The second network element may store the first sensing data to an ADRF network element, and the NF network element obtains the first sensing data from the ADRF network element.

The sending unit is further configured to send a first response message to the first network element. The first response message indicates to obtain the first sensing data from the analytics data repository function (ADRF) network element, and the first sensing data in the analytics data repository function network element is from the second network element.

Optionally, in the foregoing design in which the second network element stores the first sensing data to the ADRF network element, and the NF network element obtains the first sensing data from the ADRF network element, the first control message specifically indicates to send the first sensing data to the analytics data repository function network element. The second network element may determine, based on the indication of the first control message, that the first sensing data needs to be sent to the ADFR network element.

Optionally, in the foregoing design in which the second network element sends the first sensing data to the first network element or the DCP network element, in the foregoing design in which the first data access address is provided by the second network element or the UPF network element, or in the foregoing design in which the third-party entity provides the first data push address, and the second network element or the UPF network element sends the first sensing data to the first data push address, the first network element may be the network exposure function network element or the third-party entity.

Optionally, in the foregoing design in which the second network element stores the first sensing data to the ADRF network element, and the NF network element obtains the first sensing data from the ADRF network element, the first network element may be the network function network element.

Optionally, in any one of the foregoing designs, the second network element is an access network element or a sensing data processing function network element.

According to a third aspect, this application further provides a communication apparatus, including a processor, configured to execute computer instructions stored in a memory. When the computer instructions are executed, the apparatus is caused to perform the method according to any one of the first aspect or the possible designs of the first aspect.

According to a fourth aspect, this application further provides a communication apparatus, including a processor and an interface circuit. The processor is configured to communicate with another apparatus through the interface circuit, and perform the method according to any one of the first aspect or the possible designs of the first aspect.

For example, in the third aspect and the fourth aspect, the processor is configured to perform the method according to any one of the first aspect or the possible designs of the first aspect.

The communication apparatuses according to the second aspect to the fourth aspect may be communication devices on which the SSCF network element is deployed or carried, or may be apparatuses in the communication devices on which the SSCF network element is deployed or carried.

According to a fifth aspect, this application further provides a computer-readable storage medium, including computer software instructions, or referred to as instructions. When the computer software instructions are run, the method according to any one of the first aspect or the possible designs of the first aspect is implemented. For example, when the computer software instructions are run in a communication device or an apparatus built in the communication device, the communication device is caused to implement the method according to any one of the first aspect or the possible designs of the first aspect.

It may be understood that, for beneficial effects that can be achieved in the second aspect to the fifth aspect, refer to the beneficial effects in any one of the first aspect and the possible designs of the first aspect. Details are not described herein again.

According to a sixth aspect, this application provides a communication method. The method is applied to a second network element, and the method includes: receiving a first control message from a sensing service control function network element, where the first control message indicates to send first sensing data; and sending the first sensing data.

For example, the method according to the sixth aspect may be applied to the second network element. For example, the method is performed by a communication device on which the second network element is deployed or carried, or is performed by an apparatus (for example, a chip or a software module) in the communication device on which the second network element is deployed or carried.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In a possible design, the sending the first sensing data may include: sending the first sensing data to a first network element.

In a possible scenario, the first network element may be a data requester, for example, a third-party entity or a network function (NF) network element inside a network, of sensing data. The second network element may directly send the first sensing data to the first network element.

In another possible scenario, the first network element may alternatively be another core network element, for example, a network exposure function (NEF) network element, that communicates with a data requester of sensing data. The data requester (for example, a third-party entity) may send a request message to the NEF network element to request to obtain the first sensing data. After receiving the request message from the data requester, the NEF network element may send a first request message to the SSCF network element. The second network element may send the first sensing data to the third-party entity via the NEF network element.

Implementations of the first network element and the second network element are not limited in this application.

In the communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

Optionally, in the foregoing design in which the second network element directly sends the first sensing data to the first network element, and/or in the foregoing design in which the second network element sends the first sensing data to the third-party entity via the NEF network element when the first network element is the NEF network element, the first control message specifically indicates to send the first sensing data to the first network element.

In a possible design, the sending the first sensing data includes: sending the first sensing data to a data communication proxy network element based on a first topic.

In this design, the second network element may send the first sensing data to the first network element via the DCP network element. The second network element may be the SDPF network element or the RAN network element that serves as the receive sensing entity, and the first network element may be a NEF network element or a data requester (for example, a third-party entity). For example, the second network element may send the first sensing data to the DCP network element based on the first topic. In other words, the first sensing data is published in the DCP network element based on the first topic. The first network element may obtain the first sensing data from the DCP network element based on the first topic. The first topic may be sent by the SSCF network element to the first network element.

In this design, when the sensing data is exposed or transmitted to the data requester (for example, the third-party entity), data transmission efficiency can be improved via the DCP network element. In addition, the DCP network element may support a plurality of transport protocols, to meet requirements in different service scenarios.

Optionally, in the foregoing design in which the second network element sends the first sensing data to the first network element via the DCP network element, the first control message specifically indicates to publish the first sensing data to the data communication proxy network element based on the first topic.

The second network element may determine, based on the indication of the first control message, that the first sensing data needs to be published to the DCP network element based on the first topic.

In a possible design, the sending the first sensing data includes: using a first data access address as an interface for obtaining the first sensing data, where the first data access address is provided by the second network element.

In this design, the second network element may provide the first data access address as the interface for accessing the first sensing data. The second network element may be the SDPF network element or the RAN network element that serves as the receive sensing entity. A third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

Optionally, in the foregoing design in which the first data access address is provided by the second network element, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the second network element, the method may further include: sending a first control response message to the sensing service control function network element, where the first control response message indicates the first data access address.

For example, the first data access address may be sent by the second network element to the SSCF network element.

In another possible design, the sending the first sensing data includes: sending the first sensing data to a user plane function network element.

In this design, the second network element may send the first sensing data to the UPF network element. The UPF network element may provide a first data access address as an interface for accessing the first sensing data. The second network element may be the SDPF network element or the RAN network element that serves as the receive sensing entity. A third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

Alternatively, in this design, the second network element may send the first sensing data to the UPF network element. The second network element may be the SDPF network element or the RAN network element that serves as the receive sensing entity. A third-party entity may provide a first data push address, and the UPF network element may send the first sensing data to the first data push address, to send the first sensing data to the third-party entity. The third-party entity may passively receive, by using the first data push address, the first sensing data sent by the UPF network element, and the first sensing data in the UPF network element is from the second network element.

Optionally, in the foregoing design in which the first data access address is provided by the user plane function network element, the first control message specifically indicates to send the first sensing data to the user plane function network element.

In a possible design, the sending the first sensing data to the user plane function network element includes: sending the first sensing data to the user plane function network element through a general packet radio service tunneling protocol-user plane (GTP-U) tunnel.

Optionally, in the foregoing design in which the second network element sends the first sensing data to the UPF network element, the third-party entity provides the first data push address, and the UPF network element sends the first sensing data to the first data push address, the first control message further indicates the first data push address provided by the third-party entity. The first data push address is encapsulated in a data packet that is for the first sensing data and that is sent by the second network element to the user plane function network element, and the first data push address is used by the user plane function network element to send the first sensing data.

In a possible design, the first control message further indicates a first data push address provided by a third-party entity. The sending the first sensing data includes: sending the first sensing data to the first data push address.

In this design, the second network element may be the SDPF network element or the RAN network element that serves as the receive sensing entity. The third-party entity may provide the first data push address, and the second network element may send the first sensing data to the first data push address, to send the first sensing data to the third-party entity. The third-party entity may passively receive the first sensing data from the second network element by using the first data push address.

Optionally, in the foregoing design in which the third-party entity provides the first data push address, and the second network element sends the first sensing data to the first data push address, the first data push address is used by the second network element to send the first sensing data, and the first control message specifically indicates to send the first sensing data to the first data push address.

In a possible design, the sending the first sensing data includes: sending the first sensing data to an analytics data repository function network element.

In this design, the second network element may be the SDPF network element or the RAN network element that serves as the receive sensing entity. The second network element may store the first sensing data to the ADRF network element, and an NF network element obtains the first sensing data from the ADRF network element.

Optionally, in the foregoing design in which the second network element stores the first sensing data to the ADRF network element, and the NF network element obtains the first sensing data from the ADRF network element, the first control message specifically indicates to send the first sensing data to the analytics data repository function network element. The second network element may determine, based on the indication of the first control message, that the first sensing data needs to be sent to the ADFR network element.

Optionally, the first network element is the network exposure function network element or the third-party entity.

Optionally, the second network element is the access network element or the sensing data processing function network element.

Optionally, when the second network element is the SDPF network element, the sensing data in the SDPF network element is from a RAN network element that serves as a receive sensing entity. The RAN network element that serves as the receive sensing entity may send the sensing data to the SDPF network element. The sensing data received by the SDPF network element may be raw sensing data obtained by the RAN network element or sensing data processed by the RAN network element.

In a possible design, when sending the sensing data to the SDPF network element, the RAN network element that serves as the receive sensing entity may also send the sensing data to the SDPF network element via the DCP network element in a topic publishing and subscription manner.

According to a seventh aspect, this application provides a communication apparatus. The apparatus has a function of implementing the method according to the sixth aspect. The function may be implemented by hardware, or may be implemented by hardware executing corresponding software. The hardware or software includes one or more units or modules, for example, a receiving unit and a sending unit, corresponding to the function of the method according to the sixth aspect.

For example, the communication apparatus may be used in a second network element. For example, the communication apparatus may be a communication device on which the second network element is deployed or carried, or may be an apparatus (for example, a chip or a software module) in the communication device on which the second network element is deployed or carried.

The receiving unit is configured to receive a first control message from a sensing service control function network element, where the first control message indicates to send first sensing data.

The sending unit is configured to send the first sensing data.

In a possible design, the sending unit is specifically configured to send the first sensing data to a first network element.

Optionally, the first control message specifically indicates to send the first sensing data to the first network element.

In a possible design, the sending unit is specifically configured to send the first sensing data to a data communication proxy network element based on a first topic.

Optionally, the first control message specifically indicates to publish the first sensing data to the data communication proxy network element based on the first topic.

In a possible design, the sending unit is specifically configured to use a first data access address as an interface for obtaining the first sensing data, where the first data access address is provided by the second network element.

Optionally, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the second network element, the sending unit is further configured to send a first control response message to the sensing service control function network element, where the first control response message indicates the first data access address.

In another possible design, the sending unit is specifically configured to send the first sensing data to a user plane function network element.

Optionally, the first control message specifically indicates to send the first sensing data to the user plane function network element.

In a possible design, the sending unit is specifically configured to send the first sensing data to the user plane function network element through a general packet radio service tunneling protocol-user plane (GTP-U) tunnel.

Optionally, the first control message further indicates a first data push address provided by a third-party entity. The first data push address is encapsulated in a data packet that is for the first sensing data and that is sent by the second network element to the user plane function network element, and the first data push address is used by the user plane function network element to send the first sensing data.

In a possible design, the first control message further indicates a first data push address provided by a third-party entity. The sending unit is specifically configured to send the first sensing data to the first data push address.

Optionally, the first data push address is used by the second network element to send the first sensing data, and the first control message specifically indicates to send the first sensing data to the first data push address.

In a possible design, the sending unit is specifically configured to send the first sensing data to an analytics data repository function network element.

Optionally, the first control message specifically indicates to send the first sensing data to the analytics data repository function network element.

Optionally, the first network element is a network exposure function network element or a third-party entity.

Optionally, the second network element is an access network element or a sensing data processing function network element.

According to an eighth aspect, this application further provides a communication apparatus, including a processor, configured to execute computer instructions stored in a memory. When the computer instructions are executed, the apparatus is caused to perform the method according to any one of the sixth aspect or the possible designs of the sixth aspect.

According to a ninth aspect, this application further provides a communication apparatus, including a processor and an interface circuit. The processor is configured to communicate with another apparatus through the interface circuit, and perform the method according to any one of the sixth aspect or the possible designs of the sixth aspect.

For example, in the eighth aspect and the ninth aspect, the processor is configured to perform the method according to any one of the sixth aspect or the possible designs of the sixth aspect.

The communication apparatuses according to the seventh aspect to the ninth aspect may be communication devices on which the second network element is deployed or carried, or may be apparatuses in the communication devices on which the second network element is deployed or carried.

According to a tenth aspect, this application further provides a computer-readable storage medium, including computer software instructions, or referred to as instructions. When the computer software instructions are run, the method according to any one of the sixth aspect or the possible designs of the sixth aspect is implemented. For example, when the computer software instructions are run in a communication device or an apparatus built in the communication device, the communication device is caused to implement the method according to any one of the sixth aspect or the possible designs of the sixth aspect.

It may be understood that, for beneficial effects that can be achieved in the seventh aspect to the tenth aspect, refer to the beneficial effects in any one of the sixth aspect and the possible designs of the sixth aspect. Details are not described herein again.

According to an eleventh aspect, this application provides a communication method. The method is applied to a first network element, and the method includes: sending a first request message to a sensing service control function network element, where the first request message indicates a request for obtaining first sensing data; and receiving the first sensing data from a second network element.

For example, the method according to the eleventh aspect may be applied to the first network element. For example, the method is performed by a communication device on which the first network element is deployed or carried, or is performed by an apparatus (for example, a chip or a software module) in the communication device on which the first network element is deployed or carried.

In a possible scenario, the first network element may be a data requester, for example, a third-party entity or a network function (NF) network element inside a network, of sensing data.

In another possible scenario, the first network element may alternatively be another core network element, for example, a network exposure function (NEF) network element, that communicates with a data requester of sensing data. The data requester (for example, a third-party entity) may send a request message to the NEF network element to request to obtain the first sensing data. After receiving the request message from the data requester, the NEF network element may send the first request message to the SSCF network element. An implementation of the first network element is not limited in this application.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In the communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

In a possible design, the method further includes: receiving a first response message from the sensing service control function network element, where the first response message indicates a first topic; sending a subscription request message to a data communication proxy network element, where the subscription request message indicates the first topic, and is for subscribing to the first sensing data from the data communication proxy network element; and receiving a subscription response message from the data communication proxy network element. The receiving the first sensing data from the second network element includes: receiving the first sensing data sent by the data communication proxy network element, where the first sensing data is from the second network element.

In this design, the second network element may send the first sensing data to the first network element via the DCP network element. The second network element may be the SDPF network element or the RAN network element that serves as the receive sensing entity, and the first network element may be the NEF network element or the data requester (for example, the third-party entity). For example, the second network element may send the first sensing data to the DCP network element based on the first topic. In other words, the first sensing data is published in the DCP network element based on the first topic. The first network element may obtain the first sensing data from the DCP network element based on the first topic. The first topic may be sent by the SSCF network element to the first network element.

In this design, when the sensing data is exposed or transmitted to the data requester (for example, the third-party entity), data transmission efficiency can be improved via the DCP network element. In addition, the DCP network element may support a plurality of transport protocols, to meet requirements in different service scenarios.

Optionally, the first network element is a network exposure function network element or the third-party entity. When the first network element is the network exposure function network element, the method further includes: sending the first sensing data to a third-party entity.

In a possible design, the first network element is a third-party entity, and the method further includes: receiving a first response message from the sensing service control function network element, where the first response message indicates a first data access address, and the first data access address is provided by the second network element or a user plane function network element; and sending a first access request based on the first data access address, where the first access request is for requesting to obtain the first sensing data. The receiving the first sensing data from the second network element includes: receiving a first access response message, where the first access response message includes the first sensing data, and the first sensing data is from the second network element.

In this design, the first network element may be the third-party entity. The second network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending the first access request, to avoid overload caused by an excessively large data volume.

Alternatively, in this design, the first network element may be the third-party entity. The UPF network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending the first access request, to avoid overload caused by an excessively large data volume.

In a possible design, the first network element is a third-party entity, and the first request message further indicates a first data push address provided by the third-party entity, where the first data push address is used by the second network element to send the first sensing data; or the first data push address is used by a user plane function network element to send the first sensing data, and the first sensing data in the user plane function network element is from the second network element. The receiving the first sensing data from the second network element includes: receiving the first sensing data from the first data push address.

In this design, the first network element may be the third-party entity. The second network element may be the SDPF network element or the RAN network element that serves as the receive sensing entity. The third-party entity may provide the first data push address, and the second network element may send the first sensing data to the first data push address, to send the first sensing data to the third-party entity. The third-party entity may passively receive the first sensing data from the second network element by using the first data push address.

Alternatively, in this design, the first network element may be the third-party entity. The second network element may be the SDPF network element or the RAN network element that serves as the receive sensing entity. The third-party entity may provide the first data push address, and the UPF network element may send the first sensing data to the first data push address, to send the first sensing data to the third-party entity. The third-party entity may passively receive, by using the first data push address, the first sensing data sent by the UPF network element, and the first sensing data in the UPF network element is from the second network element.

In a possible design, the first network element is a network function network element, and the method further includes: receiving a first response message from the sensing service control function network element, where the first response message indicates to obtain the first sensing data from an analytics data repository function network element; and sending a sensing data request message to the analytics data repository function network element, where the sensing data request message is for requesting to obtain the first sensing data. The receiving the first sensing data from the second network element includes: receiving a sensing data response message from the analytics data repository function network element, where the sensing data response message includes the first sensing data. The first sensing data in the analytics data repository function network element is from the second network element.

In this design, the first network element may be the NF network element inside the network. The second network element may be the SDPF network element or the RAN network element that serves as the receive sensing entity. The second network element may store the first sensing data to the ADRF network element, and the NF network element obtains the first sensing data from the ADRF network element.

Optionally, the second network element is an access network element or a sensing data processing function network element.

According to a twelfth aspect, this application provides a communication apparatus. The apparatus has a function of implementing the method according to the eleventh aspect. The function may be implemented by hardware, or may be implemented by hardware executing corresponding software. The hardware or software includes one or more units or modules, for example, a sending unit and a receiving unit, corresponding to the function of the method according to the eleventh aspect.

For example, the communication apparatus may be used in a first network element. For example, the communication apparatus may be a communication device on which the first network element is deployed or carried, or may be an apparatus (for example, a chip or a software module) in the communication device on which the first network element is deployed or carried.

The sending unit is configured to send a first request message to a sensing service control function network element, where the first request message indicates a request for obtaining first sensing data.

The receiving unit is configured to receive the first sensing data from a second network element.

In a possible design, the receiving unit is further configured to receive a first response message from the sensing service control function network element, where the first response message indicates a first topic. The sending unit is further configured to send a subscription request message to a data communication proxy network element, where the subscription request message indicates the first topic, and is for subscribing to the first sensing data from the data communication proxy network element. The receiving unit is further configured to receive a subscription response message from the data communication proxy network element. The receiving unit is specifically configured to receive the first sensing data sent by the data communication proxy network element, where the first sensing data is from the second network element.

Optionally, the first network element is a network exposure function network element or a third-party entity. When the first network element is the network exposure function network element, the sending unit is further configured to send the first sensing data to a third-party entity.

In a possible design, the first network element is a third-party entity, and the receiving unit is further configured to receive a first response message from the sensing service control function network element, where the first response message indicates a first data access address, and the first data access address is provided by the second network element or a user plane function network element. The sending unit is further configured to send a first access request based on the first data access address, where the first access request is for requesting to obtain the first sensing data.

The receiving unit is specifically configured to receive a first access response message, where the first access response message includes the first sensing data, and the first sensing data is from the second network element.

In a possible design, the first network element is a third-party entity, and the first request message further indicates a first data push address provided by the third-party entity, where the first data push address is used by the second network element to send the first sensing data; or the first data push address is used by a user plane function network element to send the first sensing data, and the first sensing data in the user plane function network element is from the second network element.

The receiving unit is specifically configured to receive the first sensing data from the first data push address.

In a possible design, the first network element is a network function network element, and the receiving unit is further configured to receive a first response message from the sensing service control function network element, where the first response message indicates to obtain the first sensing data from an analytics data repository function network element. The sending unit is further configured to send a sensing data request message to the analytics data repository function network element, where the sensing data request message is for requesting to obtain the first sensing data.

The receiving unit is specifically configured to receive a sensing data response message from the analytics data repository function network element, where the sensing data response message includes the first sensing data. The first sensing data in the analytics data repository function network element is from the second network element.

Optionally, the second network element is an access network element or a sensing data processing function network element.

According to a thirteenth aspect, this application further provides a communication apparatus, including a processor, configured to execute computer instructions stored in a memory. When the computer instructions are executed, the apparatus is caused to perform the method according to any one of the eleventh aspect or the possible designs of the eleventh aspect.

According to a fourteenth aspect, this application further provides a communication apparatus, including a processor and an interface circuit. The processor is configured to communicate with another apparatus through the interface circuit, and perform the method according to any one of the eleventh aspect or the possible designs of the eleventh aspect.

For example, in the thirteenth aspect and the fourteenth aspect, the processor is configured to perform the method according to any one of the eleventh aspect or the possible designs of the eleventh aspect.

The communication apparatuses according to the twelfth aspect to the fourteenth aspect may be communication devices on which a first network element is deployed or carried, or may be apparatuses in the communication devices on which the first network element is deployed or carried.

According to a fifteenth aspect, this application further provides a computer-readable storage medium, including computer software instructions, or referred to as instructions. When the computer software instructions are run, the method according to any one of the eleventh aspect or the possible designs of the eleventh aspect is implemented. For example, when the computer software instructions are run in a communication device or an apparatus (for example, a chip) built in the communication device, the communication device is caused to implement the method according to any one of the eleventh aspect or the possible designs of the eleventh aspect.

It may be understood that, for beneficial effects that can be achieved in the twelfth aspect to the fifteenth aspect, refer to the beneficial effects in any one of the eleventh aspect and the possible designs of the eleventh aspect. Details are not described herein again.

According to a sixteenth aspect, this application provides a communication method. The method is applied to a network exposure function network element, and the method includes: sending a first request message to a sensing service control function network element, where the first request message indicates a request for obtaining first sensing data; receiving a first response message from the sensing service control function network element, where the first response message indicates a first data access address, and the first data access address is provided by a second network element or a user plane function network element, and is for obtaining the first sensing data; and sending the first data access address to a third-party entity.

For example, the method according to the sixteenth aspect may be applied to the NEF network element. For example, the method is performed by a communication device on which the NEF network element is deployed or carried, or is performed by an apparatus (for example, a chip or a software module) in the communication device on which the NEF network element is deployed or carried.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In the communication method, a first network element may be the NEF network element. The second network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

Alternatively, in the communication method, a first network element may be the NEF network element. The UPF network element may provide the first data access address as an interface for accessing the first sensing data. The second network element may be the SDPF network element or the RAN network element that serves as the receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

In the communication method, by using a sensing capability of a communication system, the first sensing data may be obtained, and the sensing data obtained by the second network element (the receive sensing entity or the SDPF network element) may be exposed/transmitted to a data requester, for example, the third-party entity or an NF network element, to provide effective data support for the data requester to implement a subsequent sensing service or function.

Optionally, the second network element is an access network element or a sensing data processing function network element.

According to a seventeenth aspect, this application provides a communication apparatus. The apparatus has a function of implementing the method according to the sixteenth aspect. The function may be implemented by hardware, or may be implemented by hardware executing corresponding software. The hardware or software includes one or more units or modules, for example, a sending unit and a receiving unit, corresponding to the function of the method according to the sixteenth aspect.

For example, the communication apparatus may be used in a NEF network element. For example, the communication apparatus may be a communication device on which the NEF network element is deployed or carried, or may be an apparatus (for example, a chip or a software module) in the communication device on which the NEF network element is deployed or carried.

The sending unit is configured to send a first request message to a sensing service control function network element, where the first request message indicates a request for obtaining first sensing data.

The receiving unit is configured to receive a first response message from the sensing service control function network element, where the first response message indicates a first data access address, and the first data access address is provided by a second network element or a user plane function network element, and is for obtaining the first sensing data.

The sending unit is further configured to send the first data access address to a third-party entity.

Optionally, the second network element is an access network element or a sensing data processing function network element.

According to an eighteenth aspect, this application further provides a communication apparatus, including a processor, configured to execute computer instructions stored in a memory. When the computer instructions are executed, the apparatus is caused to perform the method according to any one of the sixteenth aspect or the possible designs of the sixteenth aspect.

According to a nineteenth aspect, this application further provides a communication apparatus, including a processor and an interface circuit. The processor is configured to communicate with another apparatus through the interface circuit, and perform the method according to any one of the sixteenth aspect or the possible designs of the sixteenth aspect.

For example, in the eighteenth aspect and the nineteenth aspect, the processor is configured to perform the method according to any one of the sixteenth aspect or the possible designs of the sixteenth aspect.

The communication apparatuses according to the seventeenth aspect to the nineteenth aspect may be communication devices on which a NEF network element is deployed or carried, or may be apparatuses (for example, chips or software modules) in the communication devices on which the NEF network element is deployed or carried.

According to a twentieth aspect, this application further provides a computer-readable storage medium, including computer software instructions, or referred to as instructions. When the computer software instructions are run, the method according to any one of the sixteenth aspect or the possible designs of the sixteenth aspect is implemented. For example, when the computer software instructions are run in a communication device or an apparatus (for example, a chip) built in the communication device, the communication device is caused to implement the method according to any one of the sixteenth aspect or the possible designs of the sixteenth aspect.

It may be understood that, for beneficial effects that can be achieved in the seventeenth aspect to the twentieth aspect, refer to the beneficial effects in any one of the sixteenth aspect and the possible designs of the sixteenth aspect. Details are not described herein again.

According to a twenty-first aspect, this application provides a communication method. The method is applied to a network exposure function network element, and the method includes: sending a first request message to a sensing service control function network element, where the first request message indicates a request for obtaining first sensing data, and indicates a first data push address provided by a third-party entity. The first data push address is used by a second network element to send the first sensing data; or the first data push address is used by a user plane function network element to send the first sensing data, and the first sensing data in the user plane function network element is from a second network element.

Optionally, the method further includes: receiving a first response message from the sensing service control function. The first response message is for acknowledging that the first data push address is received.

For example, the method according to the twenty-first aspect may be applied to the NEF network element. For example, the method is performed by a communication device on which the NEF network element is deployed or carried, or is performed by an apparatus (for example, a chip or a software module) in the communication device on which the NEF network element is deployed or carried.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In the communication method, a first network element may be the NEF network element. The third-party entity may provide the first data push address, and the second network element may send the first sensing data to the first data push address, to send the first sensing data to the third-party entity. The third-party entity may passively receive the first sensing data from the second network element by using the first data push address.

Alternatively, in the communication method, a first network element may be the NEF network element. The third-party entity may provide the first data push address, and the UPF network element may send the first sensing data to the first data push address, to send the first sensing data to the third-party entity. The third-party entity may passively receive, by using the first data push address, the first sensing data sent by the UPF network element, and the first sensing data in the UPF network element is from the second network element.

In the communication method, by using a sensing capability of a communication system, the first sensing data may be obtained, and the sensing data obtained by the second network element (the receive sensing entity or the SDPF network element) may be exposed/transmitted to a data requester, for example, the third-party entity or an NF network element, to provide effective data support for the data requester to implement a subsequent sensing service or function.

Optionally, the second network element is an access network element or a sensing data processing function network element.

According to a twenty-second aspect, this application provides a communication apparatus. The apparatus has a function of implementing the method according to the twenty-first aspect. The function may be implemented by hardware, or may be implemented by hardware executing corresponding software. The hardware or software includes one or more units or modules, for example, a sending unit and a receiving unit, corresponding to the function of the method according to the twenty-first aspect.

For example, the communication apparatus may be used in a NEF network element. For example, the communication apparatus may be a communication device on which the NEF network element is deployed or carried, or may be an apparatus (for example, a chip or a software module) in the communication device on which the NEF network element is deployed or carried.

The sending unit is configured to send a first request message to a sensing service control function network element, where the first request message indicates a request for obtaining first sensing data, and indicates a first data push address provided by a third-party entity. The first data push address is used by a second network element to send the first sensing data; or the first data push address is used by a user plane function network element to send the first sensing data, and the first sensing data in the user plane function network element is from a second network element.

The receiving unit is configured to receive a first response message from the sensing service control function. The first response message is for acknowledging that the first data push address is received. The receiving unit may be used as an optional module.

Optionally, the second network element is an access network element or a sensing data processing function network element.

According to a twenty-third aspect, this application further provides a communication apparatus, including a processor, configured to execute computer instructions stored in a memory. When the computer instructions are executed, the apparatus is caused to perform the method according to any one of the twenty-first aspect or the possible designs of the twenty-first aspect.

According to a twenty-fourth aspect, this application further provides a communication apparatus, including a processor and an interface circuit. The processor is configured to communicate with another apparatus through the interface circuit, and perform the method according to any one of the twenty-first aspect or the possible designs of the twenty-first aspect.

For example, in the twenty-third aspect and the twenty-fourth aspect, the processor is configured to perform the method according to any one of the twenty-first aspect or the possible designs of the twenty-first aspect.

The communication apparatuses according to the twenty-second aspect to the twenty-fourth aspect may be communication devices on which a NEF network element is deployed or carried, or may be apparatuses (for example, chips or software modules) in the communication devices on which the NEF network element is deployed or carried.

According to a twenty-fifth aspect, this application further provides a computer-readable storage medium, including computer software instructions, or referred to as instructions. When the computer software instructions are run, the method according to any one of the twenty-first aspect or the possible designs of the twenty-first aspect is implemented. For example, when the computer software instructions are run in a communication device or an apparatus built in the communication device, the communication device is caused to implement the method according to any one of the twenty-first aspect or the possible designs of the twenty-first aspect.

It may be understood that, for beneficial effects that can be achieved in the twenty-second aspect to the twenty-fifth aspect, refer to the beneficial effects in any one of the twenty-first aspect and the possible designs of the twenty-first aspect. Details are not described herein again.

According to a twenty-sixth aspect, this application provides a communication method. The method is applied to a user plane function network element, and the method includes: receiving first sensing data from a second network element; and using a first data access address as an interface for obtaining the first sensing data, where the first data access address is provided by the user plane function network element; or sending the first sensing data to a first data push address provided by a third-party entity.

For example, the method according to the twenty-first aspect may be applied to the UPF network element. For example, the method is performed by a communication device on which the UPF network element is deployed or carried, or is performed by an apparatus (for example, a chip or a software module) in the communication device on which the UPF network element is deployed or carried.

In the communication method, the UPF network element may provide the first data access address as the interface for accessing the first sensing data. The second network element may be an SDPF network element or a RAN network element that serves as a receive sensing entity. The third-party entity may obtain the first data access address. The third-party entity may actively obtain the first sensing data by accessing the first data access address. For example, the third-party entity may flexibly select, based on a requirement, an occasion for actively obtaining the first sensing data. For example, the third-party entity may select, based on a traffic condition of the third-party entity, an appropriate occasion for sending a first access request, to avoid overload caused by an excessively large data volume.

Alternatively, in the communication method, the third-party entity may provide the first data push address, and the UPF network element may send the first sensing data to the first data push address, to send the first sensing data to the third-party entity. The third-party entity may passively receive, by using the first data push address, the first sensing data sent by the UPF network element, and the first sensing data in the UPF network element is from the second network element.

In the communication method, by using a sensing capability of a communication system, the first sensing data may be obtained, and the sensing data obtained by the second network element (the receive sensing entity or the SDPF network element) may be exposed/transmitted to a data requester, for example, the third-party entity or an NF network element, to provide effective data support for the data requester to implement a subsequent sensing service or function.

In a possible design, the receiving the first sensing data from the second network element includes: receiving the first sensing data from the second network element through a general packet radio service tunneling protocol-user plane tunnel.

In a possible design, the first data push address is encapsulated in a received data packet for the first sensing data.

In a possible design, the method further includes: receiving a second control message from a sensing service control function network element, where the second control message indicates to use the first data access address as the interface for obtaining the first sensing data.

In a possible design, the method further includes: sending a second control response message to the sensing service control function network element, where the second control response message indicates the first data access address.

In a possible design, the method further includes: receiving a second control message from a sensing service control function network element, where the second control message indicates to send the first sensing data to the first data push address provided by the third-party entity.

Optionally, the second network element is an access network element or a sensing data processing function network element.

According to a twenty-seventh aspect, this application provides a communication apparatus. The apparatus has a function of implementing the method according to the twenty-sixth aspect. The function may be implemented by hardware, or may be implemented by hardware executing corresponding software. The hardware or software includes one or more units or modules, for example, a receiving unit and a sending unit, corresponding to the function of the method according to the twenty-sixth aspect.

For example, the communication apparatus may be used in a UPF network element. For example, the communication apparatus may be a communication device on which the UPF network element is deployed or carried, or may be an apparatus (for example, a chip or a software module) in the communication device on which the UPF network element is deployed or carried.

The receiving unit is configured to receive first sensing data from a second network element.

The sending unit is configured to: use a first data access address as an interface for obtaining the first sensing data, where the first data access address is provided by the user plane function network element; or send the first sensing data to a first data push address provided by a third-party entity.

In a possible design, the receiving unit is specifically configured to receive the first sensing data from the second network element through a general packet radio service tunneling protocol-user plane tunnel.

In a possible design, the first data push address is encapsulated in a received data packet for the first sensing data.

In a possible design, the receiving unit is further configured to receive a second control message from a sensing service control function network element, where the second control message indicates to use the first data access address as the interface for obtaining the first sensing data.

In a possible design, the sending unit is further configured to send a second control response message to the sensing service control function network element, where the second control response message indicates the first data access address.

In a possible design, the receiving unit is further configured to receive a second control message from a sensing service control function network element, where the second control message indicates to send the first sensing data to the first data push address provided by the third-party entity.

Optionally, the second network element is an access network element or a sensing data processing function network element.

According to a twenty-eighth aspect, this application further provides a communication apparatus, including a processor, configured to execute computer instructions stored in a memory. When the computer instructions are executed, the apparatus is caused to perform the method according to any one of the twenty-sixth aspect or the possible designs of the twenty-sixth aspect.

According to a twenty-ninth aspect, this application further provides a communication apparatus, including a processor and an interface circuit. The processor is configured to communicate with another apparatus through the interface circuit, and perform the method according to any one of the twenty-sixth aspect or the possible designs of the twenty-sixth aspect.

For example, in the twenty-eighth aspect and the twenty-ninth aspect, the processor is configured to perform the method according to any one of the twenty-sixth aspect or the possible designs of the twenty-sixth aspect.

The communication apparatuses according to the twenty-seventh aspect to the twenty-ninth aspect may be communication devices on which a UPF network element is deployed or carried, or may be apparatuses (for example, chips or software modules) in the communication devices on which the UPF network element is deployed or carried.

According to a thirtieth aspect, this application further provides a computer-readable storage medium, including computer software instructions, or referred to as instructions. When the computer software instructions are run, the method according to any one of the twenty-sixth aspect or the possible designs of the twenty-sixth aspect is implemented. For example, when the computer software instructions are run in a communication device or an apparatus built in the communication device, the communication device is caused to implement the method according to any one of the twenty-sixth aspect or the possible designs of the twenty-sixth aspect.

It may be understood that, for beneficial effects that can be achieved in the twenty-seventh aspect to the thirtieth aspect, refer to the beneficial effects in any one of the twenty-sixth aspect and the possible designs of the twenty-sixth aspect. Details are not described herein again.

According to a thirty-first aspect, this application provides a communication method. The method is applied to a data communication proxy network element, and the method includes: receiving a subscription request message from a first network element, where the subscription request message indicates a first topic, and is for subscribing to first sensing data from the data communication proxy network element; sending a subscription response message to the first network element; receiving the first sensing data from a second network element, where the first sensing data is published based on the first topic; and sending the first sensing data to the first network element.

For example, the method according to the thirty-first aspect may be applied to the DCP network element. For example, the method is performed by a communication device on which the DCP network element is deployed or carried, or is performed by an apparatus (for example, a chip or a software module) in the communication device on which the DCP network element is deployed or carried.

In a possible scenario, the first network element may be a data requester, for example, a third-party entity or a network function (NF) network element inside a network, of sensing data.

In another possible scenario, the first network element may alternatively be another core network element, for example, a network exposure function (NEF) network element, that communicates with a data requester of sensing data. The data requester (for example, a third-party entity) may send a request message to the NEF network element to request to obtain the first sensing data. After receiving the request message from the data requester, the NEF network element may send a first request message to an SSCF network element. An implementation of the first network element is not limited in this application.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

In the communication method, the second network element may send the first sensing data to the first network element via the DCP network element. The second network element may be the SDPF network element or the RAN network element that serves as the receive sensing entity, and the first network element may be the NEF network element or the data requester (for example, the third-party entity). For example, the second network element may send the first sensing data to the DCP network element based on the first topic. In other words, the first sensing data is published in the DCP network element based on the first topic. The first network element may obtain the first sensing data from the DCP network element based on the first topic. The first topic may be sent by the SSCF network element to the first network element.

In the communication method, when the sensing data is exposed or transmitted to the data requester (for example, the third-party entity), data transmission efficiency can be improved via the DCP network element. In addition, the DCP network element may support a plurality of transport protocols, to meet requirements in different service scenarios.

In the communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

Optionally, the second network element is an access network element or a sensing data processing function network element.

According to a thirty-second aspect, this application provides a communication apparatus. The apparatus has a function of implementing the method according to the thirty-first aspect. The function may be implemented by hardware, or may be implemented by hardware executing corresponding software. The hardware or software includes one or more units or modules, for example, a receiving unit and a sending unit, corresponding to the function of the method according to the thirty-first aspect.

For example, the communication apparatus may be used in a DCP network element. For example, the communication apparatus may be a communication device on which the DCP network element is deployed or carried, or may be an apparatus (for example, a chip or a software module) in the communication device on which the DCP network element is deployed or carried.

The receiving unit is configured to receive a subscription request message from a first network element, where the subscription request message indicates a first topic, and is for subscribing to first sensing data from the data communication proxy network element. The sending unit is configured to send a subscription response message to the first network element.

The receiving unit is further configured to receive the first sensing data from a second network element, where the first sensing data is published based on the first topic.

The sending unit is configured to send the first sensing data to the first network element.

Optionally, the second network element is an access network element or a sensing data processing function network element.

According to a thirty-third aspect, this application further provides a communication apparatus, including a processor, configured to execute computer instructions stored in a memory. When the computer instructions are executed, the apparatus is caused to perform the method according to any one of the thirty-first aspect or the possible designs of the thirty-first aspect.

According to a thirty-fourth aspect, this application further provides a communication apparatus, including a processor and an interface circuit. The processor is configured to communicate with another apparatus through the interface circuit, and perform the method according to any one of the thirty-first aspect or the possible designs of the thirty-first aspect.

For example, in the thirty-third aspect and the thirty-fourth aspect, the processor is configured to perform the method according to any one of the thirty-first aspect or the possible designs of the thirty-first aspect.

The communication apparatuses according to the thirty-second aspect to the thirty-fourth aspect may be communication devices on which a DCP network element is deployed or carried, or may be apparatuses (for example, chips or software modules) in the communication devices on which the DCP network element is deployed or carried.

According to a thirty-fifth aspect, this application further provides a computer-readable storage medium, including computer software instructions, or referred to as instructions. When the computer software instructions are run, the method according to any one of the thirty-first aspect or the possible designs of the thirty-first aspect is implemented. For example, when the computer software instructions are run in a communication device or an apparatus built in the communication device, the communication device is caused to implement the method according to any one of the thirty-first aspect or the possible designs of the thirty-first aspect.

It may be understood that, for beneficial effects that can be achieved in the thirty-second aspect to the thirty-fifth aspect, refer to the beneficial effects in any one of the thirty-first aspect and the possible designs of the thirty-first aspect. Details are not described herein again.

According to a thirty-sixth aspect, this application provides a communication method. The method is applied to an analytics data repository function network element, and the method includes: receiving first sensing data from a second network element; receiving a sensing data request message from a first network element, where the sensing data request message is for requesting to obtain the first sensing data; and sending a sensing data response message to the first network element, where the sensing data response message includes the first sensing data.

For example, the method according to the thirty-sixth aspect may be applied to the ADRF network element. For example, the method is performed by a communication device on which the ADRF network element is deployed or carried, or is performed by an apparatus (for example, a chip or a software module) in the communication device on which the ADRF network element is deployed or carried.

In a possible scenario, the first network element may be a data requester, for example, a third-party entity or a network function (NF) network element inside a network, of sensing data.

In another possible scenario, the first network element may alternatively be another core network element, for example, a network exposure function (NEF) network element, that communicates with a data requester of sensing data. The data requester (for example, a third-party entity) may send a request message to the NEF network element to request to obtain the first sensing data. After receiving the request message from the data requester, the NEF network element may send a first request message to an SSCF network element. An implementation of the first network element is not limited in this application.

In a possible scenario, the second network element may be a sensing data processing function (SDPF) network element, and the first sensing data may be sensing data processed by the SDPF network element.

In another possible scenario, the second network element may be an access network (RAN) network element that serves as a receive sensing entity, and the first sensing data may be raw sensing data obtained by the RAN network element or sensing data processed by the RAN network element.

For example, in the communication method, the first network element may be the NF network element inside the network. The second network element may store the first sensing data to the ADRF network element, and the NF network element obtains the first sensing data from the ADRF network element.

In the communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

Optionally, the second network element is an access network element or a sensing data processing function network element.

According to a thirty-seventh aspect, this application provides a communication apparatus. The apparatus has a function of implementing the method according to the thirty-sixth aspect. The function may be implemented by hardware, or may be implemented by hardware executing corresponding software. The hardware or software includes one or more units or modules, for example, a receiving unit and a sending unit, corresponding to the function of the method according to the thirty-sixth aspect.

For example, the communication apparatus may be used in an ADRF network element. For example, the communication apparatus may be a communication device on which the ADRF network element is deployed or carried, or may be an apparatus (for example, a chip or a software module) in the communication device on which the ADRF network element is deployed or carried.

The receiving unit is configured to receive first sensing data from a second network element.

The receiving unit is further configured to receive a sensing data request message from a first network element, where the sensing data request message is for requesting to obtain the first sensing data.

The sending unit is configured to send a sensing data response message to the first network element, where the sensing data response message includes the first sensing data.

Optionally, the second network element is an access network element or a sensing data processing function network element.

According to a thirty-eighth aspect, this application further provides a communication apparatus, including a processor, configured to execute computer instructions stored in a memory. When the computer instructions are executed, the apparatus is caused to perform the method according to any one of the thirty-sixth aspect or the possible designs of the thirty-sixth aspect.

According to a thirty-ninth aspect, this application further provides a communication apparatus, including a processor and an interface circuit. The processor is configured to communicate with another apparatus through the interface circuit, and perform the method according to any one of the thirty-sixth aspect or the possible designs of the thirty-sixth aspect.

For example, in the eighth aspect and the ninth aspect, the processor is configured to perform the method according to any one of the thirty-sixth aspect or the possible designs of the thirty-sixth aspect.

The communication apparatuses according to the thirty-seventh aspect to the thirty-ninth aspect may be communication devices on which an ADRF network element is deployed or carried, or may be apparatuses (for example, chips or software modules) in the communication devices on which the ADRF network element is deployed or carried.

According to a fortieth aspect, this application further provides a computer-readable storage medium, including computer software instructions, or referred to as instructions. When the computer software instructions are run, the method according to any one of the thirty-sixth aspect or the possible designs of the thirty-sixth aspect is implemented. For example, when the computer software instructions are run in a communication device or an apparatus built in the communication device, the communication device is caused to implement the method according to any one of the thirty-sixth aspect or the possible designs of the thirty-sixth aspect.

It may be understood that, for beneficial effects that can be achieved in the thirty-seventh aspect to the fortieth aspect, refer to the beneficial effects in any one of the thirty-sixth aspect and the possible designs of the thirty-sixth aspect. Details are not described herein again.

According to a forty-first aspect, this application provides a communication apparatus, including a transceiver unit and a processing unit. The transceiver unit may be configured to send and receive information, or configured to communicate with another network element. The processing unit may be configured to process data. The apparatus may implement the method according to any one of the first aspect and the possible designs of the first aspect, the method according to any one of the sixth aspect and the possible designs of the sixth aspect, the method according to any one of the eleventh aspect and the possible designs of the eleventh aspect, the method according to any one of the sixteenth aspect and the possible designs of the sixteenth aspect, the method according to any one of the twenty-first aspect and the possible designs of the twenty-first aspect, the method according to any one of the twenty-sixth aspect and the possible designs of the twenty-sixth aspect, the method according to any one of the thirty-first aspect and the possible designs of the thirty-first aspect, or the method according to any one of the thirty-sixth aspect and the possible designs of the thirty-sixth aspect by using the transceiver unit and the processing unit.

According to a forty-second aspect, this application further provides a computer program product. When the computer program product is executed, the method according to any one of the first aspect and the possible designs of the first aspect, the method according to any one of the sixth aspect and the possible designs of the sixth aspect, the method according to any one of the eleventh aspect and the possible designs of the eleventh aspect, the method according to any one of the sixteenth aspect and the possible designs of the sixteenth aspect, the method according to any one of the twenty-first aspect and the possible designs of the twenty-first aspect, the method according to any one of the twenty-sixth aspect and the possible designs of the twenty-sixth aspect, the method according to any one of the thirty-first aspect and the possible designs of the thirty-first aspect, or the method according to any one of the thirty-sixth aspect and the possible designs of the thirty-sixth aspect may be implemented.

According to a forty-third aspect, this application further provides a chip system. The chip system includes one or more interface circuits and one or more processors, the interface circuit and the processor are interconnected through a line, and the processor receives computer instructions from a memory of an electronic device through the interface circuit, and executes the computer instructions, to implement the method according to any one of the first aspect and the possible designs of the first aspect, the method according to any one of the sixth aspect and the possible designs of the sixth aspect, the method according to any one of the eleventh aspect and the possible designs of the eleventh aspect, the method according to any one of the sixteenth aspect and the possible designs of the sixteenth aspect, the method according to any one of the twenty-first aspect and the possible designs of the twenty-first aspect, the method according to any one of the twenty-sixth aspect and the possible designs of the twenty-sixth aspect, the method according to any one of the thirty-first aspect and the possible designs of the thirty-first aspect, or the method according to any one of the thirty-sixth aspect and the possible designs of the thirty-sixth aspect.

According to a forty-fourth aspect, this application further provides a communication system, including one or more of the following network elements: the SSCF network element according to the first aspect, the second network element according to the sixth aspect, the first network element according to the eleventh aspect (or the NEF network element according to the sixteenth aspect or the twenty-first aspect), the UPF network element according to the twenty-sixth aspect, the DCP network element according to the thirty-first aspect, or the ADRF network element according to the thirty-sixth aspect. The foregoing network elements collaborate to implement the methods in the first aspect to the fortieth aspect. For example, each network element performs the step in the foregoing corresponding aspect.

According to a forty-fifth aspect, this application further provides a communication device, where the communication device may be configured to implement the method according to any one of the first aspect and the possible designs of the first aspect, the method according to any one of the sixth aspect and the possible designs of the sixth aspect, the method according to any one of the eleventh aspect and the possible designs of the eleventh aspect, the method according to any one of the sixteenth aspect and the possible designs of the sixteenth aspect, the method according to any one of the twenty-first aspect and the possible designs of the twenty-first aspect, the method according to any one of the twenty-sixth aspect and the possible designs of the twenty-sixth aspect, the method according to any one of the thirty-first aspect and the possible designs of the thirty-first aspect, or the method according to any one of the thirty-sixth aspect and the possible designs of the thirty-sixth aspect.

It may be understood that, for beneficial effects that can be achieved in the forty-first aspect to the forty-fifth aspect, refer to the beneficial effects in the first aspect to the fortieth aspect. Details are not described herein again.

### BRIEF DESCRIPTION OF DRAWINGS

FIG. 1 is a diagram of a communication system according to an embodiment of this application;
FIG. 2a to FIG. 2f are diagrams of sensing scenarios according to an embodiment of this application;
FIG. 3 is a composition diagram of a communication device according to an embodiment of this application;
FIG. 4 is a schematic flowchart of a communication method according to an embodiment of this application;
FIG. 5 is another schematic flowchart of a communication method according to an embodiment of this application;
FIG. 6 is still another schematic flowchart of a communication method according to an embodiment of this application;
FIG. 7 is still another schematic flowchart of a communication method according to an embodiment of this application;
FIG. 8 is still another schematic flowchart of a communication method according to an embodiment of this application;
FIG. 9 is still another schematic flowchart of a communication method according to an embodiment of this application;
FIG. 10 is still another schematic flowchart of a communication method according to an embodiment of this application;
FIG. 11 is still another schematic flowchart of a communication method according to an embodiment of this application;
FIG. 12 is still another schematic flowchart of a communication method according to an embodiment of this application;
FIG. 13 is still another schematic flowchart of a communication method according to an embodiment of this application;
FIG. 14 is still another schematic flowchart of a communication method according to an embodiment of this application;
FIG. 15 is still another schematic flowchart of a communication method according to an embodiment of this application;
FIG. 16 is still another schematic flowchart of a communication method according to an embodiment of this application;
FIG. 17 is still another schematic flowchart of a communication method according to an embodiment of this application;
FIG. 18 is still another schematic flowchart of a communication method according to an embodiment of this application;
FIG. 19 is a diagram of a structure of a communication apparatus according to an embodiment of this application;
FIG. 20 is another diagram of a structure of a communication apparatus according to an embodiment of this application;
FIG. 21 is still another diagram of a structure of a communication apparatus according to an embodiment of this application;
FIG. 22 is still another diagram of a structure of a communication apparatus according to an embodiment of this application;
FIG. 23 is still another diagram of a structure of a communication apparatus according to an embodiment of this application;
FIG. 24 is still another diagram of a structure of a communication apparatus according to an embodiment of this application;
FIG. 25 is still another diagram of a structure of a communication apparatus according to an embodiment of this application; and
FIG. 26 is still another diagram of a structure of a communication apparatus according to an embodiment of this application.

### DESCRIPTION OF EMBODIMENTS

Sensing is a process of collecting and processing collected data and generatinga sensing result. For example, a distance, a shape, a type, and the like of a surrounding obstacle are determined by using the collected data. For another example, a respiratory rate, heartbeats, and the like of a monitored object are determined by using the collected data. The collected data may be data collected by using a sensor, or may be data collected by using a wireless signal. A process of collecting, for sensing, data by using a wireless signal is also referred to as wireless sensing.

Both the wireless sensing and wireless communication are based on an electromagnetic wave theory. In a communication system, a transmit end may modulate an electromagnetic wave signal, so that the electromagnetic wave carries source information. The electromagnetic wave signal is affected by a wireless environment during propagation. To be specific, the electromagnetic wave signal is modulated by the environment, and therefore also carries environment information. By analyzing the electromagnetic wave signal, a receive end can not only obtain the carried source information, but also extract sensing information that reflects a propagation environment characteristic. This makes integrated sensing and communication (integrated sensing and communication, ISAC) possible. The ISAC may also be referred to as joint communication and sensing (joint communication and sensing, JCAS) or integrated sensing and communication. Compared with a system in which sensing and communication are separated, the ISAC has a series of advantages, for example, reducing costs, reducing device sizes, reducing power consumption, improving spectral efficiency, and reducing mutual interference between communication and sensing.

Providing sensing data for a consumer (or referred to as a user or a requester) of the sensing data by using a sensing capability of the communication system can provide effective data support for the consumer to implement various functions and services by using the sensing data.

In this background, this application provides a communication method, to expose/transmit sensing data in a communication system to a data requester by using a sensing capability of the communication system.

The data requester is an object or entity that requests or consumes the sensing data, or is described as a consumer or user of a sensing service. The data requester may also be referred to as a data consumer, a data user, a data consumer, a sensing subscription end, a sensing subscriber, or the like. The name is not limited in this application.

In some possible scenarios, the data requester may be a third-party entity, for example, a server, a terminal device, or a data processing system.

For example, in embodiments of this application, one or more services and functions such as high-precision positioning and tracking, synchronous imaging, map construction and positioning, human sensory enhancement, and gesture and action recognition may be implemented by using sensing data. The third-party entity may be a server, a system, a device, or the like that is configured to implement the foregoing services and functions, for example, may be a positioning system or a self-driving system.

In some other possible scenarios, the data requester may alternatively be a network function (network function, NF) network element or entity inside a network, for example, may be an application function (application function, AF) network element or entity or a data network (data network, DN).

A specific type of the data requester is not limited in this application.

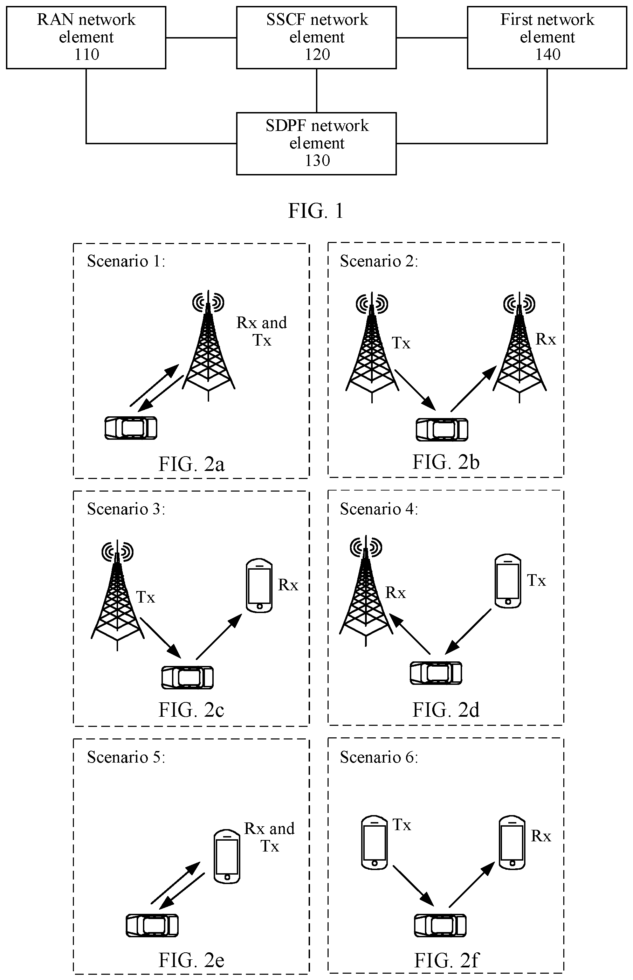

For example, FIG. 1 is a diagram of a communication system according to an embodiment of this application. The communication method provided in this application may be applied to the communication system shown in FIG. 1.

As shown in FIG. 1, the communication system may include: an access network (radio access network, RAN) network element 110, a sensing service control function (sensing service control function, SSCF) network element 120, a sensing data processing function (sensing data processing function, SDPF) network element 130, and a first network element 140.

The RAN network element 110 may be configured to obtain sensing data. The RAN network element 110 may be a network element in an access network (also referred to as a radio access network), for example, an access network device. The RAN network element 110 may also be referred to as a RAN node (or device).

In a possible scenario, the RAN network element 110 may be a base station (base station), an evolved NodeB (evolved NodeB, eNodeB), a transmission reception point (transmission reception point, TRP), a transmission point (transmission point, TP), a next-generation NodeB (next-generation NodeB, gNB), a next-generation base station in a 6G system, a base station in a future mobile communication system, a satellite, an integrated access and backhaul (integrated access and backhaul, IAB) node, a mobile switching center, or an access network device in a non-terrestrial network (non-terrestrial network, NTN) communication system, to be specific, the RAN network element 110 may be deployed on a high-altitude platform, a satellite, or the like. The RAN network element 110 may be a macro base station, a micro base station, an indoor base station, a relay node, or a donor node, or may be a radio controller in a cloud radio access network (cloud radio access network, CRAN) scenario. The RAN network element 110 may alternatively be a device that has functions of a base station and that is in device-to-device (device-to-device, D2D) communication, internet of vehicles communication, uncrewed aerial vehicle communication, or machine communication. Optionally, the RAN network element 110 may alternatively be a server, a wearable device, a vehicle, a vehicle-mounted device, or the like. For example, the RAN network element 110 in a vehicle-to-everything (vehicle-to-everything, V2X) technology may be a road side unit (road side unit, RSU).

All or some functions of the RAN network element 110 in this application may alternatively be implemented by using a software function running on hardware, or may be implemented by using a virtualized function instantiated on a platform (for example, a cloud platform). Alternatively, the RAN network element 110 in this application may be a logical node, a logical module, or software that can implement all or some functions of the RAN network element 110.

In another possible scenario, a plurality of RAN network elements 110 collaborate to implement a function of obtaining sensing data, and different RAN network elements 110 separately implement a part of functions. For example, the RAN network element 110 may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the RAN network element 110 may be a CU node, a DU node, or a device including a CU node and a DU node. In addition, the CU may be classified as a network device in the access network RAN, or the CU may be classified as a network device in a core network CN. This is not limited herein.

In different systems, the CU (or the CU-CP and the CU-UP), the DU, or the RU may have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU may be implemented by using a software module, a hardware module, or a combination of a software module and a hardware module.

For example, the sensing data obtained by the RAN network element 110 may be collected by a sensing entity (sensing entity, SE). The sensing entity is a logical entity, and may also be referred to as a logical sensing entity. In a sensing scenario, sensing entities are classified into a sensing entity for sending a sensing signal (for example, Tx) and a sensing entity for receiving a sensing signal (for example, Rx). The sensing signal may be the electromagnetic wave signal above. The sensing entity for sending the sensing signal may be referred to as a transmit sensing entity or a first sensing entity, and the sensing entity for receiving the sensing signal may be referred to as a receive sensing entity or a second sensing entity. The sensing signal that may be received by the second sensing entity carries sensing data. In some scenarios, a sensing entity may serve as both the first sensing entity and the second sensing entity, in other words, a sensing entity may have both functions of sending a sensing signal and receiving a sensing signal.

The foregoing sensing entity (including the first sensing entity and the second sensing entity) may be deployed on a network device or a terminal device. To be specific, a network device and/or a terminal device having a sensing capability may serve as the sensing entity, or the sensing entity may include a network device and/or a terminal device having a sensing capability. Different sensing scenarios may include different sensing entities.

For example, FIG. 2a to FIG. 2f are diagrams of sensing scenarios according to an embodiment of this application. As shown in FIG. 2a to FIG. 2f, based on types of sensing entities, there may be six sensing scenarios shown in FIG. 2a to FIG. 2f.

In a scenario 1 shown in FIG. 2a, a network device (for example, a base station) may serve as a sensing entity for sending a sensing signal and a sensing entity for receiving a sensing signal. In other words, the network device may serve as both a transmit end (Tx) and a receive end (Rx) of a sensing signal. A sensing signal sent by the network device arrives at a target object (for example, a vehicle, a person, or another physical object, where the vehicle is used as an example in FIG. 2a), the sensing signal is reflected by the target object, and the network device may receive a sensing signal, and may process the sensing signal to obtain a sensing result, for example, sensing data.

In a scenario 2 shown in FIG. 2b, a network device (for example, a base station 1) may serve as a sensing entity for sending a sensing signal, and another network device (for example, a base station 2) may serve as a sensing entity for receiving a sensing signal. A transmit end (Tx) and a receive end (Rx) of a sensing signal may be different network devices. A sensing signal sent by the network device 1 arrives at a target object, the sensing signal is reflected by the target object, and the network device 2 may receive a sensing signal, and may process the sensing signal to obtain a sensing result, for example, sensing data.

The sensing scenarios shown in FIG. 1a and FIG. 1b may be referred to as sensing scenarios based on a network device, or referred to as BS-to-BS sensing scenarios.

In a scenario 3 shown in FIG. 2c, a network device (for example, a base station) may serve as a sensing entity for sending a sensing signal, and a terminal device (for example, a mobile phone) may serve as a sensing entity for receiving a sensing signal. A transmit end (Tx) of a sensing signal may be the network device, and a receive end (Rx) of a sensing signal may be the terminal device. A sensing signal sent by the network device arrives at a target object, the sensing signal is reflected by the target object, and the terminal device may receive a sensing signal, and may process the sensing signal to obtain a sensing result, for example, sensing data.

In a scenario 4 shown in FIG. 2d, a terminal device (for example, a mobile phone) may serve as a sensing entity for sending a sensing signal, and a network device (for example, a base station) may serve as a sensing entity for receiving a sensing signal. A transmit end (Tx) of a sensing signal may be the terminal device, and a receive end (Rx) of a sensing signal may be the network device. A sensing signal sent by the terminal device arrives at a target object, the sensing signal is reflected by the target object, and the network device may receive a sensing signal, and may process the sensing signal to obtain a sensing result, for example, sensing data.

The sensing scenarios shown in FIG. 2c and FIG. 2d may be referred to as sensing scenarios based on a network device and a terminal device; or the scenario 3 may be referred to as a BS-to-UE sensing scenario, and the scenario 4 may be referred to as a UE-to-BS sensing scenario.

In a scenario 5 shown in FIG. 2e, a terminal device (for example, a mobile phone) may serve as a sensing entity for sending a sensing signal and a sensing entity for receiving a sensing signal. In other words, the terminal device may serve as both a transmit end (Tx) and a receive end (Rx) of a sensing signal. A sensing signal sent by the terminal device arrives at a target object, the sensing signal is reflected by the target object, and the terminal device may receive a sensing signal, and may process the sensing signal to obtain a sensing result, for example, sensing data.

In a scenario 6 shown in FIG. 2f, a terminal device (for example, a mobile phone 1) may serve as a sensing entity for sending a sensing signal, and another terminal device (for example, a mobile phone 2) may serve as a sensing entity for receiving a sensing signal. A transmit end (Tx) and a receive end (Rx) of a sensing signal may be different terminal devices. A sensing signal sent by the terminal device 1 arrives at a target object, the sensing signal is reflected by the target object, and the terminal device 2 may receive a sensing signal, and may process the sensing signal to obtain a sensing result, for example, sensing data.

The sensing scenarios shown in FIG. 2e and FIG. 2f may be referred to as sensing scenarios based on a terminal device, or referred to as UE-to-UE sensing scenarios.

The sensing signal sent by the transmit end may be referred to as a first sensing signal, and the sensing signal received by the receive end may be referred to as a second sensing signal. The second sensing signal carries more information than the first sensing signal. For example, the second sensing signal may carry source information and environment information. In the scenarios shown in FIG. 2a to FIG. 2f, the RAN network element 110 may serve as a receive end of a sensing signal to obtain sensing data, or the RAN network element 110 may communicate with a receive end of a sensing signal to obtain sensing data. This is not limited herein.

Optionally, in embodiments of this application, for the network device, refer to implementation of the RAN network element 110. The terminal device may also be referred to as user equipment (user equipment). In some examples, the terminal device may be a wireless terminal. The wireless terminal may be a device that provides a user with voice and/or other service data connectivity, a handheld device with a wireless connection function, or another processing device connected to a wireless modem. For example, the terminal device may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in a 5G or 6G mobile communication system, or a terminal in a future evolved network.

It should be understood that specific product forms of the terminal device and the network device are not limited in this application.

The SSCF network element 120 and the SDPF network element 130 shown in FIG. 1 may be core network function modules. The SSCF network element 120 is configured to implement a control plane function of a sensing service, for example, configured to receive sensing capability information of a sensing entity, and orchestrate the sensing service based on the sensing capability information of the sensing entity. The sensing service is also referred to as a sensing service. The SDPF network element 130 is configured to implement a data plane function of the sensing service, for example, configured to process sensing data of the sensing service to obtain a sensing result of the sensing service.

The SSCF network element 120 and the SDPF network element 130 may be integrated together, may be separately deployed, or may be deployed together with another core network function module. After the control plane function of the sensing service and the data plane function of the sensing service are deployed independently, a quantity of control plane function entities and a quantity of data plane function entities may be flexibly configured and adjusted based on a resource status and a service status. Then, an attack on a data plane does not affect a control plane, so that reliability and security of the sensing service can be improved.

The orchestration of the sensing service may include selecting a transmit sensing entity and a receive sensing entity based on the sensing capability information of the sensing entity.

For example, the sensing capability information of the sensing entity includes a device identifier, a role identifier, a device type, geographical location information, a sensing processing capability, and a supported sensing service type.

The device identifier uniquely identifies the sensing entity. For example, the first sensing entity is a terminal device, and the device identifier may be an international mobile equipment identity (International mobile equipment identity, IMEI), a subscription permanent identifier (subscription permanent identifier, SUPI), a subscription concealed identifier (subscription concealed identifier, SUCI), a medium access control ( media access control, MAC) address, or the like. For another example, the first sensing entity is a network device, the device identifier may be a cell identifier, a tracking area identity (tracking area identity, TAI), and/or the like, and the cell identifier may be, for example, a physical cell identifier (physical cell identifier, PCI).

The role identifier indicates that the sensing entity is a transmit sensing entity and/or a receive sensing entity.

The device type indicates that the sensing entity is a network device or a terminal device. Optionally, if the sensing entity is a network device, the device type may further indicate that the network device is a base station, a CU, a DU, or the like. If the sensing entity is a terminal device, the device type may further indicate that the terminal device is UE, an internet of things device, a flight device, a VR device, or the like.

The geographical location information may indicate one or both of the following: a current geographical location of the sensing entity or a geographical location range that can be sensed by the sensing entity. The geographical location is, for example, longitude and latitude information or global positioning system (global positioning system, GPS) location information.

The sensing processing capability indicates that the sensing entity has one or more of a layer 1 (layer 1, L1) sensing capability, a layer 2 (layer 2, L2) sensing capability, or a layer 3 (layer 3, L3) sensing capability.

The L1 sensing processing capability is for sensing raw data. The raw data is basic information of a sensing signal, for example, one or more of an amplitude, a phase, and whether the sensing signal is an I signal or a Q signal.

The L2 sensing capability is for sensing measurement data. The measurement data is data that is obtained by processing the raw data and that represents a measurement dimension, and may include but is not limited to one or more of a delay of a sampling point, a receiving angle of the sensing signal, signal strength of the sensing signal, Doppler (namely, a frequency offset of the sensing signal), a location of a target object, a speed of the target object, or the like. Sampling points are signal values that are at some specific moments or in some specific locations and that are selected when discretization processing is performed on a continuous signal in a signal processing process.

The L3 sensing capability is for processing sensing data to obtain a sensing result. The sensing data may be the raw data and/or the measurement data, and the sensing result may include but is not limited to one or more of a distance between the sensing entity and the target object, the speed of the target object, the location of the target object, an angle between the sensing entity and the target object, a moving path of the target object, a respiratory rate of the target object, heartbeats of the target object, or the like.

The supported sensing service type indicates a sensing service type that can be provided by the sensing entity, and may include but is not limited to one or more of the following types: an environment type, a monitoring type, an imaging type, a positioning type, or the like. The environment type may include but is not limited to one or more of an ambient temperature, ambient humidity, air quality, a weather condition, crowd density, vehicle density, atmospheric pressure, or the like. The monitoring type may include but is not limited to one or more of movement monitoring, intrusion monitoring, fall monitoring, health monitoring, or the like. The movement monitoring may include but is not limited to one or more of distance monitoring, location monitoring, moving speed monitoring, moving path monitoring, or the like. The health monitoring may include but is not limited to one or more of a respiratory rate, heartbeats, or the like. The imaging type may include but is not limited to one or more of medical imaging, 3D map imaging, 3D map construction, building imaging, body temperature imaging, or the like.

The processing of the sensing data may include processing raw sensing data received or measured by the receive sensing entity, to obtain processed sensing data.

Optionally, the SSCF network element 120 may also be referred to as a sensing control entity, a sensing service control network element, a sensing control network element, or the like. The SDPF network element 130 may also be referred to as a sensing processing entity, a sensing data processing network element, a sensing processing network element, or the like.

The names of the SSCF network element 120 and the SDPF network element 130 in this application are merely used as examples, and do not constitute a limitation. With development of communication technologies and sensing technologies, the two modules may have other names.

The first network element 140 shown in FIG. 1 may be a data requester, for example, may be a third-party entity or an NF network element. Alternatively, the first network element 140 may be another network element, for example, a network exposure function (network exposure function, NEF) network element, that is in the communication system and that interacts with a data requester (for example, a third-party entity). The NEF network element may also be referred to as a network service presentation function network element.

When the first network element 140 is the third-party entity or the NF network element, the first network element 140 may directly interact with the RAN network element 110, the SSCF network element 120, the SDPF network element 130, and the like, to obtain sensing data.

When the first network element 140 is the NEF network element, the data requester (for example, the third-party entity) may interact with the RAN network element 110, the SSCF network element 120, the SDPF network element 130, and the like via the NEF network element, to obtain sensing data. For example, the sensing data may be exposed to the data requester via the NEF network element.

Optionally, the communication system shown in FIG. 1 may include but is not limited to: a narrowband-internet of things (narrowband-internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access (code division multiple access, CDMA) 2000 system, a time division-synchronous code division multiple access (time division-synchronous code division multiple access, TD-SCDMA) system, a long term evolution (long term evolution, LTE) system, a 5G mobile communication system and a next-generation 5G mobile communication system, an enhanced mobile broadband (enhanced Mobile Broadband, eMBB) system, an ultra-reliable low-latency communication (ultra-reliable low-latency communication, URLLC) system, a massive machine-type communications (Massive Machine-Type Communications, mMTC) system, a long range (long range, LoRa) system or an internet of vehicles system, a future 6G communication system or another evolved communication system, or the like. A type of a communication system to which the communication method is applicable is not limited in this application.

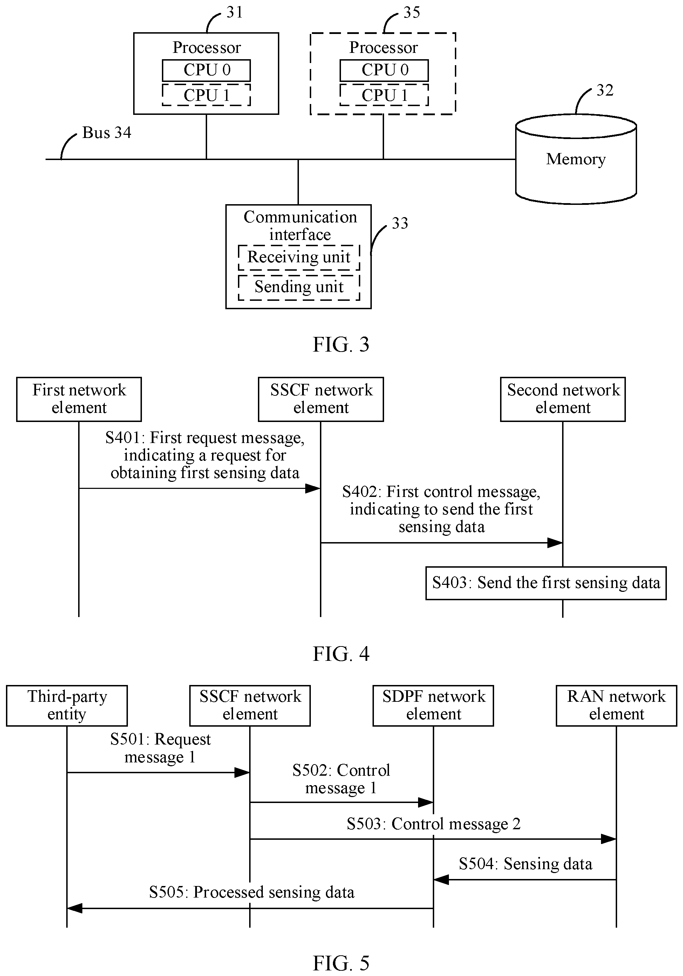

For example, FIG. 3 is a composition diagram of a communication device according to an embodiment of this application. The communication device may be the network device or the terminal device above. The network device may be the sensing entity above or a device on which the sensing entity is deployed, or may be any network element in embodiments of this application or a device on which the network element is carried/deployed, for example, an access network element, an SSCF network element, an SDPF network element, a first network element, a third-party entity, or an NF network element.

As shown in FIG. 3, the communication device may include at least one processor 31, a memory 32, a communication interface 33, and a bus 34.

The processor 31 is a control center of the communication device, and may be one processor or may be a collective name of a plurality of processing elements. For example, the processor 31 may be a central processing unit (central processing unit, CPU), may be an application-specific integrated circuit (application-specific integrated circuit, ASIC), or may be configured as one or more integrated circuits for implementing embodiments of this application, for example, one or more digital signal processors (digital signal processors, DSPs) or one or more field programmable gate arrays (field programmable gate arrays, FPGAs).

The processor 31 may run or execute a software program stored in the memory 32, and invoke data stored in the memory 32, to perform various functions of the communication device. For example, when the communication device is a specific network element in the communication method provided in embodiments of this application or a device on which the network element is carried, the communication device may perform steps performed by the network element in the communication method provided in embodiments of this application, for example, perform steps performed by the access network element, the SSCF network element, the SDPF network element, the first network element, the third-party entity, or the NF network element.

During specific implementation, in an embodiment, the processor 31 may include one or more CPUs, for example, a CPU 0 and a CPU 1 shown in FIG. 3.

During specific implementation, in an embodiment, the communication device may include a plurality of processors, for example, the processor 31 and a processor 35 shown in FIG. 3. Each of the processors may be a single-core processor (single-CPU), or may be a multi-core processor (multi-CPU). The processor herein may be one or more devices, circuits, and/or processing cores configured to process data (for example, computer program instructions).

The memory 32 may store a software program for the method steps executed by the communication device, and the processor 31 controls the execution. The memory 32 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto.

The memory 32 may exist independently, and is connected to the processor 31 through the bus 34. Alternatively, the memory 32 may be integrated with the processor 31. This is not limited herein.

The communication interface 33 uses any apparatus such as a transceiver, and is configured to communicate with another device or a communication network. The communication interface 33 may include an Ethernet interface, a radio access network (radio access network, RAN) interface, a wireless local area network (wireless local area network, WLAN) interface, or the like. The communication interface 33 may include a receiving unit for implementing a receiving function and a sending unit for implementing a sending function.

The bus 34 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

Although the bus 34 is used in FIG. 3, it may be understood that the bus may alternatively be replaced with a connection relationship in another form, and is not limited to the bus.

Optionally, the any network element in embodiments of this application or the device on which the network element is carried/deployed, for example, the access network element, the SSCF network element, the SDPF network element, the first network element, the third-party entity, or the NF network element, may include more or fewer components than those shown in FIG. 3. This is not limited herein.

The following uses examples to describe the communication method provided in embodiments of this application. Processing described below as being performed by a single execution body may alternatively be divided into processing performed by a plurality of execution bodies. These execution bodies may be logically and/or physically separated. It should be further understood that with evolution of a network architecture and emergence of a new service scenario, technical solutions provided in embodiments of this application are also applicable to similar technical problems.

It should be noted that, in the descriptions of embodiments of this application, words such as "first" and "second" are merely for distinguishing, and are not intended to specially limit a specific feature. In other words, "first" or "second" may include more content, but is not limited to a specific concept. The term "and/or" describes an association relationship between associated objects and represents that three relationships may exist. For example, A and/or B may represent the following three cases: Only A exists, both A and B exist, and only B exists. The character "/" generally indicates an "or" relationship between associated objects. "At least one" means one or more, and "a plurality of" means two or more. In embodiments of this application, only fewer steps than all steps may be performed, or more steps may be performed. This is not limited. "At least one of the following" or a similar expression thereof represents any combination of listed items. For example, at least one of A, B, and (or) C may represent the following cases: Only A exists, only B exists, only C exists, both A and B exist, both B and C exist, both A and C exist, or all A, B, and C exist. A, B, and C may be singular or plural.

Unless otherwise defined, all technical and scientific terms used in this specification have same meanings as those usually understood by a person skilled in the art of this application. The terms used in the specification of this application are merely for the purpose of describing specific embodiments, but are not intended to limit this application.

For example, in the following procedures in this application, steps performed by each network element (for example, a first network element, a second network element, or an SSCF network element) may be specifically performed by a communication device on which the network element is carried/deployed or an apparatus (for example, a software module or a chip) built in the communication device on which the network element is carried/deployed. The communication device may be a network device or a terminal device.

FIG. 4 is a schematic flowchart of a communication method according to an embodiment of this application. As shown in FIG. 4, the communication method may include S401 to S403.

S401: A first network element sends a first request message to an SSCF network element, where the first request message indicates a request for obtaining first sensing data.

Correspondingly, the SSCF network element may receive the first request message from the first network element.

In a possible scenario, the first network element may be a data requester, for example, a third-party entity or an NF network element inside a network, of sensing data. For meanings of the third-party entity and the NF network element, refer to the descriptions in the foregoing embodiments. Details are not described again.

In this scenario, the first network element may send the first request message to the SSCF network element to request the SSCF network element to perform sensing task orchestration, to provide the sensing data for the first network element via the following second network element. Sensing data that is requested, by using the first request message, to be obtained may be referred to as the first sensing data.

For example, the first network element is the third-party entity, and the third-party entity may also be referred to as an entity that requests a sensing service. The first request message may also be referred to as a sensing service request message or another name. In some implementations, the first request message may indicate a request for obtaining a sensing result of a first sensing service, and the sensing result of the first sensing service is referred to as the first sensing data. The first request message may include one or more of the following information: an identifier of the third-party entity, area information of the first sensing service, a sensing service type of the first sensing service, sensing requirement information of the first sensing service, or the like. The foregoing information included in the first request message may indicate the sensing service requested by the third-party entity. The identifier of the third-party entity identifies the third-party entity.

In some other implementations, the third-party entity may subscribe to the sensing service from the SSCF network element in advance. The first request message may carry or indicate a sensing service identifier of the sensing service subscribed to by the third-party entity. The sensing service identifier indicates a request for obtaining a sensing result of the sensing service subscribed to by the third-party entity. For example, the third-party entity subscribes to a first sensing service from the SSCF network element, the first request message carries a sensing service identifier of the first sensing service, the sensing service identifier indicates a request for obtaining a sensing result of the first sensing service, and the sensing result of the first sensing service is referred to as the first sensing data. In this implementation, the third-party entity may also be referred to as a sensing subscription end.

Optionally, the sensing service identifier that may be carried in the first request message may be generated by the SSCF and fed back to the third-party entity, so that the third-party entity requests the corresponding sensing service.

In another possible scenario, the first network element may alternatively be another core network element, for example, a NEF network element, that communicates with a data requester of sensing data. The data requester (for example, a third-party entity) may send a request message to the NEF network element to request to obtain the first sensing data. After receiving the request message from the data requester, the NEF network element may send the first request message to the SSCF network element. An implementation of the first network element is not limited in this application.

After receiving the first request message, the SSCF network element may perform S402.

S402: The SSCF network element sends a first control message to the second network element, where the first control message indicates to send the first sensing data.

Correspondingly, the second network element may receive the first control message from the SSCF network element.

The second network element may send the first sensing data in response to the first control message. For example, S403 is performed.

S403: The second network element sends the first sensing data.

For example, the first sensing data is the sensing result of the first sensing service. After receiving the first request message, the SSCF network element may separately send a control message (or referred to as a sensing control message) to a transmit sensing entity and a receive sensing entity, to trigger the transmit sensing entity and the receive sensing entity to execute a sensing task to obtain sensing data. For example, the SSCF network element may send a control message to the transmit sensing entity to indicate the transmit entity to send a sensing signal, and send a control message to the receive sensing entity to indicate the receive sensing entity to receive a sensing signal. The sensing signal received by the receive sensing entity carries the sensing data. The receive sensing entity may determine the sensing data based on the received sensing signal, where the sensing data may be referred to as raw sensing data.

In an implementation, the receive sensing entity may send the raw sensing data to an SDPF network element, and the SDPF network element may process the raw sensing data to obtain processed sensing data. The SSCF network element may further send a control message to the SDPF network element, to indicate the SDPF network element to process the sensing data sent by the receive sensing entity. For example, the SDPF network element may be specifically indicated to perform L2 sensing processing and/or L3 sensing processing on the received sensing data.

In another implementation, the receive sensing entity may alternatively have a capability of processing the raw sensing data. After obtaining the raw sensing data, the receive sensing entity may process the raw sensing data, for example, perform L2 sensing processing and/or L3 sensing processing on the raw sensing data, to obtain processed sensing data. The receive sensing entity may send the processed sensing data to an SDPF network element, and the SDPF network element may further process the processed sensing data sent by the receive sensing entity, for example, fuse processed sensing data sent by different receive sensing entities or perform L3 sensing processing, to obtain sensing data processed by the SDPF network element. The SSCF network element may further send a control message to the SDPF network element, to indicate the SDPF network element to process the sensing data sent by the receive sensing entity. For example, the SDPF network element may be specifically indicated to perform fusion or L3 sensing processing on the received sensing data.

Optionally, the SSCF network element may select the transmit sensing entity and the receive sensing entity based on the information (for information content, refer to the descriptions in S401) carried in the first request message and sensing capability information of each sensing entity. The SSCF network element may select one or more transmit sensing entities and one or more receive sensing entities.

For example, the first request message may carry the sensing service identifier, and the sensing service identifier indicates a request for obtaining the first sensing data corresponding to the first sensing service. The SSCF network element may determine, based on the sensing service identifier, a transmit sensing entity and a receive sensing entity that are associated with the first sensing service. For example, the SSCF network element may obtain, based on a first sensing service identifier, the sensing service type, the area information, and the sensing requirement information of the first sensing service subscribed to by the data requester, and allocate a task ID of the first sensing service based on these pieces of information. Alternatively, the SSCF network element may allocate a task ID of the first sensing service based on the sensing service type, the area information, and the sensing requirement information of the first sensing service that are carried in the first sensing service request message. Optionally, task IDs of different sensing services are different. The SSCF network element may control, based on the task ID, the transmit sensing entity, the receive sensing entity, the SDPF network element, and the like to execute the sensing task, to obtain the sensing data.

For example, the third-party entity requests a first sensing service in an area 1, a type of the requested first sensing service is movement monitoring, requirement information indicates that an error of positioning precision of the first sensing service is within 10 cm, current longitude and latitude information of a sensing entity a and a sensing entity b is within a range of the area 1, a role identifier of the sensing entity a is a transmit sensing entity, a role identifier of the sensing entity b is a receive sensing entity, and both the sensing entity a and the sensing entity b can support movement information monitoring of a moving target. In this case, the SSCF network element may select the sensing entity a as a transmit sensing entity for processing the first sensing service, and select the sensing entity b as a receive sensing entity for processing the first sensing service.

Optionally, in an optional embodiment, the transmit sensing entity and the receive sensing entity may be the same. For example, a sensing entity 1 may serve as a transmit sensing entity to send a sensing signal, and may also serve as a receive sensing entity to receive a sensing signal.

In a possible scenario, the second network element in S402 and S403 may be the SDPF network element, the first control message may be the control message sent by the SSCF network element to the SDPF network element, and the first sensing data may be the sensing data processed by the SDPF network element.

In another possible scenario, the second network element in S402 and S403 may be a RAN network element that serves as the receive sensing entity. The first control message may be the control message sent by the SSCF network element to the RAN network element, and the first sensing data may be the raw sensing data obtained by the RAN network element or the sensing data processed by the RAN network element.

In a possible design, the first network element may be the data requester of the sensing data. For example, the first network element is the third-party entity or the NF network element inside the network. The second network element may directly send the first sensing data to the first network element. S403 may include: The second network element sends the first sensing data to the first network element.

For example, the first network element is the third-party entity, and the second network element is the SDPF network element. FIG. 5 is another schematic flowchart of a communication method according to an embodiment of this application. As shown in FIG. 5, the communication method may include S501 to S505.

S501: The third-party entity sends a request message 1 to the SSCF network element, where the request message 1 indicates a request for obtaining first sensing data.

The request message 1 may be the foregoing first request message.

Correspondingly, the SSCF network element may receive the request message 1 from the third-party entity.

S502: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

S503: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

A sequence of S502 and S503 is not limited.

S504: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S505.

S505: The SDPF network element sends the processed sensing data to the third-party entity.

Correspondingly, the third-party entity receives the processed sensing data.

In S505, the processed sensing data sent by the SDPF network element to the third-party entity is the foregoing first sensing data.

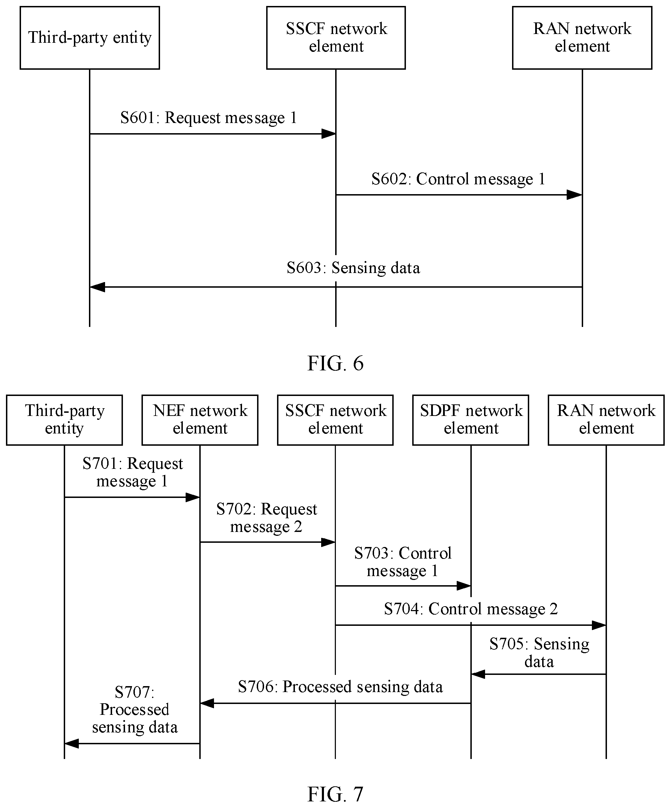

For another example, the first network element is the third-party entity, and the second network element is the RAN network element that serves as the receive sensing entity. FIG. 6 is still another schematic flowchart of a communication method according to an embodiment of this application. As shown in FIG. 6, the communication method may include S601 to S603.

S601: The third-party entity sends a request message 1 to the SSCF network element, where the request message 1 indicates a request for obtaining first sensing data.

The request message 1 may be the foregoing first request message.

Correspondingly, the SSCF network element may receive the request message 1 from the third-party entity.

S602: The SSCF network element sends a control message 1 to the RAN network element, where the control message 1 indicates to receive a sensing signal and send the first sensing data.

The control message 1 may be the foregoing first control message. For example, the control message 1 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 1 from the SSCF network element.

Optionally, the SSCF network element may further send a control message to the SDPF network element, to indicate the SDPF network element to process sensing data.

S603: The RAN network element sends sensing data to the third-party entity.

Correspondingly, the third-party entity receives the sensing data.

The sensing data sent by the RAN network element to the third-party entity is the foregoing first sensing data. The first sensing data may be raw sensing data obtained by the RAN network element or sensing data processed by the RAN network element.

Optionally, in this embodiment of this application, a step of interaction between the RAN network element that serves as the receive sensing entity and the third-party entity or another network element may alternatively be implemented via another intermediate RAN network element. For example, a RAN 1 network element sends sensing data to a RAN 2 network element, the RAN 2 network element sends the sensing data to the third-party entity, and the RAN 1 network element serves as the receive sensing entity. This is not limited herein.

In another possible design, the first network element may be the NEF network element, and the third-party entity may send a request message to the NEF network element to request to obtain the first sensing data. After receiving the request message from the data requester, the NEF network element may send the first request message to the SSCF network element. S403 may include: The second network element sends the first sensing data to the NEF network element. The method may further include: The NEF network element sends the first sensing data to the third-party entity. In other words, the second network element may send the first sensing data to the third-party entity via the NEF network element.

For example, the first network element is the NEF network element, and the second network element is the SDPF network element. FIG. 7 is still another schematic flowchart of a communication method according to an embodiment of this application. As shown in FIG. 7, the communication method may include S701 to S707.

S701: The third-party entity sends a request message 1 to the NEF network element, where the request message 1 indicates a request for obtaining first sensing data.

Correspondingly, the NEF network element may receive the request message 1 from the third-party entity.

For example, the request message 1 may include one or more of the following sensing information: a sensing user ID, a sensing service type, a sensing area, a security requirement, a sensing precision requirement, event reporting duration, a reporting interval, a maximum sampling interval, a start time point, an end time point, a priority, or the like. The sensing user ID may indicate identity information of the third-party entity, and for example, may be an identifier of the third-party entity.

Optionally, the request message 1 may be a NEF event exposure subscription interface message. For example, the event exposure subscription interface may be described as "Nnef_EventExposure_Subscribe". In an implementation, one or more fields may be newly added to the "Nnef_EventExposure_Subscribe" interface. The newly added field may indicate the request for obtaining the first sensing data, for example, indicate various sensing information included in the request message 1. In another implementation, one or more existing fields in the "Nnef_EventExposure_Subscribe" interface may be modified or extended, and a modified or extended field may indicate the request for obtaining the first sensing data. An implementation of the request message 1 is not limited in this application.

S702: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

For example, the request message 2 may also include various sensing information included in the request message 1, to indicate the request for obtaining the first sensing data. In other words, the NEF network element may forward, to the SSCF network element, a sensing service request sent by the third-party entity.

Optionally, the request message 2 may be an "Nsscf_SensingService_Request" interface message.

Optionally, after receiving the request message 2, the SSCF network element may return a response message, for example, a response message 2, to the NEF network element. The response message 2 may be an "Nsscf_SensingService_Response" interface message. The response message 2 may indicate that the receiving of the request message 2 is acknowledged, or may have another function.

S703: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

S704: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

A sequence of S703 and S704 is not limited.

S705: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S706.

S706: The SDPF network element sends the processed sensing data to the NEF network element.

Correspondingly, the NEF network element receives the processed sensing data.

S707: The NEF network element sends the processed sensing data to the third-party entity.

Correspondingly, the third-party entity receives the processed sensing data.

In S706 and S707, the processed sensing data sent by the SDPF network element to the third-party entity via the NEF network element is the foregoing first sensing data.

For example, the NEF network element may send an event exposure notification interface message to the third-party entity, where the event exposure notification interface message may include the first sensing data. For example, the event exposure notification interface may be an "Nnef_EventExposure_Notify" interface.

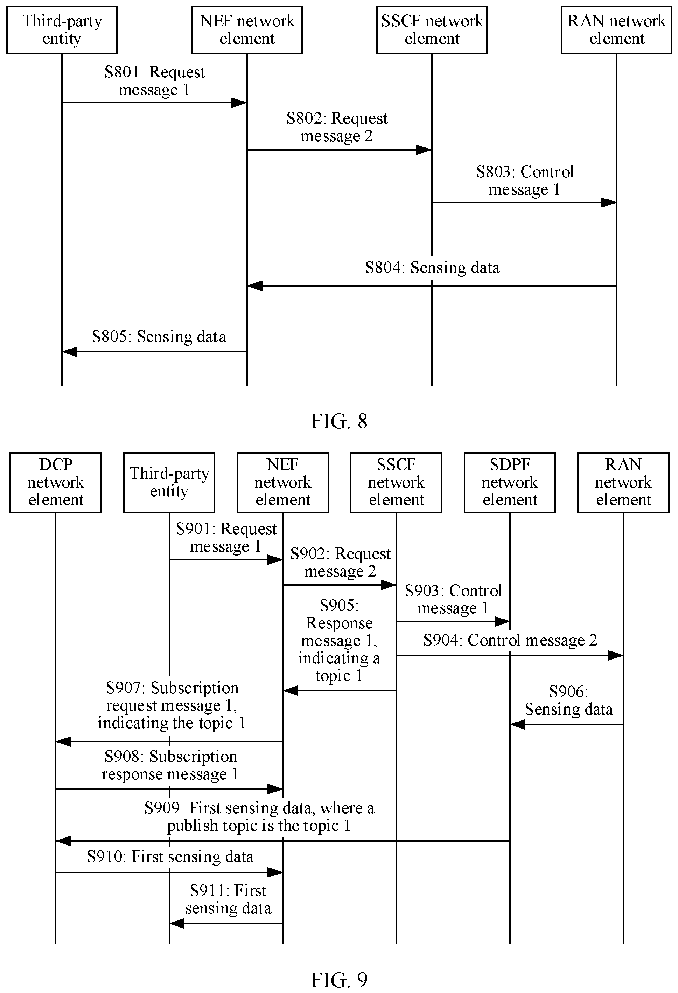

For another example, the first network element is the NEF network element, and the second network element is the RAN network element that serves as the receive sensing entity. FIG. 8 is still another schematic flowchart of a communication method according to an embodiment of this application. As shown in FIG. 8, the communication method may include S801 to S805.

S801: The third-party entity sends a request message 1 to the NEF network element, where the request message 1 indicates a request for obtaining first sensing data.

Correspondingly, the NEF network element may receive the request message 1 from the third-party entity.

S802: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

For S801 and S802, refer to the descriptions in S701 and S702. Details are not described again.

S803: The SSCF network element sends a control message 1 to the RAN network element, where the control message 1 indicates to receive a sensing signal and send the first sensing data.

The control message 1 may be the foregoing first control message. For example, the control message 1 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 1 from the SSCF network element.

Optionally, the SSCF network element may further send a control message to the SDPF network element, to indicate the SDPF network element to process sensing data.

S804: The RAN network element sends sensing data to the NEF network element.

Correspondingly, the NEF network element may receive the sensing data.

S805: The NEF network element sends the sensing data to the third-party entity.

Correspondingly, the third-party entity receives the sensing data.

For S805, refer to the descriptions in S707. Details are not described again.

In S804 and S805, the sensing data sent by the RAN network element to the third-party entity via the NEF network element is the foregoing first sensing data. The first sensing data may be raw sensing data obtained by the RAN network element or sensing data processed by the RAN network element.

In the foregoing communication method, by using a sensing capability of a communication system, the first sensing data may be obtained, and the sensing data obtained by the second network element (the receive sensing entity or the SDPF network element) may be exposed/transmitted to the data requester, for example, the third-party entity or the NF network element, to provide effective data support for the data requester to implement a subsequent sensing service or function. The sensing data is exposed/transmitted to the third-party entity via the NEF network element, so that data transmission security can be improved.

Optionally, in the foregoing embodiment in which the second network element sends the first sensing data to the first network element, the first control message received by the second network element may specifically indicate the second network element to send the first sensing data to the first network element. The second network element may determine, based on the indication of the first control message, that the first sensing data needs to be sent to the first network element.

Optionally, in some embodiments, the second network element may alternatively send the first sensing data to the first network element via a data communication proxy (data communication proxy, DCP) network element. The second network element may be the SDPF network element or the RAN network element that serves as the receive sensing entity, and the first network element may be the NEF network element or the data requester (for example, the third-party entity). In other words, the second network element may publish the first sensing data to the DCP network element, and the first network element may subscribe to the first sensing data from the DCP network element, to obtain the first sensing data.

The DCP is merely an example of a name, and the DCP may alternatively be replaced with another name. A device having a same function as the DCP may be considered as the DCP. This is not limited in this application.

The DCP may be deployed as an independent network element in a 3GPP network, or may be co-located with a network element or a device in the 3GPP network. Optionally, the DCP may be deployed in an access network, or may be deployed in a core network. An implementation of the DCP network element is not limited in this application.

When the second network element sends the first sensing data to the first network element via the DCP network element, the second network element may serve as a data producer (data producer) to send the first sensing data to the DCP, for example, publish the first sensing data to the DCP network element in a topic publishing (topic publish) manner. The first network element may serve as a data consumer (data consumer) to perform data subscription and data pull (data pull) from the DCP network element, for example, may obtain the first sensing data in a topic subscription (topic subscribe) manner.

Optionally, the DCP network element may support a plurality of transport protocols, for example, a transmission control protocol (transmission control protocol, TCP), a user datagram protocol (user datagram protocol, UDP), a quick UDP internet connections (quick UDP internet connections, QUIC) protocol, or another transport protocol. The DCP network element may include an adaptation layer(adaptor) and a distributed message queue (distributed message queue, DMQ) to support efficient data distribution. The adaptation layer may complete adaptation of a transport protocol (for example, the TCP, UDP, or QUIC transport protocol) of a client (for example, the data producer or the data consumer), directly interact with the client, and distribute a request of the client to a processing thread. The DMQ may complete a message exchanging function, and distribute, to a corresponding data consumer, a message published by a data producer. The DCP supports a concept of a data consumer group. To be specific, one corresponding message can be consumed by only one data consumer in a same data consumer group, but can be consumed by different data consumer groups.

It should be understood that, when the second network element sends the first sensing data to the first network element via the DCP network element, S403 may include: The second network element sends the first sensing data to the DCP network element based on a first topic. In other words, the first sensing data is published in the DCP network element based on the first topic. The method may further include: The first network element obtains the first sensing data from the DCP network element based on the first topic. The first topic may be sent by the SSCF network element to the first network element.

The following uses an example in which the first network element is the NEF network element and the third-party entity obtains the first sensing data via the NEF network element, to describe a process in which the second network element sends the first sensing data to the first network element via the DCP network element. A case in which the first network element is the third-party entity is similar to this case, and a difference lies in that the third-party entity directly interacts with the SSCF network element and the DCP network element not via the NEF network element. Details are not described.

For example, the first network element is the NEF network element, and the second network element is the SDPF network element. FIG. 9 is still another schematic flowchart of a communication method according to an embodiment of this application. As shown in FIG. 9, the communication method may include S901 to S911.

S901: The third-party entity sends a request message 1 to the NEF network element, where the request message 1 indicates a request for obtaining first sensing data.

Correspondingly, the NEF network element may receive the request message 1 from the third-party entity.

S902: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

S903: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

S904: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S901 to S904, refer to S701 to S704. Details are not described again.

S905: The SSCF network element sends a response message 1 to the NEF network element, where the response message 1 indicates a topic 1, and the topic 1 is for subscribing to the first sensing data from the DCP network element.

The response message 1 may be a response message for the request message 2.

The topic 1 is a publish topic of the first sensing data in the DCP network element, and the first sensing data is from the SDPF network element. For details, refer to the following steps.

For example, the response message 1 may be the foregoing "Nsscf_SensingService_Response" interface message.

Correspondingly, the NEF network element receives the response message 1.

A sequence of S903 to S905 is not limited.

S906: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S909.

S907: The NEF network element sends a subscription request message 1 to the DCP network element, where the subscription request message 1 indicates the topic 1, to subscribe to the first sensing data from the DCP network element.

Correspondingly, the DCP network element receives the subscription request message 1.

After receiving the subscription request message 1, the DCP network element may perform S908.

S908: The DCP network element sends a subscription response message 1 to the NEF network element.

Optionally, the subscription response message 1 indicates that the receiving of the subscription request message 1 is acknowledged.

Correspondingly, the NEF network element receives the subscription response message 1.

S909: The SDPF network element sends the first sensing data to the DCP network element, where the publish topic of the first sensing data in the DCP network element is the topic 1.

In other words, the SDPF network element sends the first sensing data to the DCP network element based on the topic 1. The first sensing data is the sensing data processed by the SDPF network element.

Correspondingly, the DCP network element receives the first sensing data published based on the topic 1.

S910: The DCP network element sends the first sensing data to the NEF network element.

For example, the DCP network element has received the subscription request message 1. After receiving the first sensing data, the DCP network element may send the first sensing data to the NEF network element.

Correspondingly, the NEF network element receives the first sensing data.

S911: The NEF network element sends the first sensing data to the third-party entity.

Correspondingly, the third-party entity receives the first sensing data.

Optionally, in the procedure shown in FIG. 9, the control message 1 sent by the SSCF network element to the SDPF network element in S903 may indicate the SDPF network element to send the first sensing data to the DCP network element after a specific delay, so that a sensing data subscription procedure can be completed between the NEF network element and the DCP network element. When receiving the first sensing data, the DCP network element can normally send the first sensing data to the NEF network element instead of discarding the data. Alternatively, the control message 2 sent by the SSCF network element to the RAN network element in S904 may indicate the RAN network element to send the sensing data to the SDPF network element after a specific delay, so that a sensing data subscription procedure can be completed between the NEF network element and the DCP network element. When receiving the first sensing data, the DCP network element can normally send the first sensing data to the NEF network element instead of discarding the data.

Alternatively, an occasion on which the SSCF network element sends the control message 1 to the SDPF network element in S903 and/or an occasion on which the SSCF network element sends the control message 2 to the RAN network element in S904 may be after the SSCF network element sends the response message 1 to the NEF network element in S905, so that a sensing data subscription procedure can be completed in a timely manner between the NEF network element and the DCP network element. When receiving the first sensing data, the DCP network element can normally send the first sensing data to the NEF network element instead of discarding the data.

An execution sequence of the foregoing steps is not limited in this application.

In the procedure shown in FIG. 9, the SDPF network element may publish the first sensing data to the DCP network element, and the NEF network element may subscribe to and obtain the first sensing data from the DCP network element.

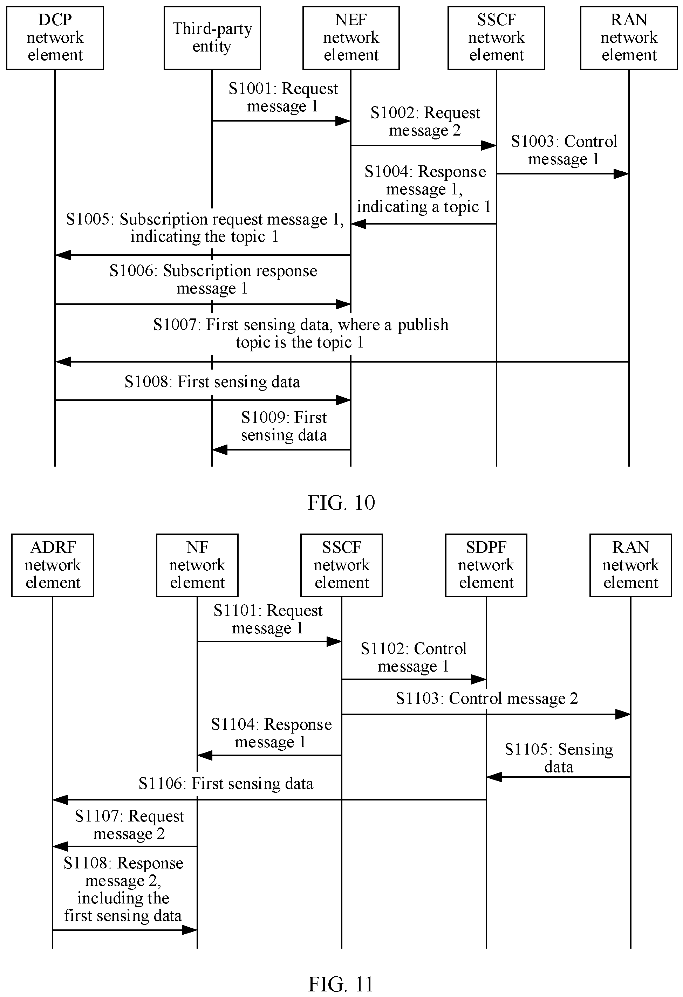

For another example, the first network element is the NEF network element, and the second network element is the RAN network element. FIG. 10 is still another schematic flowchart of a communication method according to an embodiment of this application. As shown in FIG. 10, the communication method may include S1001 to S1009.

S1001: The third-party entity sends a request message 1 to the NEF network element, where the request message 1 indicates a request for obtaining first sensing data.

Correspondingly, the NEF network element may receive the request message 1 from the third-party entity.

S1002: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

For S1001 and S1002, refer to S701 and S702. Details are not described again.

S1003: The SSCF network element sends a control message 1 to the RAN network element, where the control message 1 indicates to receive a sensing signal and send the first sensing data.

The control message 1 may be the foregoing first control message. For example, the control message 1 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 1 from the SSCF network element.

Optionally, the SSCF network element may further send a control message to the SDPF network element, to indicate the SDPF network element to process sensing data.

S1004: The SSCF network element sends a response message 1 to the NEF network element, where the response message 1 indicates a topic 1, and the topic 1 is for subscribing to the first sensing data from the DCP network element.

The topic 1 is a publish topic of the first sensing data in the DCP network element, and the first sensing data is from the SDPF network element. For details, refer to the following steps.

For example, the response message 1 may be the foregoing "Nsscf_SensingService_Response" interface message.

Correspondingly, the NEF network element receives the response message 1.

A sequence of S1003 and S1004 is not limited.

S1005: The NEF network element sends a subscription request message 1 to the DCP network element, where the subscription request message 1 indicates the topic 1, to subscribe to the first sensing data from the DCP network element.

Correspondingly, the DCP network element receives the subscription request message 1.

After receiving the subscription request message 1, the DCP network element may perform S1006.

S1006: The DCP network element sends a subscription response message 1 to the NEF network element.

Optionally, the subscription response message 1 indicates that the receiving of the subscription request message 1 is acknowledged.

Correspondingly, the NEF network element receives the subscription response message 1.

S1007: The RAN network element sends the first sensing data to the DCP network element, where the publish topic of the first sensing data in the DCP network element is the topic 1.

In other words, the RAN network element sends the first sensing data to the DCP network element based on the topic 1. The first sensing data is raw sensing data obtained by the RAN network element or sensing data processed by the RAN network element.

Correspondingly, the DCP network element receives the first sensing data published based on the topic 1.

S1008: The DCP network element sends the first sensing data to the NEF network element.

For example, the DCP network element has received the subscription request message 1. After receiving the first sensing data, the DCP network element may send the first sensing data to the NEF network element.

Correspondingly, the NEF network element receives the first sensing data.

S1009: The NEF network element sends the first sensing data to the third-party entity.

Correspondingly, the third-party entity receives the first sensing data.

Optionally, in the procedure shown in FIG. 10, the control message 1 sent by the SSCF network element to the RAN network element in S1003 may indicate the RAN network element to send the sensing data to the DCP network element after a specific delay, so that a sensing data subscription procedure (for example, S1005 and S1006) can be completed in a timely manner between the NEF network element and the DCP network element. When receiving the first sensing data, the DCP network element can normally send the first sensing data to the NEF network element instead of discarding the data.

Alternatively, an occasion on which the SSCF network element sends the control message 1 to the RAN network element in S1003 may be after the SSCF network element sends the response message 1 to the NEF network element in S1004, so that a sensing data subscription procedure can be completed in a timely manner between the NEF network element and the DCP network element. When receiving the first sensing data, the DCP network element can normally send the first sensing data to the NEF network element instead of discarding the data.

An execution sequence of the foregoing steps is not limited in this application.

In the procedure shown in FIG. 10, the RAN network element that serves as the receive sensing entity may publish the first sensing data to the DCP network element, and the NEF network element may subscribe to and obtain the first sensing data from the DCP network element.

With reference to the procedures shown in FIG. 9 and FIG. 10, it can be seen that in this embodiment of this application, the second network element (the RAN network element or the SDPF network element) may send the first sensing data to the first network element via the DCP network element. In other words, the second network element may publish the first sensing data to the DCP network element, and the first network element may subscribe to and obtain the first sensing data from the DCP network element.

For example, in the communication method, the SSCF network element may send a first response message to the first network element, and the first network element may receive the first response message. The first response message indicates the first topic, and the first topic is for subscribing to the first sensing data from the DCP network element. The first topic is the publish topic of the first sensing data in the DCP network element, and the first sensing data is from the second network element. That the second network element sends the first sensing data may mean: The second network element sends the first sensing data to the DCP network element based on the first topic. The DCP network element may receive the first sensing data from the second network element, where the first sensing data is published based on the first topic. After receiving the first response message, the first network element may send a subscription request message to the DCP network element, and the DCP network element may receive the subscription request message. The subscription request message indicates the first topic, and is for subscribing to the first sensing data from the DCP network element. After receiving the subscription request message, the DCP network element may send a subscription response message to the first network element, and send the subscription response message to the first network element. Correspondingly, the first network element receives the subscription response message. That the first network element receives the first sensing data from the second network element may include: The first network element receives the first sensing data sent by the DCP network element, where the first sensing data is from the second network element.

For example, in the procedure shown in FIG. 9, the first response message may be the response message 1 sent by the SSCF network element to the NEF network element, the first topic may be the topic 1, the subscription request message may be the subscription request message 1 sent by the NEF network element to the DCP network element, and the subscription response message may be the subscription response message 1 sent by the DCP network element to the NEF network element.

In the foregoing embodiment in which the second network element (the RAN network element or the SDPF network element) sends the first sensing data to the first network element via the DCP network element, when the sensing data is exposed or transmitted to the data requester (for example, the third-party entity), data transmission efficiency can be improved via the DCP network element. In addition, the DCP network element may support a plurality of transport protocols, to meet requirements in different service scenarios.

Optionally, in the foregoing embodiment in which the second network element sends the first sensing data to the first network element via the DCP network element, the first control message received by the second network element may specifically indicate the second network element to publish the first sensing data to the DCP network element based on the first topic. The second network element may determine, based on the indication of the first control message, that the first sensing data needs to be published to the DCP network element based on the first topic.

For example, the first control message may carry or indicate the first topic. For example, the first control message may include a field, where the field indicates the first topic.

Optionally, in this embodiment of this application, when sending the sensing data to the SDPF network element, the RAN network element that serves as the receive sensing entity may also send the sensing data to the SDPF network element via the DCP network element in a topic publishing and subscription manner. Details are not described herein.

Optionally, in some other embodiments, when the first network element is the NF network element inside the network (in other words, data exposure is performed in the network), the second network element may alternatively store/send the first sensing data to an analytics data repository function (analytics data repository function, ADRF) network element, and the NF network element obtains the first sensing data from the ADRF network element. The second network element may be the SDPF network element or the RAN network element that serves as the receive sensing entity.

For example, in the communication method, the SSCF network element may send a first response message to the first network element, and the first network element may receive the first response message. The first response message indicates to obtain the first sensing data from the ADRF network element, and the first sensing data in the ADRF network element is from the second network element. That the second network element sends the first sensing data may mean: The second network element sends the first sensing data to the ADRF network element. The ADRF network element may receive the first sensing data from the second network element. After receiving the first response message, the first network element may send a sensing data request message to the ADRF network element, and the ADRF network element may receive the sensing data request message. The sensing data request message is for requesting to obtain the first sensing data. After receiving the sensing data request message, the ADRF network element may send a sensing data response message to the first network element, and the first network element may receive the sensing data response message. The sensing data response message includes the first sensing data. In other words, that the first network element receives the first sensing data from the second network element may include: receiving the sensing data response message from the ADRF network element, where the sensing data response message includes the first sensing data. The first sensing data in the ADRF network element is from the second network element.

The first network element may be the NF network element inside the network.

The following describes an example of a process in which the second network element stores the first sensing data to the ADRF network element and the NF network element obtains the first sensing data from the ADRF network element.

For example, the second network element is the SDPF network element. FIG. 11 is still another schematic flowchart of a communication method according to an embodiment of this application. As shown in FIG. 11, the communication method may include S1101 to S1108.

S1101: The NF network element sends a request message 1 to the SSCF network element, where the request message 1 indicates a request for obtaining first sensing data.

The request message 1 may be the foregoing first request message.

Correspondingly, the SSCF network element may receive the request message 1 from the NF network element.

S1102: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

S1103: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S1101 to S1103, refer to the descriptions in S501 to S503. Details are not described again.

S1104: The SSCF network element sends a response message 1 to the NF network element, where the response message 1 indicates to obtain the first sensing data from the ADRF network element.

Correspondingly, the NF network element receives the response message 1. The response message 1 may be a response message for the request message 1. The response message 1 may be referred to as the foregoing first response message.

An execution sequence of S1102 to S1104 is not limited. For example, S1104 may be performed before S1102 and S1103.

S1105: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S1106.

S1106: The SDPF network element sends the first sensing data to the ADFR network element.

The first sensing data is the sensing data processed by the SDPF network element.

Correspondingly, the ADFR network element receives and stores the first sensing data.

For example, the SDPF network element may send a data management storage request interface message to the ADFR network element, where the message includes the first sensing data. For example, the data management storage request interface may be an "Nadrf_DataManagement_StorageRequest" interface.

Optionally, the ADRF network element may return a response message to the SDPF network element, to indicate that the receiving of the first sensing data is acknowledged. For example, the response message may be an "Nadrf_DataManagement_StorageResponse" interface message.

The NF network element may perform S1107 based on the indication of the response message 1 sent by the SSCF network element.

S1107: The NF network element sends a request message 2 to the ADRF network element, where the request message 2 indicates the request for obtaining the first sensing data.

Correspondingly, the ADRF network element receives the request message 2. The request message 2 may be referred to as the foregoing sensing data request message.

For example, the request message 2 may be a data management retrieval request interface message. For example, the data management retrieval request interface may be an "Nadrf_DataManagement_RetrievalRequest" interface.

Optionally, the request message 2 may include a newly added field, and the field indicates that the first sensing data is to be obtained. Alternatively, the request message 2 may include a field obtained by modifying or extending an existing field, to indicatethat the first sensing data is to be obtained.

After receiving the request message 2, the ADRF network element may perform S1108 to return the first sensing data to the NF network element.

Optionally, S1107 may alternatively be performed before S1105, S1106, or the like. An execution order of S1107 is not limited in this application. For example, after receiving the response message 1 from the SSCF network element, and knowing that the first sensing data may be obtained from the ADRF network element, the NF network element may perform S1107. If the ADRF network element has not received the first sensing data in this case, the ADRF network element may return an empty result to the NF network element.

S1108: The ADRF network element sends a response message 2 to the NF network element, where the response message 2 includes the first sensing data.

Correspondingly, the NF network element receives the response message 2, to receive the first sensing data.

The response message 2 may be the foregoing sensing data response message.

For example, the response message 2 may be a data management retrieval response interface message. For example, the data management retrieval response interface may be an "Nadrf_DataManagement_RetrievalResponse" interface.

In the procedure shown in FIG. 11, the SDPF network element may store the first sensing data to the ADRF network element, and the NF network element obtains the first sensing data from the ADRF network element.

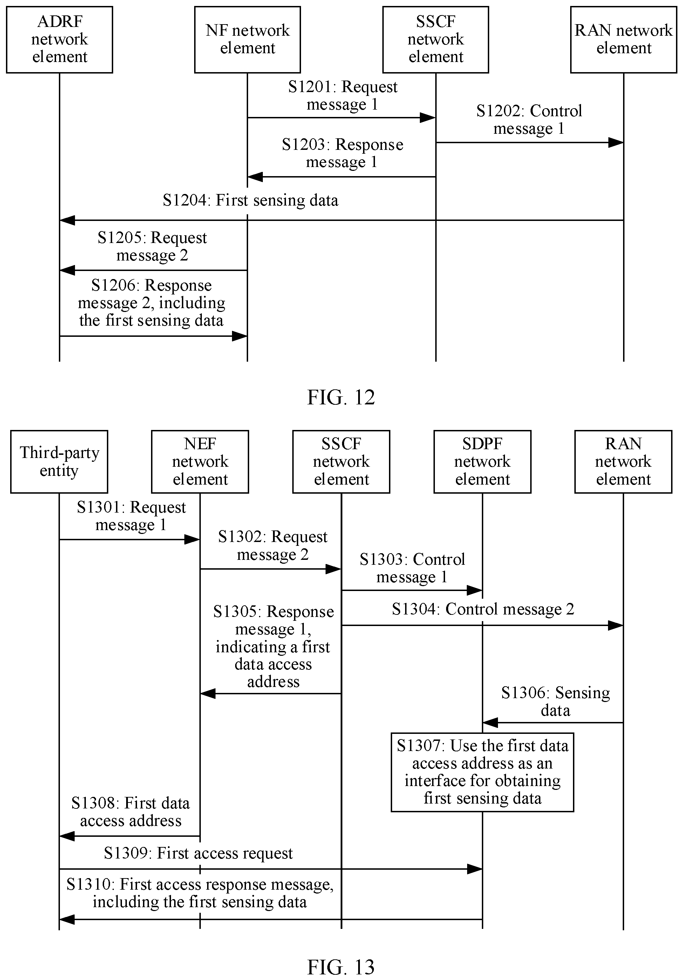

For another example, the second network element is the RAN network element. FIG. 12 is still another schematic flowchart of a communication method according to an embodiment of this application. As shown in FIG. 12, the communication method may include S1201 to S1206.

S1201: The NF network element sends a request message 1 to the SSCF network element, where the request message 1 indicates a request for obtaining first sensing data.

The request message 1 may be the foregoing first request message.

Correspondingly, the SSCF network element may receive the request message 1 from the NF network element.

S1202: The SSCF network element sends a control message 1 to the RAN network element, where the control message 1 indicates to receive a sensing signal and send the first sensing data.

The control message 1 may be the foregoing first control message. The control message 1 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 1 from the SSCF network element.

For S1201 and S1202, refer to the descriptions in S601 and S602. Details are not described again.

S1203: The SSCF network element sends a response message 1 to the NF network element, where the response message 1 indicates to obtain the first sensing data from the ADRF network element.

Correspondingly, the NF network element receives the response message 1. The response message 1 may be a response message for the request message 1. The response message 1 may be referred to as the foregoing first response message.

An execution sequence of S1202 and S1203 is not limited. For example, S1203 may be performed before S1202.

S1204: The RAN network element sends the first sensing data to the ADFR network element.

Correspondingly, the ADFR network element receives and stores the first sensing data.

As described above, the first sensing data may be raw sensing data obtained by the RAN network element or sensing data processed by the RAN network element.

For example, the RAN network element may send a data management storage request interface message to the ADFR network element, where the message includes the first sensing data. For example, the data management storage request interface may be an "Nadrf_DataManagement_StorageRequest" interface.

Optionally, the ADRF network element may return a response message to the RAN network element, to indicate that the receiving of the first sensing data is acknowledged. For example, the response message may be an "Nadrf_DataManagement_StorageResponse" interface message.

The NF network element may perform S1205 based on the indication of the response message 1 sent by the SSCF network element.

S1205: The NF network element sends a request message 2 to the ADRF network element, where the request message 2 indicates the request for obtaining the first sensing data.

Correspondingly, the ADRF network element receives the request message 2. The request message 2 may be referred to as the foregoing sensing data request message.

For example, the request message 2 may be a data management retrieval request interface message. For example, the data management retrieval request interface may be an "Nadrf_DataManagement_RetrievalRequest" interface.

Optionally, the request message 2 may include a newly added field, and the field indicates that the first sensing data is to be obtained. Alternatively, the request message 2 may include a field obtained by modifying or extending an existing field, to indicatethat the first sensing data is to be obtained.

After receiving the request message 2, the ADRF network element may perform S1206 to return the first sensing data to the NF network element.

Optionally, S1205 may alternatively be performed before S1204. An execution order of S1205 is not limited in this application. For example, after receiving the response message 1 from the SSCF network element, and knowing that the first sensing data may be obtained from the ADRF network element, the NF network element may perform S1205. If the ADRF network element has not received the first sensing data in this case, the ADRF network element may return an empty result to the NF network element.

S1206: The ADRF network element sends a response message 2 to the NF network element, where the response message 2 includes the first sensing data.

Correspondingly, the NF network element receives the response message 2, to receive the first sensing data.

The response message 2 may be the foregoing sensing data response message.

For example, the response message 2 may be a data management retrieval response interface message. For example, the data management retrieval response interface may be an "Nadrf_DataManagement_RetrievalResponse" interface.

In the procedure shown in FIG. 12, the RAN network element that serves as the receive sensing entity may store the first sensing data to the ADRF network element, and the NF network element obtains the first sensing data from the ADRF network element.

Optionally, in the foregoing embodiment in which the second network element stores the first sensing data to the ADRF network element and the NF network element obtains the first sensing data from the ADRF network element, the first control message received by the second network element may specifically indicate the second network element to send the first sensing data to the ADFR network element. The second network element may determine , based on the indication of the first control message, that the first sensing data needs to be sent to theADFR network element.

Optionally, in some other embodiments, the second network element may alternatively provide a data access address. The second network element may use the data access address provided by the second network element as an interface for obtaining the first sensing data. The SSCF network element may send, to the first network element, the data access address provided by the second network element, to send the first sensing data to the data requester. For example, when the first network element is the NEF network element, the first network element may send, to the third-party entity, the data access address provided by the second network element, and the third-party entity may access the data access address provided by the second network element, to obtain the first sensing data. Alternatively, when the first network element is the third-party entity, the third-party entity may directly access the data access address provided by the second network element, to obtain the first sensing data. The second network element may be the SDPF network element or the RAN network element that serves as the receive sensing entity.

For example, the data access address provided by the second network element may be referred to as a first data access address. In the communication method, the SSCF network element may send a first response message to the first network element, and the first network element may receive the first response message. The first response message indicates the first data access address. The first data access address is provided by the second network element, and is for obtaining the first sensing data. That the second network element sends the first sensing data may include: using the first data access address as the interface for obtaining the first sensing data.

When the first network element is the NEF network element, the first data access address may be sent to the third-party entity. The third-party entity may send a first access request based on the first data access address, where the first access request is for requesting to obtain the first sensing data. The second network element may receive the first access request. After receiving the first access request, the second network element may return a first access response message to the third-party entity. The first access response message includes the first sensing data. The third-party entity may receive the first access response message, to receive the first sensing data from the second network element.

When the first network element is the third-party entity, the third-party entity may directly obtain the first data access address based on the first response message sent by the SSCF network element, and send a first access request based on the first data access address. The first access request is for requesting to obtain the first sensing data. The second network element may receive the first access request. After receiving the first access request, the second network element may return a first access response message to the third-party entity. The first access response message includes the first sensing data. The third-party entity may receive the first access response message, to receive the first sensing data from the second network element.

Optionally, the first data access address may be sent by the second network element to the SSCF network element. For example, after receiving the first control message from the SSCF, the second network element may send a first control response message to the SSCF network element, where the first control response message indicates the first data access address. The SSCF network element may receive the first control response message. After obtaining the first data access address, the SSCF network element may send the first response message to the first network element.

Alternatively, the first data access address may be obtained in advance by the SSCF network element. For example, address interfaces corresponding to different sensing services may be configured or predefined in the SSCF network element, and all the address interfaces are provided by the SDPF network element. In other words, the first data access address provided by the SDPF network element may be configured or predefined in the SSCF network element. A manner in which the SSCF network element obtains the first data access address is not limited in this application.

The following uses an example in which the first network element is the NEF network element, the second network element is the SDPF network element, and the third-party entity sends a sensing service request to the SSCF network element via the NEF network element, to describe a process in which the second network element provides the first data access address and the third-party entity accesses the first data access address to obtain the first sensing data. A case in which the first network element is the third-party entity is similar to this case, and a difference lies in that the third-party entity interacts with the SSCF network element not via the NEF network element. Details are not described.

For example, the first network element is the NEF network element, and the second network element is the SDPF network element. FIG. 13 is still another schematic flowchart of a communication method according to an embodiment of this application. As shown in FIG. 13, the communication method may include S1301 to S1310.

S1301: The third-party entity sends a request message 1 to the NEF network element, where the request message 1 indicates a request for obtaining first sensing data.

Correspondingly, the NEF network element may receive the request message 1 from the third-party entity.

S1302: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

S1303: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

Optionally, the SDPF network element may return a response message, for example, a first control response message, to the SSCF network element, where the response message indicates a first data access address provided by the SDPF network element.

S1304: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S1301 to S1304, refer to S701 to S704. Details are not described again.

S1305: The SSCF network element sends a response message 1 to the NEF network element, where the response message 1 indicates the first data access address.

The response message 1 may be a response message for the request message 2. In this embodiment, the response message 1 may be referred to as a first response message. The first data access address is provided by the SDPF network element.

Correspondingly, the NEF network element receives the response message 1.

An execution sequence of S1303 to S1305 is not limited.

S1306: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S1307.

S1307: The SDPF network element uses the first data access address as an interface for obtaining the first sensing data.

The first sensing data is the sensing data processed by the SDPF network element.

S1308: The NEF network element sends the first data access address to the third-party entity.

Correspondingly, the third-party entity receives the first data access address.

Optionally, S1308 may alternatively be performed before S1306, S1307, or the like. An execution order of S1308 is not limited in this application. For example, after receiving the response message 1 from the SSCF network element and determining the first data access address, the NEF network element may perform S1308 to send the first data access address to the third-party entity.

For example, the first data access address may be sent in a response message sent by the NEF network element to the third-party entity, and the response message may be a response message for the request message 1.

S1309: The third-party entity sends a first access request based on the first data access address.

The first access request is for requesting to obtain the first sensing data.

For example, the third-party entity may access the first data access address to obtain the first sensing data.

Correspondingly, the SDPF network element receives the first data access request.

S1310: The SDPF network element sends a first access response message to the third-party entity, where the first access response message includes the first sensing data.

Correspondingly, the third-party entity receives the first access response message, to receive the first sensing data.

In the procedure shown in FIG. 13, the SDPF network element may provide the first data access address as the interface for accessing the first sensing data, and the third-party entity may actively obtain the first sensing data by accessing the first data access address.

Optionally, a case in which the second network element is the RAN network element that serves as the receive sensing entity is similar to the case, shown in FIG. 13, in which the second network element is the SDPF network element, and a difference lies in that the first data access address is provided by the RAN network element, and the first sensing data may be the raw sensing data obtained by the RAN network element or the sensing data processed by the RAN network element. For details, refer to the descriptions in the foregoing related embodiment in which the second network element is the RAN network element, and the details are not described herein again.

It should be noted that when the third-party entity accesses the first data access address, if the first sensing data has not been prepared, the second network element (for example, the SDPF network element) may return a special error code to the third-party entity. Alternatively, the third-party entity may be indicated to send the first access request again after specific duration, to obtain the first sensing data.

In the foregoing embodiment in which the second network element provides the first data access address as the interface for accessing the first sensing data and the third-party entity actively obtains the first sensing data by accessing the first data access address, the third-party entity may flexibly select, based on a requirement, an occasion for actively obtaining the first sensing data. For example, the third-party entity may select, based on a traffic condition of the third-party entity, an appropriate occasion for sending the first access request, to avoid overload caused by an excessively large data volume.

Optionally, in the foregoing embodiment in which the second network element provides the first data access address as the interface for accessing the first sensing data and the third-party entity actively obtains the first sensing data by accessing the first data access address, the first control message sent by the SSCF network element to the second network element may specifically indicate to use the first data access address as the interface for obtaining the first sensing data. In other words, the first control message may specifically indicate the second network element to provide the data access address as the interface for obtaining the first sensing data.

Optionally, in some other embodiments, the second network element may alternatively transmit the first sensing data to a user plane function (user plane function, UPF) network element. The UPF network element may provide a data access address, and the UPF network element may use the data access address provided by the UPF network element as an interface for obtaining the first sensing data. The SSCF network element may send, to the first network element, the data access address provided by the UPF network element, to send the first sensing data to the data requester. For example, when the first network element is the NEF network element, the first network element may send, to the third-party entity, the data access address provided by the UPF network element, and the third-party entity may access the data access address provided by the UPF network element, to obtain the first sensing data. Alternatively, when the first network element is the third-party entity, the third-party entity may directly access the data access address provided by the UPF network element, to obtain the first sensing data. The second network element may be the SDPF network element or the RAN network element that serves as the receive sensing entity.

For example, the data access address provided by the UPF network element may be referred to as a first data access address. In the communication method, the SSCF network element may send a first response message to the first network element, and the first network element may receive the first response message. The first response message indicates the first data access address. The first data access address is provided by the UPF network element, and is for obtaining the first sensing data. That the second network element sends the first sensing data may include: sending the first sensing data to the UPF network element. The UPF network element may receive the first sensing data from the second network element. After receiving the first sensing data, the UPF network element may use the first data access address as the interface for obtaining the first sensing data.

When the first network element is the NEF network element, the first data access address may be sent to the third-party entity. The third-party entity may send a first access request based on the first data access address, where the first access request is for requesting to obtain the first sensing data. The UPF network element may receive the first access request. After receiving the first access request, the UPF may return a first access response message to the third-party entity. The first access response message includes the first sensing data. The third-party entity may receive the first access response message, to receive the first sensing data.

When the first network element is the third-party entity, the third-party entity may directly obtain the first data access address based on the first response message sent by the SSCF network element, and send a first access request based on the first data access address. The first access request is for requesting to obtain the first sensing data. The UPF network element may receive the first access request. After receiving the first access request, the UPF network element may return a first access response message to the third-party entity. The first access response message includes the first sensing data. The third-party entity may receive the first access response message, to receive the first sensing data.

Optionally, the SSCF network element may further send a control message, for example, referred to as a second control message, to the UPF network element, to indicate the UPF network element to send the first sensing data. Correspondingly, the UPF network element receives the second control message, where the second control message indicates to send the first sensing data.

Optionally, the first data access address may be sent by the UPF network element to the SSCF network element. For example, after receiving the second control message from the SSCF, the UPF network element may send a second control response message to the SSCF network element, where the second control response message indicates the first data access address provided by the UPF network element. The SSCF network element may receive the second control response message. After obtaining the first data access address, the SSCF network element may send the first response message to the first network element.

Alternatively, the first data access address may be obtained in advance by the SSCF network element. For example, address interfaces corresponding to different sensing services may be configured or predefined in the SSCF network element, and all the address interfaces are provided by the UPF network element. In other words, the first data access address provided by the UPF network element may be configured or predefined in the SSCF network element. A manner in which the SSCF network element obtains the first data access address is not limited in this application.

The following uses an example in which the first network element is the NEF network element, the second network element is the SDPF network element, and the third-party entity sends a sensing service request to the SSCF network element via the NEF network element, to describe a process in which the UPF network element provides the first data access address and the third-party entity accesses the first data access address to obtain the first sensing data. A case in which the first network element is the third-party entity is similar to this case, and a difference lies in that the third-party entity interacts with the SSCF network element not via the NEF network element. Details are not described.

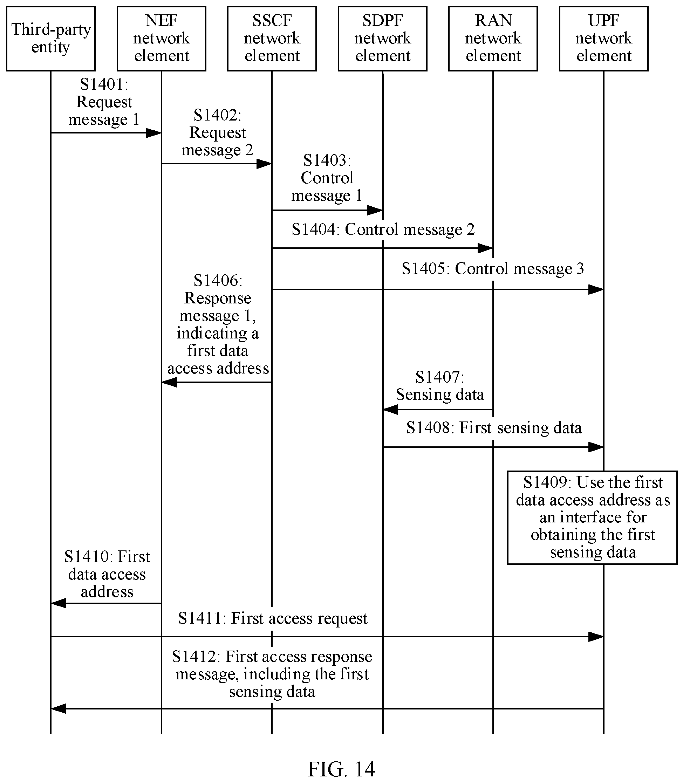

For example, the first network element is the NEF network element, and the second network element is the SDPF network element. FIG. 14 is still another schematic flowchart of a communication method according to an embodiment of this application. As shown in FIG. 14, the communication method may include S1401 to S1412.

S1401: The third-party entity sends a request message 1 to the NEF network element, where the request message 1 indicates a request for obtaining first sensing data.

Correspondingly, the NEF network element may receive the request message 1 from the third-party entity.

S1402: The NEF network element sends a request message 2 to the SSCF network element, where the request message 2 indicates the request for obtaining the first sensing data.

The request message 2 may be the foregoing first request message.

Correspondingly, the SSCF network element may receive the request message 2 from the NEF network element.

S1403: The SSCF network element sends a control message 1 to the SDPF network element, where the control message 1 indicates to send the first sensing data.

The control message 1 may be the foregoing first control message.

Correspondingly, the SDPF network element may receive the control message 1 from the SSCF network element.

S1404: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S1401 to S1404, refer to S701 to S704. Details are not described again.

S1405: The SSCF network element sends a control message 3 to the UPF network element, where the control message 3 indicates to send the first sensing data.

The control message 3 may be the foregoing second control message.

Correspondingly, the UPF network element may receive the control message 3 from the SSCF network element.

Optionally, the UPF network element may return a response message, for example, a second control response message, to the SSCF network element, where the response message indicates a first data access address provided by the UPF network element.

S1406: The SSCF network element sends a response message 1 to the NEF network element, where the response message 1 indicates the first data access address.

The response message 1 may be a response message for the request message 2. In this embodiment, the response message 1 may be referred to as a first response message. The first data access address is provided by the UPF network element.

Correspondingly, the NEF network element receives the response message 1.

An execution sequence of S1403 to S1406 is not limited.

S1407: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S1408.

S1408: The SDPF network element sends the first sensing data to the UPF network element.

The first sensing data is the sensing data processed by the SDPF network element.

Correspondingly, the UPF network element receives the first sensing data.

S1409: The UPF network element uses the first data access address as an interface for obtaining the first sensing data.

S1410: The NEF network element sends the first data access address to the third-party entity.

Correspondingly, the third-party entity receives the first data access address.

Optionally, S1410 may alternatively be performed before S1407, S1408, S1409, or the like. An execution order of S1410 is not limited in this application. For example, after receiving the response message 1 from the SSCF network element and determining the first data access address, the NEF network element may perform S1410 to send the first data access address to the third-party entity.

S1411: The third-party entity sends a first access request based on the first data access address.

The first access request is for requesting to obtain the first sensing data.

For example, the third-party entity may access the first data access address to obtain the first sensing data.

Correspondingly, the UPF network element receives the first data access request.

S1412: The UPF network element sends a first access response message to the third-party entity, where the first access response message includes the first sensing data.

Correspondingly, the third-party entity receives the first access response message, to receive the first sensing data.

In the procedure shown in FIG. 14, the UPF network element may provide the first data access address as the interface for accessing the first sensing data, and the third-party entity may actively obtain the first sensing data by accessing the first data access address.

Optionally, a case in which the second network element is the RAN network element that serves as the receive sensing entity is similar to the case, shown in FIG. 14, in which the second network element is the SDPF network element, and a difference lies in that the first sensing data in the UPF network element is from the RAN network element, in other words, the RAN network element sends the first sensing data to the UPF network element, and the first sensing data may be the raw sensing data obtained by the RAN network element or the sensing data processed by the RAN network element. For details, refer to the descriptions in the foregoing related embodiment in which the second network element is the RAN network element, and the details are not described herein again.

It should be noted that when the third-party entity accesses the first data access address, if the first sensing data has not been prepared, the UPF network element may return a special error code to the third-party entity. Alternatively, the third-party entity may be indicated to send the first access request again after specific duration, to obtain the first sensing data.

In the foregoing embodiment in which the UPF network element provides the first data access address as the interface for accessing the first sensing data and the third-party entity actively obtains the first sensing data by accessing the first data access address, the third-party entity may flexibly select, based on a requirement, an occasion for actively obtaining the first sensing data. For example, the third-party entity may select, based on a traffic condition of the third-party entity, an appropriate occasion for sending the first access request, to avoid overload caused by an excessively large data volume.

Optionally, in the foregoing embodiment in which the UPF network element provides the first data access address as the interface for accessing the first sensing data and the third-party entity actively obtains the first sensing data by accessing the first data access address, the first control message sent by the SSCF network element to the second network element may specifically indicate to send the first sensing data to the UPF network element. The second control message sent by the SSCF network element to the UPF network element may specifically indicate to use the first data access address as the interface for obtaining the first sensing data. In other words, the second control message may specifically indicate the UPF network element to provide the data access address as the interface for obtaining the first sensing data.

In a possible design, in the foregoing embodiment in which the UPF network element provides the first data access address as the interface for accessing the first sensing data and the third-party entity actively obtains the first sensing data by accessing the first data access address, when sending the first sensing data to the UPF network element, the second network element (for example, the SDPF network element or the RAN network element) may send the first sensing data to the UPF network element through a general packet radio service tunneling protocol-user plane (general packet radio service tunneling protocol-user plane, GTP-U) tunnel. Correspondingly, the UPF network element receives the first sensing data through the GTP-U tunnel. The general packet radio service is referred to as GPRS for short.

For example, a GTP-U tunneling protocol uses two layers of encapsulation addresses that are respectively an inner encapsulation address and an outer encapsulation address. The inner encapsulation address is a source IP address and a destination IP address of a user data packet, and may identify an actual source and an actual destination of the user data packet. The outer encapsulation address is a source IP address and a destination IP address that are used in a transmission process using the GTP-U tunnel, and may identify a source and a destination of the GTP-U tunnel.

In this embodiment, the second network element (for example, the SDPF network element or the RAN network element) may encapsulate the first sensing data, to obtain a data packet for the first sensing data. In the inner encapsulation address, the source IP address may be an IP address of the second network element, and the destination IP address may be an IP address of the UPF network element. In the outer encapsulation address, the source IP address may also be the IP address of the second network element, and the destination IP address may also be the IP address of the UPF network element. The second network element may send the data packet for the first sensing data to the UPF network element through the GTP-U tunnel.

It should be understood that, before the second network element sends the first sensing data to the UPF network element through the GTP-U tunnel, the GTP-U tunnel needs to be established in advance between the second network element and the UPF network element. In some implementations, after receiving the first control message from the SSCF network element, the second network element may send a GTP-U tunnel establishment request message to the UPF network element, and the UPF network element may return a GTP-U tunnel establishment response message to the second network element, so that the GTP-U tunnel is established between the second network element and the UPF network element. Alternatively, after receiving the second control message from the SSCF network element, the UPF network element may send a GTP-U tunnel establishment request message to the second network element, and the second network element may return a GTP-U tunnel establishment response message to the UPF network element, so that the GTP-U tunnel is established between the UPF network element and the second network element. Alternatively, the GTP-U tunnel may be established in advance. An occasion for and a manner of establishing the GTP-U tunnel are not limited in this application.

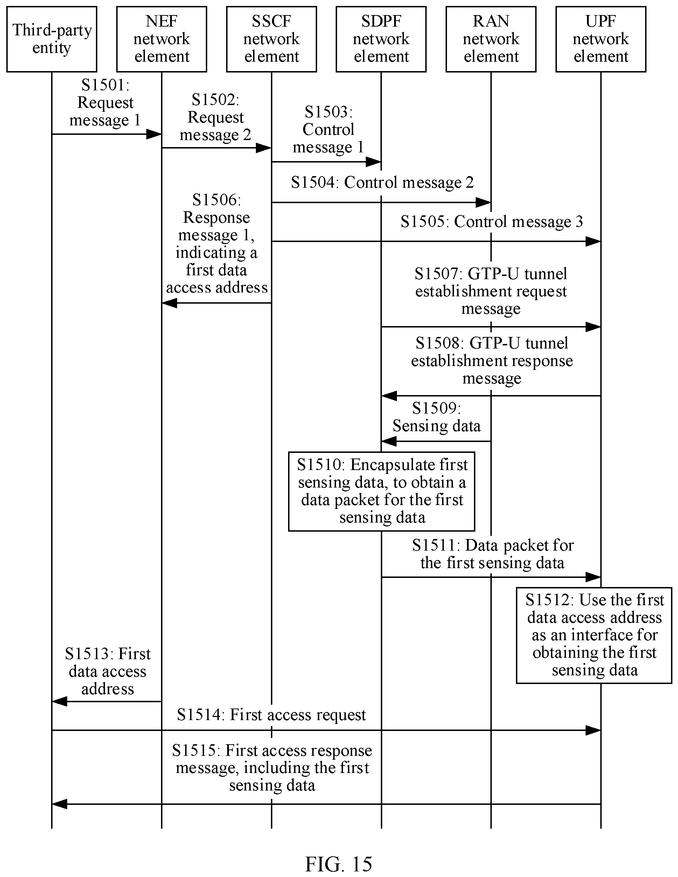

For example, the first network element is the NEF network element, and the second network element is the SDPF network element. FIG. 15 is still another schematic flowchart of a communication method according to an embodiment of this application. As shown in FIG. 15, the communication method may include S1501 to S1515.

S1501: The third-party entity sends a request message 1 to the NEF network element, where the request message 1 indicates a request for obtaining first sensing data.

Correspondingly, the NEF network element may receive the request message 1 from the third-party entity.

S1502: The NEF network element sends a request message 2 to the SSCF network element, where the request message 2 indicates the request for obtaining the first sensing data.

Correspondingly, the SSCF network element may receive the request message 2 from the NEF network element.

S1503: The SSCF network element sends a control message 1 to the SDPF network element, where the control message 1 indicates to send the first sensing data.

Correspondingly, the SDPF network element may receive the control message 1 from the SSCF network element.

S1504: The SSCF network element sends a control message 2 to the RAN network element, where the control message 2 indicates to receive a sensing signal.

Correspondingly, the RAN network element may receive the control message 2 from the SSCF network element.

S1505: The SSCF network element sends a control message 3 to the UPF network element, where the control message 3 indicates to send the first sensing data.

Correspondingly, the UPF network element may receive the control message 3 from the SSCF network element.

S1506: The SSCF network element sends a response message 1 to the NEF network element, where the response message 1 indicates a first data access address.

Correspondingly, the NEF network element receives the response message 1.

For S1501 to S1506, refer to S1401 to S1406. Details are not described again.

S1507: The SDPF network element sends a GTP-U tunnel establishment request message to the UPF network element, where the GTP-U tunnel establishment request message indicates a request for establishing a GTP-U tunnel.

Correspondingly, the UPF network element receives the GTP-U tunnel establishment request message.

S1508: The UPF network element sends a GTP-U tunnel establishment response message to the SDPF network element, where the GTP-U tunnel establishment response message indicates that the establishment of the GTP-U tunnel is acknowledged.

Correspondingly, the SDPF network element receives the GTP-U tunnel establishment response message.

It should be understood that S1507 and S1508 may be performed at any time before S1510 in FIG. 15, and execution timing (and an execution order relative to other steps) of S1507 and S1508 is not limited.

S1509: The RAN network element sends sensing data to the SDPF network element.

Correspondingly, the SDPF network element may receive and process the sensing data to obtain processed sensing data.

For S1509, refer to the descriptions in S1407. Details are not described again.

After obtaining the processed sensing data, the SDPF network element may perform S1510.

S1510: The SDPF network element encapsulates the first sensing data, to obtain a data packet for the first sensing data.

The first sensing data is the sensing data processed by the SDPF network element. For an inner encapsulation address and an outer encapsulation address of the first sensing data, refer to the foregoing descriptions. Details are not described again.

S1511: The SDPF network element sends the data packet for the first sensing data to the UPF network element.

Correspondingly, the UPF network element receives the data packet for the first sensing data.

After receiving the data packet for the first sensing data, the UPF network element may parse the data packet to obtain the first sensing data.

S1512: The UPF network element uses the first data access address as an interface for obtaining the first sensing data.

S1513: The NEF network element sends the first data access address to the third-party entity.

Correspondingly, the third-party entity receives the first data access address.

S1514: The third-party entity sends a first access request based on the first data access address.

The first access request is for requesting to obtain the first sensing data.

Correspondingly, the UPF network element receives the first data access request.

S1515: The UPF network element sends a first access response message to the third-party entity, where the first access response message includes the first sensing data.

Correspondingly, the third-party entity receives the first access response message, to receive the first sensing data.

For S1512 to S1515, refer to S1409 to S1412. Details are not described again.

In the procedure shown in FIG. 15, the GTP-U tunnel may be established between the SDPF network element and the UPF network element. The SDPF network element may send the first sensing data to the UPF network element through the GTP-U tunnel. The UPF network element may provide the first data access address as the interface for accessing the first sensing data. The third-party entity may actively obtain the first sensing data by accessing the first data access address.

The foregoing describes two solutions in which the second network element or the UPF network element provides the first data access address as the interface for accessing the first sensing data and the third-party entity actively obtains the first sensing data by accessing the first data access address.

Optionally, in some other embodiments, when sending a sensing service request, the data requester (for example, the third-party entity) may provide a data push address, and the data push address may be sent to the SSCF network element. The SSCF network element may send, to the second network element, the data push address provided by the data requester. The second network element may send the first sensing data to the data push address, to send the first sensing data to the data requester. For example, when the first network element is the NEF network element, the third-party entity may send, to the first network element, the data push address provided by the third-party entity, and the first network element may send, to the SSCF network element, the data push address provided by the third-party entity. Alternatively, when the first network element is the third-party entity, the third-party entity may directly send, to the SSCF network element, the data push address provided by the third-party entity. The second network element may be the SDPF network element or the RAN network element that serves as the receive sensing entity.

For example, the data push address provided by the third-party entity may be referred to as a first data push address. In the communication method, when the first network element is the NEF network element, the third-party entity may send the sensing service request (or referred to as a second request message) to the NEF network element, where the sensing service request carries or indicates the first data push address. The NEF network element may receive the sensing service request, and send the first request message to the SSCF network element, where the first request message indicates the request for obtaining the first sensing data, and indicates or carries the first data push address. The SSCF network element may receive the first request message, and send the first control message to the second network element, where the first control message indicates to send the first sensing data, and indicates the first data push address. The first data push address is used by the second network element to send the first sensing data. The second network element may receive the first control message. That the second network element sends the first sensing data may include: The second network element sends the first sensing data to the first data push address. The third-party entity may receive the first sensing data from the first data push address, to receive the first sensing data from the second network element.

When the first network element is the third-party entity, the third-party entity may directly send the first request message to the SSCF network element, where the first request message indicates the request for obtaining the first sensing data, and indicates or carries the first data push address. The SSCF network element may receive the first request message, and send the first control message to the second network element, where the first control message indicates to send the first sensing data, and indicates the first data push address. The first data push address is used by the second network element to send the first sensing data. The second network element may receive the first control message. That the second network element sends the first sensing data may include: The second network element sends the first sensing data to the first data push address. The third-party entity may receive the first sensing data from the first data push address, to receive the first sensing data from the second network element.

Optionally, the first data push address may alternatively be preconfigured, or may be sent to the SSCF network element and the second network element by using another message. For example, address interfaces corresponding to different sensing services may be configured or predefined in the SSCF network element or the second network element, and all the address interfaces are provided by the third-party entity. In other words, the first data push address provided by the third-party entity may be configured or predefined in the SSCF network element or the second network element. A manner in which the SSCF network element and the second network element obtain the first data push address is not limited in this application.

The following uses an example in which the first network element is the NEF network element, the second network element is the SDPF network element, and the third-party entity sends a sensing service request to the SSCF network element via the NEF network element, to describe a process in which the third-party entity provides the first data push address and the second network element sends the first sensing data to the first data push address to send the first sensing data to the third-party entity. A case in which the first network element is the third-party entity is similar to this case, and a difference lies in that the third-party entity interacts with the SSCF network element not via the NEF network element. Details are not described.

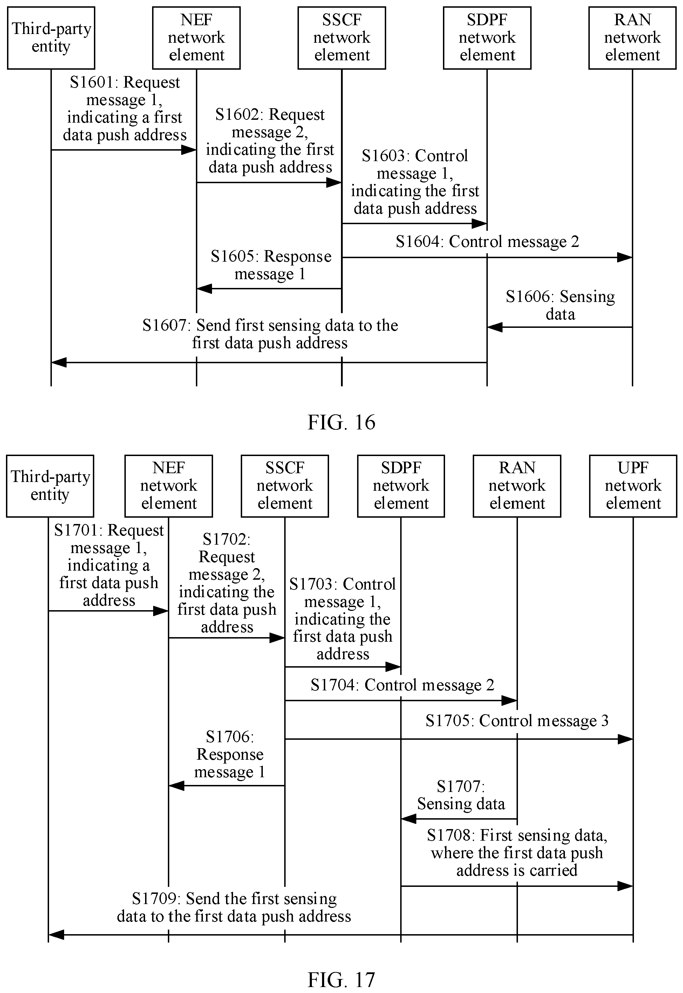

For example, the first network element is the NEF network element, and the second network element is the SDPF network element. FIG. 16 is still another schematic flowchart of a communication method according to an embodiment of this application. As shown in FIG. 16, the communication method may include S1601 to S1607.

S1601: The third-party entity sends a request message 1 to the NEF network element, where the request message 1 indicates a first data push address and a request for obtaining first sensing data.

The request message 1 may be referred to as a second request message, and the first data push address is provided by the third-party entity.

Correspondingly, the NEF network element may receive the request message 1 from the third-party entity.

S1602: The NEF network element sends a request message 2 to the SSCF network element, where the request message 2 indicates the first data push address and the request for obtaining the first sensing data.

The request message 2 may be the foregoing first request message.

Correspondingly, the SSCF network element may receive the request message 2 from the NEF network element.

S1603: The SSCF network element sends a control message 1 to the SDPF network element, where the control message 1 indicates the first data push address, and indicates to send the first sensing data.

The control message 1 may be the foregoing first control message.

Correspondingly, the SDPF network element may receive the control message 1 from the SSCF network element.

Optionally, the SDPF network element may return a response message to the SSCF network element.

S1604: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S1601 to S1604, refer to S701 to S704. A difference lies in that in S1601 to S1603, the messages indicate or carry the first data push address, where the first data push address is used by the SDPF network element to send the first sensing data. Other similar or same parts are not described again.

S1605: The SSCF network element sends a response message 1 to the NEF network element.

The response message 1 may be a response message for the request message 2. In this embodiment, the response message 1 may be referred to as a first response message. The corresponding message 1may indicate that receiving of the first data push address is acknowledged. Similarly, the NEF network element may send a response message to the third-party entity, to indicate that receiving of the first data push address is acknowledged. Alternatively, S1605 may not be performed. This is not limited herein.

Correspondingly, the NEF network element receives the response message 1.

An execution sequence of S1603 to S1605 is not limited.

S1606: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S1607.

S1607: The SDPF network element sends the first sensing data to the first data push address.

The first sensing data is the sensing data processed by the SDPF network element.

Correspondingly, the third-party entity may receive the first sensing data from the first data push address, to receive the first sensing data from the SDPF network element.

In the procedure shown in FIG. 16, the third-party entity may provide the first data push address as an interface for the SDPF network element to send the first sensing data, and the SDPF network element may send the first sensing data to the first data push address. The third-party entity may receive the first sensing data from the first data push address. In other words, the third-party entity may passively receive the first sensing data.

Optionally, a case in which the second network element is the RAN network element that serves as the receive sensing entity is similar to the case, shown in FIG. 16, in which the second network element is the SDPF network element, and a difference lies in that the RAN network element sends the first sensing data to the first data push address, and the first sensing data may be the raw sensing data obtained by the RAN network element or the sensing data processed by the RAN network element. For details, refer to the descriptions in the foregoing related embodiment in which the second network element is the RAN network element, and the details are not described herein again.

In the foregoing embodiment in which the third-party entity provides the first data push address, and the second network element sends the first sensing data to the first data push address to send the first sensing data to the third-party entity, the third-party entity may passively receive the first sensing data from the second network element by using the first data push address.

Optionally, in the foregoing embodiment in which the third-party entity provides the first data push address, and the second network element sends the first sensing data to the first data push address to send the first sensing data to the third-party entity, the first control message sent by the SSCF network element to the second network element may specifically indicate to send the first sensing data to the first data push address.

Optionally, in some other embodiments, when sending a sensing service request, the data requester (for example, the third-party entity) may provide a data push address, and the data push address may be sent to the SSCF network element. The SSCF network element may send, to a UPF network element, the data push address provided by the data requester. The second network element may transmit the first sensing data to the UPF network element, and the UPF network element may send the first sensing data to the data push address, to send the first sensing data to the data requester. For example, when the first network element is the NEF network element, the third-party entity may send, to the first network element, the data push address provided by the third-party entity, and the first network element may send, to the SSCF network element, the data push address provided by the third-party entity. Alternatively, when the first network element is the third-party entity, the third-party entity may directly send, to the SSCF network element, the data push address provided by the third-party entity. The second network element may be the SDPF network element or the RAN network element that serves as the receive sensing entity.

For example, the data push address provided by the third-party entity may be referred to as a first data push address. In the communication method, when the first network element is the NEF network element, the third-party entity may send the sensing service request (or referred to as a second request message) to the NEF network element, where the sensing service request carries or indicates the first data push address. The NEF network element may receive the sensing service request, and send the first request message to the SSCF network element, where the first request message indicates the request for obtaining the first sensing data, and indicates or carries the first data push address. The first data push address is used by the UPF network element to send the first sensing data. The SSCF network element may receive the first request message, and send the first control message to the second network element, where the first control message indicates to send the first sensing data. The second network element may receive the first control message. That the second network element sends the first sensing data may include: The second network element sends the first sensing data to the UPF network element. The UPF network element may receive the first sensing data, and send the first sensing data to the first data push address. The third-party entity may receive the first sensing data from the first data push address.

When the first network element is the third-party entity, the third-party entity may directly send the first request message to the SSCF network element, where the first request message indicates the request for obtaining the first sensing data, and indicates or carries the first data push address. The first data push address is used by the UPF network element to send the first sensing data. The SSCF network element may receive the first request message, and send the first control message to the second network element, where the first control message indicates to send the first sensing data. The second network element may receive the first control message. That the second network element sends the first sensing data may include: The second network element sends the first sensing data to the UPF network element. The UPF network element may receive the first sensing data, and send the first sensing data to the first data push address. The third-party entity may receive the first sensing data from the first data push address.

Optionally, the SSCF network element may further send a control message, for example, referred to as a second control message, to the UPF network element, to indicate the UPF network element to send the first sensing data. Correspondingly, the UPF network element receives the second control message, where the second control message indicates to send the first sensing data.

In an implementation, the first data push address may be sent by the SSCF network element to the second network element, and then sent by the second network element to the UPF network element. For example, the first control message may further indicate the first data push address. A data packet that is for the first sensing data and that is sent by the second network element to the UPF network element may carry or indicate the first data push address, so that the UPF network element can obtain the first data push address.

In another implementation, the first data push address may be directly sent by the SSCF network element to the UPF network element. For example, the communication method may further include: The SSCF network element sends the second control message to the UPF network element, where the second control message may indicate or carry the first data push address. The UPF network element may receive the second control message, to obtain the first data push address.

Optionally, the second control message may alternatively not indicate or carry the first data push address, and the first data push address may be sent to the UPF network element in a pre-configuration manner or another manner or by using another message. For example, address interfaces corresponding to different sensing services may be configured or predefined in the SSCF network element, the second network element, or the UPF network element, and all the address interfaces are provided by the third-party entity. In other words, the first data push address provided by the third-party entity may be configured or predefined in the SSCF network element, the second network element, or the UPF network element. An implementation in which the UPF network element obtains the first data push address is not limited in this application.

The following uses an example in which the first network element is the NEF network element, the second network element is the SDPF network element, and the third-party entity sends a sensing service request to the SSCF network element via the NEF network element, to describe a process in which the third-party entity provides the first data push address and the UPF network element sends the first sensing data to the first data push address to send the first sensing data to the third-party entity. A case in which the first network element is the third-party entity is similar to this case, and a difference lies in that the third-party entity interacts with the SSCF network element not via the NEF network element. Details are not described.

For example, the first network element is the NEF network element, and the second network element is the SDPF network element. FIG. 17 is still another schematic flowchart of a communication method according to an embodiment of this application. As shown in FIG. 17, the communication method may include S1701 to S1709.

S1701: The third-party entity sends a request message 1 to the NEF network element, where the request message 1 indicates a first data push address and a request for obtaining first sensing data.

The request message 1 may be referred to as a second request message, and the first data push address is provided by the third-party entity.

Correspondingly, the NEF network element may receive the request message 1 from the third-party entity.

S1702: The NEF network element sends a request message 2 to the SSCF network element, where the request message 2 indicates the first data push address and the request for obtaining the first sensing data.

The request message 2 may be the foregoing first request message.

Correspondingly, the SSCF network element may receive the request message 2 from the NEF network element.

S1703: The SSCF network element sends a control message 1 to the SDPF network element, where the control message 1 indicates the first data push address, and indicates to send the first sensing data.

The control message 1 may be the foregoing first control message.

Correspondingly, the SDPF network element may receive the control message 1 from the SSCF network element.

Optionally, the SDPF network element may return a response message to the SSCF network element.

S1704: The SSCF network element sends a control message 2 to the RAN network element, where the control message 2 indicates to receive a sensing signal.

The control message 2 may be the foregoing control message sent by the SSCF network element to the RAN network element that serves as the receive sensing entity. Details about a process in which the SSCF network element sends a control message to the transmit sensing entity are omitted herein.

Correspondingly, the RAN network element may receive the control message 2 from the SSCF network element.

For S1701 to S1704, refer to S701 to S704. A difference lies in that in S1701 to S1703, the messages indicate or carry the first data push address, where the first data push address is used by the UPF network element to send the first sensing data. Other similar or same parts are not described again.

S1705: The SSCF network element sends a control message 3 to the UPF network element, where the control message 3 indicates to send the first sensing data.

The control message 3 may be the foregoing second control message.

Correspondingly, the UPF network element may receive the control message 3 from the SSCF network element.

Optionally, the UPF network element may return a response message, for example, a second control response message, to the SSCF network element.

S1706: The SSCF network element sends a response message 1 to the NEF network element.

The response message 1 may be a response message for the request message 2. In this embodiment, the response message 1 may be referred to as a first response message. The corresponding message 1 may indicate that receiving of the first data push address is acknowledged. Similarly, the NEF network element may send a response message to the third-party entity, to indicate that receiving of the first data push address is acknowledged. Alternatively, S1706 may not be performed. This is not limited herein.

Correspondingly, the NEF network element receives the response message 1.

An execution sequence of S1703 to S1706 is not limited.

S1707: The RAN network element sends sensing data to the SDPF network element.

Correspondingly, the SDPF network element may receive and process the sensing data to obtain processed sensing data.

As described above, the sensing data received by the SDPF network element may be raw sensing data obtained by the RAN network element or sensing data processed by the RAN network element. An example in which the sensing data received by the SDPF network element may be the raw sensing data obtained by the RAN network element is used in this specification for description.

After obtaining the processed sensing data, the SDPF network element may perform S1708.

S1708: The SDPF network element sends the first sensing data to the UPF network element, where a data packet for the first sensing data carries the first data push address.

The first sensing data is the sensing data processed by the SDPF network element.

Correspondingly, the UPF network element receives the first sensing data.

S1709: The UPF network element sends the first sensing data to the first data push address.

Correspondingly, the third-party entity may receive the first sensing data from the first data push address.

In the procedure shown in FIG. 17, the third-party entity may provide the first data push address as an interface for the UPF network element to send the first sensing data, the SDPF network element may send the first sensing data to the UPF network element, and the UPF network element may send the first sensing data to the first data push address. The third-party entity may receive the first sensing data from the first data push address. In other words, the third-party entity may passively receive the first sensing data.

Optionally, a case in which the second network element is the RAN network element that serves as the receive sensing entity is similar to the case, shown in FIG. 17, in which the second network element is the SDPF network element, and a difference lies in that the RAN network element sends the first sensing data to the UPF network element, the UPF network element sends the first sensing data to the first data push address, and the first sensing data may be the raw sensing data obtained by the RAN network element or the sensing data processed by the RAN network element. For details, refer to the descriptions in the foregoing related embodiment in which the second network element is the RAN network element, and the details are not described herein again.

In the foregoing embodiment in which the third-party entity provides the first data push address, and the UPF network element sends the first sensing data to the first data push address to send the first sensing data to the third-party entity, the third-party entity may passively receive, by using the first data push address, the first sensing data sent by the UPF network element, where the first sensing data in the UPF network element is from the second network element.

Optionally, in the foregoing embodiment in which the third-party entity provides the first data push address, and the UPF network element sends the first sensing data to the first data push address to send the first sensing data to the third-party entity, the first control message sent by the SSCF network element to the second network element may specifically indicate to send the first sensing data to the UPF network element. The second control message sent by the SSCF network element to the UPF network element may specifically indicate to send the first sensing data to the first data push address, or the second network element may indicate the UPF network element to send the first sensing data to the first data push address.

Optionally, in a possible design, in the foregoing embodiment in which the third-party entity provides the first data push address, and the UPF network element sends the first sensing data to the first data push address, when sending the first sensing data to the UPF network element, the second network element (for example, the SDPF network element or the RAN network element) may send the first sensing data to the UPF network element through a GTP-U tunnel. This is similar to the foregoing embodiment in which the UPF network element provides the first data access address as the interface for the third-party entity to access the first sensing data. Correspondingly, the UPF network element receives the first sensing data through the GTP-U tunnel.

In this embodiment, the second network element (for example, the SDPF network element or the RAN network element) may encapsulate the first sensing data, to obtain the data packet for the first sensing data. In an inner encapsulation address, a source IP address may be an IP address of the second network element, and a destination IP address may be the first data push address provided by the third-party entity. In an outer encapsulation address, a source IP address may be the IP address of the second network element, and a destination IP address may be an IP address of the UPF network element. The second network element may send the data packet for the first sensing data to the UPF network element through the GTP-U tunnel. The UPF network element may parse the data packet for the first sensing data to obtain the first sensing data and the first data push address, and send the first sensing data to the first data push address. In other words, the second network element may encapsulate the first data push address in the data packet for the first sensing data, to indicate the UPF network element to send the first sensing data to the first data push address.

It should also be understood that, before the second network element sends the first sensing data to the UPF network element through the GTP-U tunnel, the GTP-U tunnel needs to be established in advance between the second network element and the UPF network element. For a GTP-U tunnel establishment process, refer to the descriptions in the foregoing embodiment. Details are not described herein again.

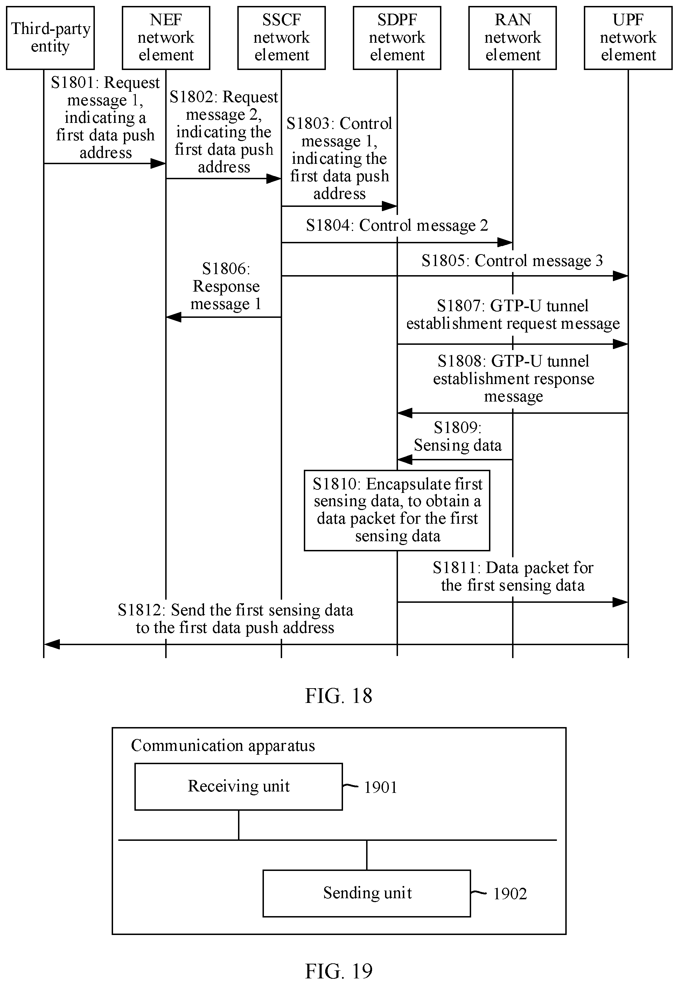

For example, the first network element is the NEF network element, and the second network element is the SDPF network element. FIG. 18 is still another schematic flowchart of a communication method according to an embodiment of this application. As shown in FIG. 18, the communication method may include S1801 to S1812.

S1801: The third-party entity sends a request message 1 to the NEF network element, where the request message 1 indicates a first data push address and a request for obtaining first sensing data.

Correspondingly, the NEF network element may receive the request message 1 from the third-party entity.

S1802: The NEF network element sends a request message 2 to the SSCF network element, where the request message 2 indicates the first data push address and the request for obtaining the first sensing data.

Correspondingly, the SSCF network element may receive the request message 2 from the NEF network element.

S1803: The SSCF network element sends a control message 1 to the SDPF network element, where the control message 1 indicates the first data push address, and indicates to send the first sensing data.

Correspondingly, the SDPF network element may receive the control message 1 from the SSCF network element.

S1804: The SSCF network element sends a control message 2 to the RAN network element, where the control message 2 indicates to receive a sensing signal.

Correspondingly, the RAN network element may receive the control message 2 from the SSCF network element.

S1805: The SSCF network element sends a control message 3 to the UPF network element, where the control message 3 indicates to send the first sensing data.

Correspondingly, the UPF network element may receive the control message 3 from the SSCF network element.

S1806: The SSCF network element sends a response message 1 to the NEF network element.

Correspondingly, the NEF network element receives the response message 1.

For S1801 to S1806, refer to S1701 to S1706. Details are not described again.

S1807: The SDPF network element sends a GTP-U tunnel establishment request message to the UPF network element, where the GTP-U tunnel establishment request message indicates a request for establishing a GTP-U tunnel.

Correspondingly, the UPF network element receives the GTP-U tunnel establishment request message.

S1808: The UPF network element sends a GTP-U tunnel establishment response message to the SDPF network element, where the GTP-U tunnel establishment response message indicates that the establishment of the GTP-U tunnel is acknowledged.

Correspondingly, the SDPF network element receives the GTP-U tunnel establishment response message.

It should be understood that S1807 and S1808 may be performed at any time before S1810 in FIG. 18, and execution timing (and an execution order relative to other steps) of S1807 and S1808 is not limited.

S1809: The RAN network element sends sensing data to the SDPF network element.

Correspondingly, the SDPF network element may receive and process the sensing data to obtain processed sensing data.

For S1809, refer to the descriptions in S1807. Details are not described again.

After obtaining the processed sensing data, the SDPF network element may perform S1810.

S1810: The SDPF network element encapsulates the first sensing data, to obtain a data packet for the first sensing data.

The first sensing data is the sensing data processed by the SDPF network element. For an inner encapsulation address and an outer encapsulation address of the first sensing data, refer to the foregoing descriptions. Details are not described again.

S1811: The SDPF network element sends the data packet for the first sensing data to the UPF network element.

Correspondingly, the UPF network element receives the data packet for the first sensing data.

After receiving the data packet for the first sensing data, the UPF network element may parse the data packet to obtain the first sensing data and the first data push address.

S1812: The UPF network element sends the first sensing data to the first data push address.

Correspondingly, the third-party entity may receive the first sensing data from the first data push address.

In the procedure shown in FIG. 18, the GTP-U tunnel may be established between the SDPF network element and the UPF network element. The SDPF network element may send the first sensing data to the UPF network element through the GTP-U tunnel. The third-party entity may provide the first data push address as an interface for the UPF network element to send the first sensing data, and the UPF network element may send the first sensing data to the first data push address. The third-party entity may receive the first sensing data from the first data push address. In other words, the third-party entity may passively receive the first sensing data.

It should be understood that, in the foregoing embodiments of this application, the sensing data obtaining modes of the data requester are applicable to any data requester. The foregoing descriptions related to the NF network element, the third-party entity, and the like are merely used as examples. For any one of the foregoing sensing data exposure modes, a specific form or type of the data requester is not limited in this application.

For example, the second network element (for example, the SDPF network element or the RAN network element) may alternatively store the first sensing data to the ADRF network element, and the third-party entity may obtain the first sensing data from the ADRF network element. For example, the second network element may transmit the first sensing data to the ADRF network element, and the NEF network element may obtain the first sensing data from the ADRF network element. The NEF network element may transmit the obtained first sensing data to the third-party entity.

For another example, the second network element (for example, the SDPF network element or the RAN network element) may alternatively provide a first data access address, and the NF network element inside the network may access the first data access address to obtain the first sensing data. Alternatively, the second network element (for example, the SDPF network element or the RAN network element) may transmit the first sensing data to the UPF network element, the UPF network element may provide a first data access address, and the NF network element inside the network may access the first data access address to obtain the first sensing data.

For another example, the NF network element inside the network may alternatively provide a first data push address. The second network element (for example, the SDPF network element or the RAN network element) may send the first sensing data to the NF network element by using the first data push address. Alternatively, the second network element (for example, the SDPF network element or the RAN network element) may transmit the first sensing data to the UPF network element, and the UPF network element may send the first sensing data to the NF network element by using the first data push address.

As described in the foregoing embodiments, a specific mode of transmitting the sensing data by the second network element (for example, the SDPF network element or the RAN network element) to the data requester may be indicated by the SSCF network element by using the first control message.

Optionally, in some embodiments, a transmission policy may be configured in the SSCF network element. The SSCF network element may determine, based on the configured transmission policy, the specific mode of transmitting the sensing data by the second network element (for example, the SDPF network element or the RAN network element) to the data requester. For example, the transmission policy may be: when the data requester sends a data push address, indicating the second network element (for example, the SDPF network element or the RAN network element) or the UPF network element to send the sensing data to the data push address; or when the data requester does not send a data push address, indicating the second network element (for example, the SDPF network element or the RAN network element) or the UPF network element to provide a data access address, to send the sensing data to the data requester, or indicating the second network element to transmit the sensing data via the DCP network element.

Alternatively, the transmission policy may be related to a service. For example, the data requester may request sensing data of different sensing services. A same transmission mode or different transmission modes may be configured for the different sensing services. For example, for a sensing service 1, the second network element (for example, the SDPF network element or the RAN network element) or the UPF network element provides a data access address, to send sensing data to the data requester. For a sensing service 2, the second network element (for example, the SDPF network element or the RAN network element) transmits sensing data via the DCP network element.

Alternatively, in some other embodiments, a transmission policy may be directly configured in the second network element, and the second network element may directly transmit the sensing data based on the transmission policy. Neither the transmission policy nor a configuration manner is limited in this application.

Optionally, in some other embodiments, the data requester may autonomously select a sensing data obtaining mode. For example, a sensing service request (for example, the foregoing first request message) sent by the data requester may carry or indicate a result response mode. The result response mode indicates a specific mode, expected by the data requester, of transmitting sensing data by the second network element (for example, the SDPF network element or the RAN network element) to the data requester.

For example, when the result response mode includes a data push address, it indicates that the data requester expects the second network element (for example, the SDPF network element or the RAN network element) or the UPF network element to send the sensing data to the data requester by using the data push address. For another example, the result response mode may indicate that the second network element (for example, the SDPF network element or the RAN network element) or the UPF network element is expected to provide a data access address, and the data requester may obtain the sensing data by using the data access address.

Similarly, when the data requester autonomously selects the sensing data obtaining mode, a same sensing data transmission mode or different sensing data transmission modes may be selected for different sensing services.

In other words, the first request message in the foregoing embodiment may further include the result response mode. For example, the result response mode may be a field. The result response mode indicates an expected sensing data transmission mode, where the sensing data transmission mode may be as described in the foregoing embodiment. For example, the second network element (for example, the SDPF network element or the RAN network element) transmits the sensing data to the data requester by using the first data access address, the UPF network element transmits the sensing data to the data requester by using the first data access address, the second network element (for example, the SDPF network element or the RAN network element) sends the sensing data to the first data push address, the UPF network element sends the sensing data to the first data push address, or the second network element sends the sensing data via the DCP network element.

Optionally, in the foregoing embodiments, when any two network elements (using a network element 1 and a network element 2 as an example) interact with each other, the network element 2 may return a response message to the network element 1 after the network element 1 sends a request message or a control message to the network element 2. The response message may carry other information, or may not carry information and is only for acknowledging receiving. This type of response message is not described in detail in this application.

Optionally, the messages such as the first control message, the first request message, and the first response message in embodiments of this application may alternatively have other names, and the messages may be implemented through a same interface or different interfaces. For example, during implementation of the messages, an existing interface between interacting network elements may be used, or a new interface may be defined. The names and implementations of the messages are not limited in this application.

Optionally, in embodiments of this application, the SSCF network element may be mounted to a service-based interface (service-based interface, SBI) bus through an SBI to communicate with another core network function module. The SDPF network element may be mounted to the SBI bus through the SBI to communicate with another core network function module, or may perform communication through a separate interface, for example, communicate with another SDPF network element through the separate interface, or communicate with the SSCF network element through the separate interface.

In a possible networking architecture, the RAN network element is connected to the SSCF network element via an access and mobility management function (access and mobility management function, AMF), the RAN network element is connected to the SDPF network element via the user plane function (user plane function, UPF), the SDPF network element is mounted to the SBI bus through the SBI, and the SSCF network element is mounted to the SBI bus through the SBI. The RAN network element may perform control plane communication with the SSCF network element via the AMF network element, and the RAN network element may perform data plane communication with the SDPF network element via the UPF network element.

In another possible networking architecture, the RAN network element may be directly connected to the SSCF network element, the RAN network element is connected to the SDPF network element via the UPF network element, the SDPF network element is mounted to the SBI bus through the SBI, and the SSCF network element is not mounted to the SBI bus. The RAN network element may directly perform control plane communication with the SSCF network element, and the RAN network element may perform data plane communication with the SDPF network element via the UPF network element.

In still another possible networking architecture, the RAN network element is connected to the SSCF network element via an AMF network element, the RAN network element is connected to the SDPF network element via the UPF network element, the SDPF network element is not mounted to the SBI bus, and the SSCF network element is mounted to the SBI bus through the SBI. The RAN network element may perform control plane communication with the SSCF network element via the AMF network element, and the RAN network element may perform data plane communication with the SDPF network element via the UPF network element.

In still another possible networking architecture, the RAN network element may be directly connected to the SSCF network element, the RAN network element is connected to the SDPF network element via the UPF network element, the SDPF network element is not mounted to the SBI bus, and the SSCF network element is not mounted to the SBI bus. The RAN network element may directly perform control plane communication with the SSCF network element, and the RAN network element may perform data plane communication with the SDPF network element via the UPF network element.

In still another possible networking architecture, the RAN network element is connected to the SSCF network element via an AMF network element, the RAN network element may be directly connected to the SDPF network element, the SDPF network element is mounted to the SBI bus through the SBI, and the SSCF network element is mounted to the SBI bus through the SBI. The RAN network element may perform control plane communication with the SSCF network element via the AMF network element, and the RAN network element may directly perform data plane communication with the SDPF network element.

In still another possible networking architecture, the RAN network element may be directly connected to the SSCF network element, the RAN network element may be directly connected to the SDPF network element, the SDPF network element is mounted to the SBI bus through the SBI, and the SSCF network element is not mounted to the SBI bus. The RAN network element may directly perform control plane communication with the SSCF network element, and the RAN network element may directly perform data plane communication with the SDPF.

In still another possible networking architecture, the RAN network element is connected to the SSCF network element via an AMF network element, the RAN network element may be directly connected to the SDPF network element, the SDPF network element is not mounted to the SBI bus, and the SSCF network element is mounted to the SBI bus through the SBI. The RAN network element may perform control plane communication with the SSCF network element via the AMF network element, and the RAN network element may directly perform data plane communication with the SDPF network element.

In still another possible networking architecture, the RAN network element may be directly connected to the SSCF network element, the RAN network element may be directly connected to the SDPF network element, the SDPF network element is not mounted to the SBI bus, and the SSCF network element is not mounted to the SBI bus. The RAN network element may directly perform control plane communication with the SSCF network element, and the RAN network element may directly perform data plane communication with the SDPF network element.

As described above, in embodiments of this application, the RAN network element may directly perform control plane communication with the SSCF network element, or perform control plane communication with the SSCF network element via the AMF network element. The SDPF network element may be mounted to the SBI bus, or may not be mounted to the SBI bus. The RAN network element may directly perform data plane communication with the SDPF network element, or perform data plane communication with the SDPF network element via the UPF network element. The control plane communication refers to transmission of a control plane message, for example, the control message in embodiments of this application. The data plane communication refers to transmission of sensing data and/or a sensing result. Interaction between the network elements such as the RAN network element, the UPF network element, the SSCF network element, and the SDPF network element in the foregoing embodiments of this application may be implemented based on any one of the foregoing possible networking architectures. This is not limited in this application.

Optionally, the SSCF network element and the SDPF network element may be independently upgraded and maintained, so that a core network function entity can be flexibly deployed and managed in the network. During actual implementation, a quantity of SDPF network elements may be further increased or decreased based on an actual requirement.

Based on the descriptions in the foregoing embodiments, embodiments of this application actually provide methods that may be applied to different network element sides, for example, the SSCF network element, the first network element, and the second network element. For a method corresponding to each network element side, refer to the steps performed by each network element in the foregoing embodiments.

It should be noted that, for brief description, the foregoing method embodiments are expressed as a series of actions. However, a person skilled in the art should appreciate that this application is not limited to the described sequence of the actions. This is because some steps may be performed in another sequence or simultaneously according to this application. It should be further appreciated by a person skilled in the art that the embodiments described in this specification are all example embodiments, and the involved actions and modules are not necessarily required by this application.

The foregoing mainly describes the solutions provided in embodiments of this application from a perspective of interaction between network elements. It may be understood that, to implement the foregoing functions, the network elements such as the SSCF network element, the first network element, the second network element, the DCP network element, and the UPF network element include corresponding hardware structures and/or software modules for performing the functions.

For example, embodiments of this application may provide a communication apparatus configured to implement the function of the SSCF network element. The communication apparatus may be a communication device on which the SSCF network element is deployed or carried, or may be an apparatus (for example, a chip or a software module) in the communication device on which the SSCF network element is deployed or carried. FIG. 19 is a diagram of a structure of a communication apparatus according to an embodiment of this application. As shown in FIG. 19, the communication apparatus may include a sending unit 1901 and a receiving unit 1902.

The receiving unit 1901 is configured to receive a first request message from a first network element, where the first request message indicates a request for obtaining first sensing data.

The sending unit 1902 is configured to send a first control message to a second network element, where the first control message indicates to send the first sensing data.

In a possible design, the sending unit 1902 is specifically configured to send the first sensing data to the first network element, the first network element is a data requester (for example, a third-party entity) or a NEF network element, and the first control message specifically indicates to send the first sensing data to the first network element.

In a possible design, the second network element sends the first sensing data to the first network element via a DCP network element. The sending unit 1902 is further configured to send a first response message to the first network element. The first response message indicates a first topic, and the first topic is for subscribing to the first sensing data from the data communication proxy (DCP) network element, where the first topic is a publish topic of the first sensing data in the data communication proxy network element, and the first sensing data is from the second network element.

Optionally, in the foregoing design in which the second network element sends the first sensing data to the first network element via the DCP network element, the first control message specifically indicates to publish the first sensing data to the data communication proxy network element based on the first topic.

In a possible design, the second network element may provide a first data access address as an interface for accessing the first sensing data. The sending unit 1902 is further configured to send a first response message to the first network element. The first response message indicates the first data access address, and the first data access address is provided by the second network element, and is for obtaining the first sensing data.

In another possible design, a UPF network element may provide a first data access address as an interface for accessing the first sensing data. The sending unit 1902 is further configured to send a first response message to the first network element. The first response message indicates the first data access address, where the first data access address is provided by the user plane function (UPF) network element, and is for obtaining the first sensing data, and the first sensing data in the user plane function network element is from the second network element.

Optionally, in the foregoing design in which the first data access address is provided by the second network element, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the user plane function network element, the first control message specifically indicates to send the first sensing data to the user plane function network element.

Optionally, in the foregoing design in which the first data access address is provided by the user plane function network element, the sending unit 1902 is further configured to send a second control message to the user plane function network element. The second control message indicates to use the first data access address as the interface for obtaining the first sensing data. In other words, the second control message may specifically indicate the UPF network element to provide the data access address as the interface for obtaining the first sensing data.

Optionally, in the foregoing design in which the first data access address is provided by the user plane function network element, the receiving unit 1901 is further configured to receive a second control response message from the user plane function network element, where the second control response message indicates the first data access address.

Optionally, in the foregoing design in which the first data access address is provided by the second network element, the receiving unit 1901 is further configured to receive a first control response message from the second network element, where the first control response message indicates the first data access address.

In a possible design, the first request message further indicates a first data push address provided by the third-party entity, and the first control message further indicates the first data push address, where the first data push address is used by the second network element to send the first sensing data.

In another possible design, the first request message further indicates a first data push address provided by the third-party entity, and the first control message further indicates the first data push address. The first data push address is used by a user plane function network element to send the first sensing data, and the first sensing data in the user plane function network element is from the second network element.

Optionally, in the foregoing design in which the third-party entity provides the first data push address, and the second network element sends the first sensing data to the first data push address, the first data push address is used by the second network element to send the first sensing data, and the first control message specifically indicates to send the first sensing data to the first data push address.

Optionally, in the foregoing design in which the third-party entity provides the first data push address, and the UPF network element sends the first sensing data to the first data push address, the first data push address is used by the UPF network element to send the first sensing data, and the first control message specifically indicates to send the first sensing data to the UPF network element.

Optionally, in the foregoing design in which the third-party entity provides the first data push address, and the UPF network element sends the first sensing data to the first data push address, the sending unit 1902 is further configured to send a second control message to the user plane function network element. The second control message indicates to send the first sensing data to the first data push address. Alternatively, the second network element may indicate the UPF network element to send the first sensing data to the first data push address.

In a possible design, the first network element may be an NF network element inside a network. The second network element may store the first sensing data to an ADRF network element, and the NF network element obtains the first sensing data from the ADRF network element. The sending unit 1902 is further configured to send a first response message to the first network element. The first response message indicates to obtain the first sensing data from the analytics data repository function (ADRF) network element, and the first sensing data in the analytics data repository function network element is from the second network element.

Optionally, in the foregoing design in which the second network element stores the first sensing data to the ADRF network element, and the NF network element obtains the first sensing data from the ADRF network element, the first control message specifically indicates to send the first sensing data to the analytics data repository function network element. The second network element may determine, based on the indication of the first control message, that the first sensing data needs to be sent to the ADFR network element.

Optionally, in the foregoing design in which the second network element sends the first sensing data to the first network element or the DCP network element, in the foregoing design in which the first data access address is provided by the second network element or the UPF network element, or in the foregoing design in which the third-party entity provides the first data push address, and the second network element or the UPF network element sends the first sensing data to the first data push address, the first network element may be the network exposure function network element or the third-party entity.

Optionally, in the foregoing design in which the first sensing data is stored to the ADRF network element, and the NF network element obtains the first sensing data from the ADRF network element, the first network element may be the network function network element.

Optionally, in any one of the foregoing designs, the second network element is an access network element or a sensing data processing function network element.

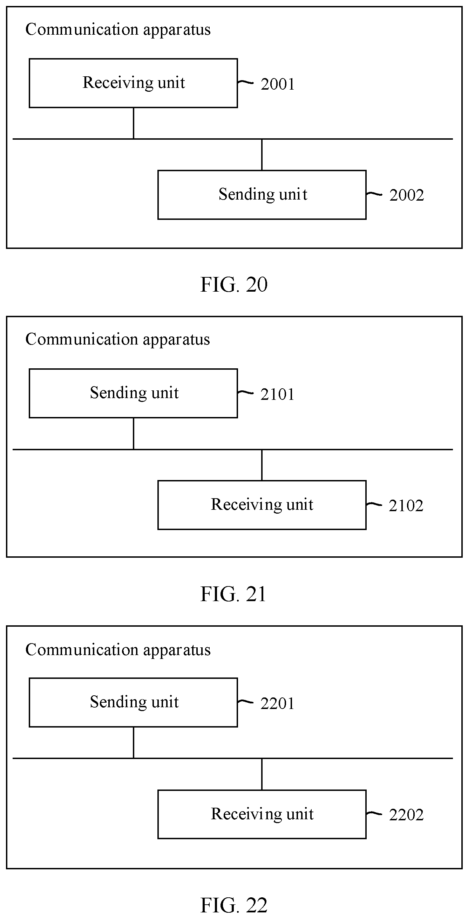

For another example, embodiments of this application may provide a communication apparatus configured to implement the function of the second network element. The communication apparatus may be a communication device on which the second network element is deployed or carried, or may be an apparatus (for example, a chip or a software module) in the communication device on which the second network element is deployed or carried. FIG. 20 is another diagram of a structure of a communication apparatus according to an embodiment of this application. As shown in FIG. 20, the communication apparatus may include a receiving unit 2001 and a sending unit 2002.

The receiving unit 2001 is configured to receive a first control message from a sensing service control function network element, where the first control message indicates to send first sensing data.

The sending unit 2002 is configured to send the first sensing data.

In a possible design, the sending unit 2002 is specifically configured to send the first sensing data to a first network element.

Optionally, the first control message specifically indicates to send the first sensing data to the first network element.

In a possible design, the sending unit 2002 is specifically configured to send the first sensing data to a data communication proxy network element based on a first topic.

Optionally, the first control message specifically indicates to publish the first sensing data to the data communication proxy network element based on the first topic.

In a possible design, the sending unit 2002 is specifically configured to use a first data access address as an interface for obtaining the first sensing data, where the first data access address is provided by the second network element.

Optionally, the first control message specifically indicates to use the first data access address as the interface for obtaining the first sensing data. In other words, the first control message may specifically indicate the second network element to provide the data access address as the interface for obtaining the first sensing data.

Optionally, in the foregoing design in which the first data access address is provided by the second network element, the sending unit 2002 is further configured to send a first control response message to the sensing service control function network element, where the first control response message indicates the first data access address.

In another possible design, the sending unit 2002 is specifically configured to send the first sensing data to a user plane function network element.

Optionally, the first control message specifically indicates to send the first sensing data to the user plane function network element.

In a possible design, the sending unit 2002 is specifically configured to send the first sensing data to the user plane function network element through a general packet radio service tunneling protocol-user plane (GTP-U) tunnel.

Optionally, the first control message further indicates a first data push address provided by a third-party entity. The first data push address is encapsulated in a data packet that is for the first sensing data and that is sent by the second network element to the user plane function network element, and the first data push address is used by the user plane function network element to send the first sensing data.

In a possible design, the first control message further indicates a first data push address provided by a third-party entity. The sending unit 2002 is specifically configured to send the first sensing data to the first data push address.

Optionally, the first data push address is used by the second network element to send the first sensing data, and the first control message specifically indicates to send the first sensing data to the first data push address.

In a possible design, the sending unit 2002 is specifically configured to send the first sensing data to an analytics data repository function network element.

Optionally, the first control message specifically indicates to send the first sensing data to the analytics data repository function network element.

Optionally, the first network element is a network exposure function network element or a third-party entity.

Optionally, the second network element is an access network element or a sensing data processing function network element.

For another example, embodiments of this application may provide a communication apparatus configured to implement the function of the first network element. The communication apparatus may be a communication device on which the first network element is deployed or carried, or may be an apparatus (for example, a chip or a software module) in the communication device on which the first network element is deployed or carried. FIG. 21 is still another diagram of a structure of a communication apparatus according to an embodiment of this application. As shown in FIG. 21, the communication apparatus may include a sending unit 2101 and a receiving unit 2102.

The sending unit 2101 is configured to send a first request message to a sensing service control function network element, where the first request message indicates a request for obtaining first sensing data.

The receiving unit 2102 is configured to receive the first sensing data from a second network element.

In a possible design, the receiving unit 2102 is further configured to receive a first response message from the sensing service control function network element, where the first response message indicates a first topic. The sending unit 2101 is further configured to send a subscription request message to a data communication proxy network element, where the subscription request message indicates the first topic, and is for subscribing to the first sensing data from the data communication proxy network element.

The receiving unit 2102 is further configured to receive a subscription response message from the data communication proxy network element.

The receiving unit 2102 is specifically configured to receive the first sensing data sent by the data communication proxy network element, where the first sensing data is from the second network element.

Optionally, the first network element is a network exposure function network element or a third-party entity. When the first network element is the network exposure function network element, the sending unit 2101 is further configured to send the first sensing data to a third-party entity.

In a possible design, the first network element is a third-party entity, and the receiving unit 2102 is further configured to receive a first response message from the sensing service control function network element, where the first response message indicates a first data access address, and the first data access address is provided by the second network element or a user plane function network element. The sending unit 2101 is further configured to send a first access request based on the first data access address, where the first access request is for requesting to obtain the first sensing data.

The receiving unit 2102 is specifically configured to receive a first access response message, where the first access response message includes the first sensing data, and the first sensing data is from the second network element.

In a possible design, the first network element is a third-party entity, and the first request message further indicates a first data push address provided by the third-party entity, where the first data push address is used by the second network element to send the first sensing data; or the first data push address is used by a user plane function network element to send the first sensing data, and the first sensing data in the user plane function network element is from the second network element.

The receiving unit 2102 is specifically configured to receive the first sensing data from the first data push address.

In a possible design, the first network element is a network function network element, and the receiving unit 2102 is further configured to receive a first response message from the sensing service control function network element, where the first response message indicates to obtain the first sensing data from an analytics data repository function network element. The sending unit 2101 is further configured to send a sensing data request message to the analytics data repository function network element, where the sensing data request message is for requesting to obtain the first sensing data.

The receiving unit 2102 is specifically configured to receive a sensing data response message from the analytics data repository function network element, where the sensing data response message includes the first sensing data. The first sensing data in the analytics data repository function network element is from the second network element.

Optionally, the second network element is an access network element or a sensing data processing function network element.

For another example, embodiments of this application may provide a communication apparatus configured to implement the function of the NEF network element. The communication apparatus may be a communication device on which the NEF network element is deployed or carried, or may be an apparatus (for example, a chip or a software module) in the communication device on which the NEF network element is deployed or carried. FIG. 22 is still another diagram of a structure of a communication apparatus according to an embodiment of this application. As shown in FIG. 22, the communication apparatus may include a sending unit 2201 and a receiving unit 2202.

The sending unit 2201 is configured to send a first request message to a sensing service control function network element, where the first request message indicates a request for obtaining first sensing data.

The receiving unit 2202 is configured to receive a first response message from the sensing service control function network element, where the first response message indicates a first data access address, and the first data access address is provided by a second network element or a user plane function network element, and is for obtaining the first sensing data.

The sending unit 2201 is further configured to send the first data access address to a third-party entity.

Optionally, the second network element is an access network element or a sensing data processing function network element.

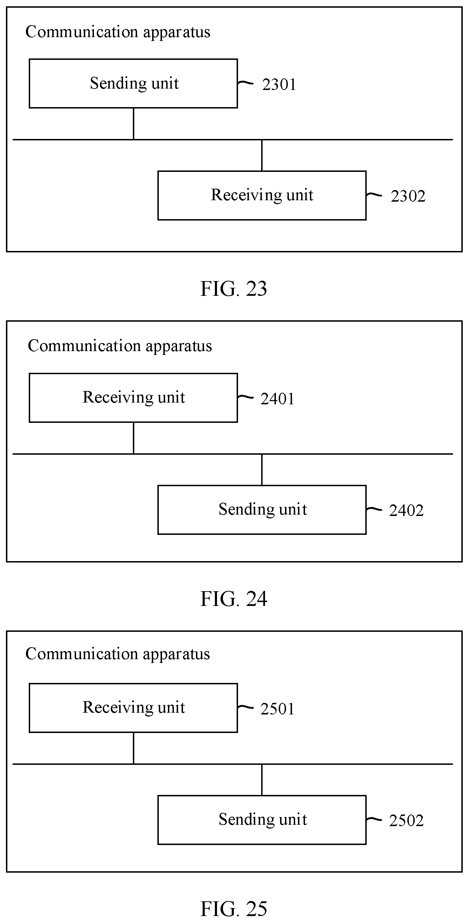

For another example, embodiments of this application may provide a communication apparatus configured to implement the function of the NEF network element. The communication apparatus may be a communication device on which the NEF network element is deployed or carried, or may be an apparatus (for example, a chip or a software module) in the communication device on which the NEF network element is deployed or carried. FIG. 23 is still another diagram of a structure of a communication apparatus according to an embodiment of this application. As shown in FIG. 23, the communication apparatus may include a sending unit 2301 and a receiving unit 2302.

The sending unit 2301 is configured to send a first request message to a sensing service control function network element, where the first request message indicates a request for obtaining first sensing data, and indicates a first data push address provided by a third-party entity. The first data push address is used by a second network element to send the first sensing data; or the first data push address is used by a user plane function network element to send the first sensing data, and the first sensing data in the user plane function network element is from a second network element.

The receiving unit 2302 is configured to receive a first response message from the sensing service control function. The first response message is for acknowledging that the first data push address is received. The receiving unit 2302 may be used as an optional module.

Optionally, the second network element is an access network element or a sensing data processing function network element.

For another example, embodiments of this application may provide a communication apparatus configured to implement the function of the UPF network element. The communication apparatus may be a communication device on which the UPF network element is deployed or carried, or may be an apparatus (for example, a chip or a software module) in the communication device on which the UPF network element is deployed or carried. FIG. 24 is still another diagram of a structure of a communication apparatus according to an embodiment of this application. As shown in FIG. 24, the communication apparatus may include a receiving unit 2401 and a sending unit 2402.

The receiving unit 2401 is configured to receive first sensing data from a second network element.

The sending unit 2402 is configured to: use a first data access address as an interface for obtaining the first sensing data, where the first data access address is provided by the user plane function network element; or send the first sensing data to a first data push address provided by a third-party entity.

In a possible design, the receiving unit 2401 is specifically configured to receive the first sensing data from the second network element through a general packet radio service tunneling protocol-user plane tunnel.

In a possible design, the first data push address is encapsulated in a received data packet for the first sensing data.

In a possible design, the receiving unit 2401 is further configured to receive a second control message from a sensing service control function network element, where the second control message indicates to use the first data access address as the interface for obtaining the first sensing data.

In a possible design, the sending unit 2402 is further configured to send a second control response message to the sensing service control function network element, where the second control response message indicates the first data access address.

In a possible design, the receiving unit 2401 is further configured to receive a second control message from a sensing service control function network element, where the second control message indicates to send the first sensing data to the first data push address provided by the third-party entity.

Optionally, the second network element is an access network element or a sensing data processing function network element.

For another example, embodiments of this application may provide a communication apparatus configured to implement the function of the DCP network element. The communication apparatus may be a communication device on which the DCP network element is deployed or carried, or may be an apparatus (for example, a chip or a software module) in the communication device on which the DCP network element is deployed or carried. FIG. 25 is still another diagram of a structure of a communication apparatus according to an embodiment of this application. As shown in FIG. 25, the communication apparatus may include a receiving unit 2501 and a sending unit 2502.

The receiving unit 2501 is configured to receive a subscription request message from a first network element, where the subscription request message indicates a first topic, and is for subscribing to first sensing data from the data communication proxy network element.

The sending unit 2502 is configured to send a subscription response message to the first network element.

The receiving unit 2501 is further configured to receive the first sensing data from a second network element, where the first sensing data is published based on the first topic.

The sending unit 2502 is further configured to send the first sensing data to the first network element.

Optionally, the second network element is an access network element or a sensing data processing function network element.

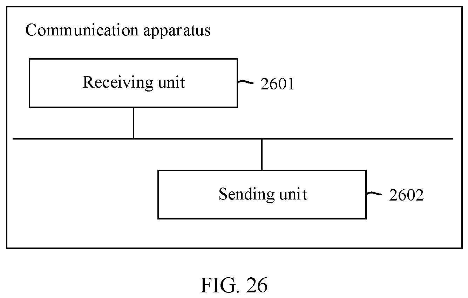

For another example, embodiments of this application may provide a communication apparatus configured to implement the function of the ADRF network element. The communication apparatus may be a communication device on which the ADRF network element is deployed or carried, or may be an apparatus (for example, a chip or a software module) in the communication device on which the ADRF network element is deployed or carried. FIG. 26 is still another diagram of a structure of a communication apparatus according to an embodiment of this application. As shown in FIG. 26, the communication apparatus may include a receiving unit 2601 and a sending unit 2602.

The receiving unit 2601 is configured to receive first sensing data from a second network element.

The receiving unit 2601 is further configured to receive a sensing data request message from a first network element, where the sensing data request message is for requesting to obtain the first sensing data.

The sending unit 2602 is configured to send a sensing data response message to the first network element, where the sensing data response message includes the first sensing data.

Optionally, the second network element is an access network element or a sensing data processing function network element.

It should be understood that the division of the foregoing apparatuses into the units is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program, to be invoked by a processing element of the apparatus to perform a function of the unit. In addition, all or some of the units may be integrated, or may be implemented independently. The processing element herein may also be referred to as a processor, and may be an integrated circuit with a signal processing capability. In an implementation process, the steps in the foregoing methods or the foregoing units may be implemented by a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application specific integrated circuits, ASICs), one or more digital signal processing (digital signal processing, DSP) circuits, one or more field programmable gate arrays (field programmable gate arrays, FPGAs), or a combination of at least two types of these integrated circuit forms.

For another example, when a unit in the apparatus may be implemented in a form of a program scheduled by a processing element, the processing element may be a general-purpose processor, for example, a CPU or another processor that can invoke the program. For still another example, the units may be integrated and implemented in a form of a system-on-a-chip (system-on-a-chip, SoC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus. The communication apparatus may include a processor and an interface circuit. There may be one or more processors.

When the communication apparatus is used in an SSCF network element, the processor is configured to communicate with another apparatus through the interface circuit, and perform the steps performed by the SSCF network element in the foregoing methods.

When the communication apparatus is used in a second network element (an SDPF network element or a RAN network element), the processor is configured to communicate with another apparatus through the interface circuit, and perform the steps performed by the second network element in the foregoing methods.

When the communication apparatus is used in a first network element (a third-party entity, an NF network element, or a NEF network element), the processor is configured to communicate with another apparatus through the interface circuit, and perform the steps performed by the first network element in the foregoing methods.

When the communication apparatus is used in a UPF network element, the processor is configured to communicate with another apparatus through the interface circuit, and perform the steps performed by the UPF network element in the foregoing methods.

When the communication apparatus is used in a DCP network element, the processor is configured to communicate with another apparatus through the interface circuit, and perform the steps performed by the DCP network element in the foregoing methods.

In an implementation, units for respectively implementing corresponding steps in the foregoing methods in each of the foregoing network elements (for example, the SSCF network element, the second network element, the first network element, the UPF network element, or the DCP network element) may be implemented in a form of a program scheduled by a processing element. For example, an apparatus used in the SSCF network element may include the processing element and a storage element, and the processing element invokes a program stored in the storage element, to perform the corresponding method performed by the SSCF network element in the foregoing method embodiments. The storage element may be a storage element located on a same chip as the processing element, that is, is an on-chip storage element.

For another example, an apparatus used in the second network element (the SDPF network element or the RAN network element) may include the processing element and a storage element, and the processing element invokes a program stored in the storage element, to perform the corresponding method performed by the second network element in the foregoing method embodiments. The storage element may be a storage element located on a same chip as the processing element, that is, is an on-chip storage element.

For another example, an apparatus used in the first network element may include the processing element and a storage element, and the processing element invokes a program stored in the storage element, to perform the corresponding method performed by the first network element in the foregoing method embodiments. The storage element may be a storage element located on a same chip as the processing element, that is, is an on-chip storage element.

For another example, an apparatus used in the UPF network element may include the processing element and a storage element, and the processing element invokes a program stored in the storage element, to perform the corresponding method performed by the UPF network element in the foregoing method embodiments. The storage element may be a storage element located on a same chip as the processing element, that is, is an on-chip storage element.

For another example, an apparatus used in the DCP network element may include the processing element and a storage element, and the processing element invokes a program stored in the storage element, to perform the corresponding method performed by the DCP network element in the foregoing method embodiments. The storage element may be a storage element located on a same chip as the processing element, that is, is an on-chip storage element.

In another implementation, a program for performing the method performed by each network element (for example, the SSCF network element, the second network element, the first network element, the UPF network element, or the DCP network element) in the foregoing methods may be in a storage element that is located on a different chip from a processing element, that is, in an off-chip storage element. In this case, the processing element invokes the program from the off-chip storage element or loads the program to an on-chip storage element, to invoke and perform the corresponding method performed by each network element (for example, the SSCF network element, the second network element, the first network element, the UPF network element, or the DCP network element) in the foregoing method embodiments.

For example, an embodiment of this application may further provide a communication apparatus. The communication apparatus may include a processor, configured to execute computer instructions stored in a memory. When the computer instructions are executed, the apparatus is caused to perform the method performed by each of the foregoing network elements (for example, the SSCF network element, the second network element, the first network element, the UPF network element, or the DCP network element). The memory may be located inside or outside the communication apparatus. In addition, there are one or more processors.

In still another implementation, a unit for implementing each step in the foregoing methods in each network element (for example, the SSCF network element, the second network element, the first network element, the UPF network element, or the DCP network element) may be configured as one or more processing elements. These processing elements may be correspondingly disposed on each network element (for example, the SSCF network element, the second network element, the first network element, the UPF network element, or the DCP network element). The processing element herein may be an integrated circuit, for example, one or more ASICs, one or more DSPs, or one or more FPGAs, or a combination of these types of integrated circuits. These integrated circuits may be integrated together to form a chip.

The units for implementing the steps in the foregoing methods in each network element (for example, the SSCF network element, the second network element, the first network element, the UPF network element, or the DCP network element) may be integrated together and implemented in a form of a SoC. The SoC is configured to implement a corresponding method. At least one processing element and storage element may be integrated into the chip, and the processing element invokes a program stored in the storage element to implement a corresponding method. Alternatively, at least one integrated circuit may be integrated into the chip, to implement a corresponding method. Alternatively, with reference to the foregoing implementations, functions of some units may be implemented by invoking a program by the processing element, and functions of some units may be implemented by an integrated circuit.

As described above, the processing element herein may be a general-purpose processor, for example, a CPU, or may be one or more integrated circuits configured to implement the foregoing methods, for example, one or more ASICs, one or more microprocessors DSPs, or one or more FPGAs, or a combination of at least two types of the integrated circuits.

The storage element may be one memory, or may be a general term of a plurality of storage elements.

For example, an embodiment of this application further provides a chip system. The chip system may be used in the foregoing network elements (for example, the SSCF network element, the second network element, the first network element, the UPF network element, or the DCP network element). The chip system includes one or more interface circuits and one or more processors. The interface circuit and the processor are interconnected through a line. The processor receives computer instructions from a memory of an electronic device through the interface circuit, and executes the computer instructions, to implement the corresponding method performed by each network element (for example, the SSCF network element, the second network element, the first network element, the UPF network element, or the DCP network element) in the foregoing method embodiments. The electronic device may be a communication device on which each network element is carried or deployed, a device in the communication device on which each network element is carried or deployed, or another device that communicates with the communication device on which each network element is carried or deployed.

The foregoing descriptions of the implementations allow a person skilled in the art to clearly understand that, for the purpose of convenient and brief description, the division into the foregoing functional modules is used as an example for description. During actual application, the foregoing functions may be allocated, based on a requirement, to different functional modules for implementation, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, the part contributing to the prior art, or all or some of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the methods in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run, the steps performed by the network elements (for example, the SSCF network element, the second network element, the first network element, the UPF network element, or the DCP network element) in the methods in the foregoing embodiments are implemented.

For example, when the computer software instructions are run in a communication device on which a specific network element (for example, the SSCF network element, the second network element, the first network element, the UPF network element, or the DCP network element) is deployed or carried, or when the computer software instructions are run in an apparatus (for example, a chip) that is built in a communication device on which a specific network element (for example, the SSCF network element, the second network element, the first network element, the UPF network element, or the DCP network element) is deployed or carried, the communication device on which the network element is deployed or carried is caused to implement the steps performed by the network element in the foregoing embodiments.

Optionally, an embodiment of this application further provides a communication apparatus. The communication apparatus may include a transceiver unit and a processing unit. The transceiver unit may be configured to send and receive information, or configured to communicate with another network element. The processing unit may be configured to process data. For example, the apparatus may implement, through the transceiver unit and the processing unit, the method performed by each of the foregoing network elements (for example, the SSCF network element, the second network element, the first network element, the UPF network element, or the DCP network element).

Optionally, an embodiment of this application further provides a computer program product. When the computer program product is executed, the method performed by each of the foregoing network elements (for example, the SSCF network element, the second network element, the first network element, the UPF network element, or the DCP network element) may be implemented.

Based on the foregoing embodiments, an embodiment of this application further provides a communication system, including one or more network elements described in the foregoing embodiments, for example, the SSCF network element, the second network element, the first network element, the UPF network element, or the DCP network element. Each network element may perform steps correspondingly performed by the network element in the methods described in the foregoing embodiments.

For example, an embodiment of this application further provides a communication device, where the communication device may be configured to implement the method performed by each network element (for example, the SSCF network element, the second network element, the first network element, the UPF network element, or the DCP network element) in the foregoing embodiments.

It should be understood that the descriptions of the technical features, the technical solutions, the beneficial effects, or similar languages in this application do not imply that all features and advantages can be implemented in any single embodiment. On the contrary, it may be understood that the descriptions of the features or beneficial effects indicate that at least one embodiment includes the specific technical features, technical solutions, or beneficial effects. Therefore, the descriptions of the technical features, technical solutions, or beneficial effects in this specification do not necessarily refer to a same embodiment. Further, the technical features, technical solutions, and beneficial effects described in embodiments may be combined in any appropriate manner. A person skilled in the art may understand that an embodiment may be implemented without one or more specific technical features, technical solutions, or beneficial effects in a specific embodiment. In other embodiments, additional technical features and beneficial effects may be identified in a specific embodiment that does not reflect all embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a sensing service control function network element, and the method comprises:
receiving a first request message from a first network element, wherein the first request message indicates a request for obtaining first sensing data; and
sending a first control message to a second network element, wherein the first control message indicates to send the first sensing data.

2. The method according to claim 1, wherein the first control message specifically indicates to send the first sensing data to the first network element.

3. The method according to claim 1, wherein the method further comprises:
sending a first response message to the first network element, wherein the first response message indicates a first topic, and the first topic is for subscribing to the first sensing data from a data communication proxy network element, wherein
the first topic is a publish topic of the first sensing data in the data communication proxy network element, and the first sensing data is from the second network element.

4. The method according to claim 3, wherein the first control message specifically indicates to publish the first sensing data to the data communication proxy network element based on the first topic.

5. The method according to claim 1, wherein the method further comprises:
sending a first response message to the first network element, wherein the first response message indicates a first data access address, wherein
the first data access address is provided by the second network element, and is for obtaining the first sensing data; or
the first data access address is provided by a user plane function network element, and is for obtaining the first sensing data, and the first sensing data in the user plane function network element is from the second network element.

6. The method according to claim 5, wherein the first data access address is provided by the second network element, and the first control message specifically indicates to use the first data access address as an interface for obtaining the first sensing data; or
the first data access address is provided by the user plane function network element, and the first control message specifically indicates to send the first sensing data to the user plane function network element.

7. The method according to claim 5 or 6, wherein the first data access address is provided by the user plane function network element, and the method further comprises:
sending a second control message to the user plane function network element, wherein the second control message indicates to use the first data access address as an interface for obtaining the first sensing data.

8. The method according to claim 7, wherein the method further comprises:
receiving a second control response message from the user plane function network element, wherein the second control response message indicates the first data access address.

9. The method according to claim 5 or 6, wherein the first data access address is provided by the second network element, and the method further comprises:
receiving a first control response message from the second network element, wherein the first control response message indicates the first data access address.

10. The method according to claim 1, wherein the first request message further indicates a first data push address provided by a third-party entity, and the first control message further indicates the first data push address, wherein
the first data push address is used by the second network element to send the first sensing data; or
the first data push address is used by a user plane function network element to send the first sensing data, and the first sensing data in the user plane function network element is from the second network element.

11. The method according to claim 10, wherein the first data push address is used by the second network element to send the first sensing data, and the first control message specifically indicates to send the first sensing data to the first data push address.

12. The method according to claim 10, wherein the first data push address is used by the user plane function network element to send the first sensing data, and the first control message specifically indicates to send the first sensing data to the user plane function network element.

13. The method according to claim 12, wherein the method further comprises:
sending a second control message to the user plane function network element, wherein the second control message indicates to send the first sensing data to the first data push address.

14. The method according to claim 1, wherein the method further comprises:
sending a first response message to the first network element, wherein the first response message indicates to obtain the first sensing data from an analytics data repository function network element, and the first sensing data in the analytics data repository function network element is from the second network element.

15. The method according to claim 14, wherein the first control message specifically indicates to send the first sensing data to the analytics data repository function network element.

16. The method according to any one of claims 1 to 13, wherein the first network element is a network exposure function network element or the third-party entity.

17. The method according to any one of claims 1, 14, and 15, wherein the first network element is a network function network element.

18. A communication method, wherein the method is applied to a second network element, and the method comprises:
receiving a first control message from a sensing service control function network element, wherein the first control message indicates to send first sensing data; and
sending the first sensing data.

19. The method according to claim 18, wherein the sending the first sensing data comprises:
sending the first sensing data to a first network element.

20. The method according to claim 19, wherein the first control message specifically indicates to send the first sensing data to the first network element.

21. The method according to claim 18, wherein the sending the first sensing data comprises:
sending the first sensing data to a data communication proxy network element based on a first topic.

22. The method according to claim 21, wherein the first control message specifically indicates to send the first sensing data to the data communication proxy network element based on the first topic.

23. The method according to claim 18, wherein the sending the first sensing data comprises:
using a first data access address as an interface for obtaining the first sensing data, wherein the first data access address is provided by the second network element.

24. The method according to claim 23, wherein the first control message specifically indicates to use the first data access address as the interface for obtaining the first sensing data.

25. The method according to claim 23 or 24, wherein the method further comprises:
sending a first control response message to the sensing service control function network element, wherein the first control response message indicates the first data access address.

26. The method according to claim 18, wherein the sending the first sensing data comprises:
sending the first sensing data to a user plane function network element.

27. The method according to claim 26, wherein the first control message specifically indicates to send the first sensing data to the user plane function network element.

28. The method according to claim 26 or 27, wherein the sending the first sensing data to the user plane function network element comprises:
sending the first sensing data to the user plane function network element through a general packet radio service tunneling protocol-user plane tunnel.

29. The method according to any one of claims 26 to 28, wherein the first control message further indicates a first data push address provided by a third-party entity; and
the first data push address is encapsulated in a data packet that is for the first sensing data and that is sent to the user plane function network element, and the first data push address is used by the user plane function network element to send the first sensing data.

30. The method according to claim 18, wherein the first control message further indicates a first data push address provided by a third-party entity, and the sending the first sensing data comprises:
sending the first sensing data to the first data push address.

31. The method according to claim 30, wherein the first control message specifically indicates to send the first sensing data to the first data push address.

32. The method according to claim 18, wherein the sending the first sensing data comprises:
sending the first sensing data to an analytics data repository function network element.

33. The method according to claim 32, wherein the first control message specifically indicates to send the first sensing data to the analytics data repository function network element.

34. The method according to claim 19 or 20, wherein the first network element is a network exposure function network element or a third-party entity.

35. A communication method, wherein the method is applied to a first network element, and the method comprises:
sending a first request message to a sensing service control function network element, wherein the first request message indicates a request for obtaining first sensing data; and
receiving the first sensing data from a second network element.

36. The method according to claim 35, wherein the method further comprises:
receiving a first response message from the sensing service control function network element, wherein the first response message indicates a first topic;
sending a subscription request message to a data communication proxy network element, wherein the subscription request message indicates the first topic, and is for subscribing to the first sensing data from the data communication proxy network element; and
receiving a subscription response message from the data communication proxy network element; and
the receiving the first sensing data from the second network element comprises:
receiving the first sensing data sent by the data communication proxy network element.

37. The method according to claim 35 or 36, wherein the first network element is a network exposure function network element or a third-party entity; and
when the first network element is the network exposure function network element, the method further comprises:
sending the first sensing data to a third-party entity.

38. The method according to claim 35, wherein the first network element is a third-party entity, and the method further comprises:
receiving a first response message from the sensing service control function network element, wherein the first response message indicates a first data access address, and the first data access address is provided by the second network element or a user plane function network element; and
sending a first access request based on the first data access address, wherein the first access request is for requesting to obtain the first sensing data; and
the receiving the first sensing data from the second network element comprises:
receiving a first access response message, wherein the first access response message comprises the first sensing data, and the first sensing data is from the second network element.

39. The method according to claim 35, wherein the first network element is a third-party entity, and the first request message further indicates a first data push address provided by the third-party entity, wherein
the first data push address is used by the second network element to send the first sensing data; or
the first data push address is used by a user plane function network element to send the first sensing data, and the first sensing data in the user plane function network element is from the second network element; and
the receiving the first sensing data from the second network element comprises:
receiving the first sensing data from the first data push address.

40. The method according to claim 35, wherein the first network element is a network function network element, and the method further comprises:
receiving a first response message from the sensing service control function network element, wherein the first response message indicates to obtain the first sensing data from an analytics data repository function network element; and
sending a sensing data request message to the analytics data repository function network element, wherein the sensing data request message is for requesting to obtain the first sensing data; and
the receiving the first sensing data from the second network element comprises:
receiving a sensing data response message from the analytics data repository function network element, wherein the sensing data response message comprises the first sensing data, and the first sensing data in the analytics data repository function network element is from the second network element.

41. A communication method, wherein the method is applied to a network exposure function network element, and the method comprises:
sending a first request message to a sensing service control function network element, wherein the first request message indicates a request for obtaining first sensing data;
receiving a first response message from the sensing service control function network element, wherein the first response message indicates a first data access address, and the first data access address is provided by a second network element or a user plane function network element, and is for obtaining the first sensing data; and
sending the first data access address to a third-party entity.

42. A communication method, wherein the method is applied to a network exposure function network element, and the method comprises:
sending a first request message to a sensing service control function network element, wherein the first request message indicates a request for obtaining first sensing data, and indicates a first data push address provided by a third-party entity, wherein
the first data push address is used by a second network element to send the first sensing data; or
the first data push address is used by a user plane function network element to send the first sensing data, and the first sensing data in the user plane function network element is from the second network element.

43. A communication method, wherein the method is applied to a user plane function network element, and the method comprises:
receiving first sensing data from a second network element; and
using a first data access address as an interface for obtaining the first sensing data, wherein the first data access address is provided by the user plane function network element; or
sending the first sensing data to a first data push address provided by a third-party entity.

44. The method according to claim 43, wherein the receiving the first sensing data from the second network element comprises:
receiving the first sensing data from the second network element through a general packet radio service tunneling protocol-user plane tunnel.

45. The method according to claim 43 or 44, wherein the first data push address is encapsulated in a received data packet for the first sensing data.

46. The method according to claim 43 or 44, wherein the method further comprises:
receiving a second control message from a sensing service control function network element, wherein the second control message indicates to use the first data access address as the interface for obtaining the first sensing data.

47. The method according to claim 46, wherein the method further comprises:
sending a second control response message to the sensing service control function network element, wherein the second control response message indicates the first data access address.

48. The method according to claim 43 or 44, wherein the method further comprises:
receiving a second control message from a sensing service control function network element, wherein the second control message indicates to send the first sensing data to the first data push address provided by the third-party entity.

49. A communication method, wherein the method is applied to a data communication proxy network element, and the method comprises:
receiving a subscription request message from a first network element, wherein the subscription request message indicates a first topic, and is for subscribing to first sensing data from the data communication proxy network element;
sending a subscription response message to the first network element;
receiving the first sensing data from a second network element, wherein the first sensing data is published based on the first topic; and
sending the first sensing data to the first network element.

50. A communication method, wherein the method is applied to an analytics data repository function network element, and the method comprises:
receiving first sensing data from a second network element;
receiving a sensing data request message from a first network element, wherein the sensing data request message is for requesting to obtain the first sensing data; and
sending a sensing data response message to the first network element, wherein the sensing data response message comprises the first sensing data.

51. The method according to any one of claims 1 to 50, wherein the second network element is an access network element or a sensing data processing function network element.

52. A communication apparatus, wherein the communication apparatus comprises a module configured to perform the method according to any one of claims 1 to 51.

53. A communication apparatus, wherein the apparatus comprises a processor, configured to perform the method according to any one of claims 1 to 51.

54. A computer-readable storage medium, wherein the computer-readable storage medium comprises instructions; and when the instructions are run, the method according to any one of claims 1 to 51 is implemented.

55. A computer program product, wherein when the computer program product is executed, the method according to any one of claims 1 to 51 is implemented.

56. A chip system, wherein the chip system comprises one or more interface circuits and one or more processors;
the interface circuit and the processor are interconnected through a line; and
the processor receives computer instructions from a memory of an electronic device through the interface circuit, and executes the computer instructions, to implement the method according to any one of claims 1 to 51.
